(19) Europäisches Patentamt
European Patent Office
Office européen des brevets

(11) EP 3 179 654 A1

(12) **EUROPEAN PATENT APPLICATION**
published in accordance with Art. 153(4) EPC

(43) Date of publication:
**14.06.2017 Bulletin 2017/24**

(21) Application number: **15837069.2**

(22) Date of filing: **26.06.2015**

(51) Int Cl.:
***H04L 1/00*** *(2006.01)*

(86) International application number:
**PCT/CN2015/082471**

(87) International publication number:
**WO 2016/029736 (03.03.2016 Gazette 2016/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **26.08.2014 CN 201410425845**

(71) Applicant: **Huawei Technologies Co., Ltd.
Longgang District
Shenzhen, Guangdong 518129 (CN)**

(72) Inventors:
• **ZHANG, Dandan
Shenzhen
Guangdong 518129 (CN)**
• **QUAN, Wei
Shenzhen
Guangdong 518129 (CN)**
• **ZHANG, Jian
Shenzhen
Guangdong 518129 (CN)**
• **LI, Bingzhao
Shenzhen
Guangdong 518129 (CN)**

(74) Representative: **Epping - Hermann - Fischer
Patentanwaltsgesellschaft mbH
Schloßschmidstraße 5
80639 München (DE)**

(54) **DATA TRANSMISSION METHOD, USER EQUIPMENT AND BASE STATION**

(57) Embodiments of the present invention disclose a data transmission method, user equipment, and a base station, so as to resolve a conflict problem in a data transmission process with coexistence of different processing delay scenarios. The method in the embodiments of the present invention includes: receiving, by user equipment, a control message sent by a base station, where the control message is used to determine an RTT length corresponding to data transmitted between the user equipment and the base station; determining, by the user equipment according to the control message, the round-trip time RTT length corresponding to the data transmitted between the user equipment and the base station; and performing, by the user equipment, transmission of the data with the base station according to the RTT length.

FIG. 1

**Description**

This application claims priority to Chinese Patent Application No. 201410425845.5, filed with the Chinese Patent Office on August 26, 2014 and entitled "DATA TRANSMISSION METHOD, USER EQUIPMENT, AND BASE STATION", which is incorporated herein by reference in its entirety.

**TECHNICAL FIELD**

The present invention relates to the communications field, and in particular, to a data transmission method, user equipment, and a base station.

**BACKGROUND**

In a future 5G (5th generation communications) technology, with continuous expansion of an air interface technology and application, delay reduction becomes a key performance indicator. For example, it is required that an end-to-end delay of real-time remote computing for mobile terminals (real-time remote monitoring for a mobile terminal) is less than 10 ms, and a delay of traffic efficiency and safety (traffic efficiency and safety) is 5 ms. However, in current Long Term Evolution (LTE, Long Term Evolution), duration of a transmission time interval (TTI, transmission time interval) is 1 ms, and duration of a round-trip time (RTT, Round-Trip Time) is 8 ms, that is, a delay of 8 ms occurs each time of retransmission. A required time for uplink transmission is shown in the following table:

**Table 1 Uplink delay**

| Process | Delay (ms) |
|---|---|
| The average time of waiting for available SR (scheduling request) resource (Required average time of waiting for an available scheduling request resource) | 2.5 (5 ms SR period) |
| SR transmission (Scheduling request transmission) | 1 |
| eNB decodes SR and generates the grant (An eNodeB decodes a scheduling request and generates a grant) | 3 |
| Transmission of UL grant (Transmission of an uplink grant) | 1 |
| UE (User Equipment) processing delay (decoding grant and L1 encoding UL data) (User equipment processing delay (grant decoding, and uplink data encoding at an L1 layer (that is, a physical layer))) | 3 |
| Transmission of UL data (Transmission of uplink data) | 1 |
| Total delay from having a packet to transmit to finishing the uplink transmission (Total delay of uplink data packet transmission) | 11.5 |

For downlink transmission, a required delay is similar to that in uplink transmission. It may be learned from the foregoing table that, a transmission delay mainly includes a TTI and a processing time, and therefore if a delay needs to be reduced, TTI or RTT shortening is a key technology.

With upgrade and improvement of hardware devices on a network side and a terminal side, a processing delay of transmitting data between a network and a terminal is reduced, so that an RTT is also reduced.

A new RTT or TTI of a shorter length is added. However, in the prior art, there is no communications mechanism for distinguishing two types of RTT lengths or TTI lengths, and therefore a conflict easily occurs.

**SUMMARY**

Embodiments of the present invention provide a data transmission method, user equipment, and a base station, so as to resolve a conflict problem in a data transmission process with coexistence of different processing delay scenarios.

A first aspect of the embodiments of the present invention provides user equipment, including:

a receiving unit, configured to receive a control message sent by a base station, where the control message is used to determine an RTT length corresponding to data transmitted between the user equipment and the base station; a determining unit, configured to determine, according to the control message, the round-trip time RTT length corresponding to the data transmitted between the user equipment and the base station; and

a transmission unit, configured to perform transmission of the data with the base station according to the RTT length.

In a first possible implementation manner of the first aspect, the receiving unit is specifically configured to:

receive a first control message sent by the base station, where the first control message is used to indicate the corresponding RTT length for transmitting the data; and
the determining unit is specifically configured to:

determine, according to the first control message, the corresponding RTT length for transmitting the data.

In a second possible implementation manner of the first aspect, the receiving unit is specifically configured to:

receive a second control message sent by the base station, where the second control message is used to notify an RTT length corresponding to an RTT identifier; and
receive a third control message sent by the base station, where the third control message includes the RTT identifier, and the RTT identifier is used to indicate the corresponding RTT length for transmitting the data; and
the determining unit is specifically configured to:

determine, according to the RTT identifier, the corresponding RTT length for transmitting the data.

In a third possible implementation manner of the first aspect, the receiving unit is specifically configured to:

receive a fourth control message sent by the base station, where the fourth control message is used to notify an RTT length corresponding to an RNTI scrambling manner; and
receive a fifth control message sent by the base station, where an RNTI scrambling manner for the fifth control message is corresponding to the RTT length; and
the determining unit is specifically configured to:

perform RNTI descrambling on the fifth control message, and determine, according to a manner of performing RNTI descrambling on the fourth control message, the corresponding RTT length for transmitting the data.

In a fourth possible implementation manner of the first aspect, the receiving unit is specifically configured to:

receive a sixth control message sent by the base station, where the sixth control message is used to notify an RTT length corresponding to a type of a control channel; and
receive a seventh control message sent by the base station by using a control channel, where there are at least two types of control channels, and different types of control channels are corresponding to different RTT lengths; and
the determining unit is specifically configured to:

determine, according to a type of the control channel for receiving the seventh control message, the corresponding RTT length for transmitting the data.

With reference to any one of the first aspect, or the first to the fourth possible implementation manners of the first aspect, in a fifth possible implementation manner of the first aspect, the control message is sent by the base station by using higher layer signaling or physical layer signaling.
With reference to any one of the first aspect, or the first to the fourth possible implementation manners of the first aspect, in a sixth possible implementation manner of the first aspect, the control message is further used to instruct to use types that are of data needing to be transmitted and are separately corresponding to RTT lengths.
With reference to any one of the first aspect, or the first to the fourth possible implementation manners of the first aspect, in a seventh possible implementation manner of the first aspect, the user equipment further includes:

a resource determining unit, configured to determine, according to the RTT length, a resource for performing transmission of the data with the base station, where the user equipment and the base station transmit, to each other by using different resources, data corresponding to different RTT lengths; and

the transmission unit is specifically configured to:

perform, by the user equipment, transmission of the data with the base station by using the resource.

With reference to the seventh possible implementation manner of the first aspect, in an eighth possible implementation manner of the first aspect, the resource determining unit is specifically configured to:

if transmission of the data is transmission of feedback information, add, according to the RTT length indicated by the RTT identifier, an offset corresponding to the RTT length when computing a resource used for transmitting the feedback information.

With reference to the eighth possible implementation manner of the first aspect, in a ninth possible implementation manner of the first aspect, the offset is notified by the base station by using higher layer signaling, or is set in a physical layer signaling message.

With reference to the eighth possible implementation manner of the first aspect, in a tenth possible implementation manner of the first aspect, the resource determining unit is specifically configured to: if transmission of the feedback information is an uplink feedback of downlink data, determine, by the user equipment, that a frequency domain resource for the feedback meets the following formulas, where $n_{\mathrm{PUCCH}}^{(1,\tilde{p}_0)}$ is a frequency domain resource location corresponding to a port 0, and $n_{\mathrm{PUCCH}}^{(1,\tilde{p}_1)}$ is a frequency domain resource location corresponding to a port 1; and

when a PDCCH is used for transmission, formula 1 and formula 2 are met:

$$\text{formula 1:} \quad n_{\mathrm{PUCCH}}^{(1,\tilde{p}_0)} = n_{\mathrm{CCE}} + N_{\mathrm{PUCCH}}^{(1)} + \mathit{offset};$$

and

$$\text{formula 2:} \quad n_{\mathrm{PUCCH}}^{(1,\tilde{p}_1)} = n_{\mathrm{CCE}} + 1 + N_{\mathrm{PUCCH}}^{(1)} + \mathit{offset};$$

where

$n_{\mathrm{CCE}}$ is a lowest, highest, or specific control channel element CCE location of a physical downlink control channel PDCCH occupied by a scheduling command that is of the downlink data and is for scheduling the downlink data, $N_{\mathrm{PUCCH}}^{(1)}$ is a frequency domain start location of a physical uplink control channel PUCCH, and *offset* is the offset and is an integer; or

when an EPDCCH is used and EPDCCH transmission is distributed transmission, formula 3 and formula 4 are met:

$$\text{formula 3:} \quad n_{\mathrm{PUCCH}}^{(1,\tilde{p}_0)} = n_{\mathrm{ECCE},q} + \Delta_{ARO} + N_{\mathrm{PUCCH},q}^{(e1)} + \mathit{offset};$$

and

$$\text{formula 4:} \quad n_{\mathrm{PUCCH}}^{(1,\tilde{p}_1)} = n_{\mathrm{ECCE},q} + 1 + \Delta_{ARO} + N_{\mathrm{PUCCH},q}^{(e1)} + \mathit{offset};$$

or

when an EPDCCH is used and EPDCCH transmission is centralized transmission, formula 5 and formula 6 are met:

$$\text{formula 5:} \quad n_{\mathrm{PUCCH}}^{(1,\tilde{p}_0)} = \left\lfloor \frac{n_{\mathrm{ECCE},q}}{N_{RB}^{ECCE,q}} \right\rfloor \cdot N_{RB}^{ECCE,q} + n' + \Delta_{ARO} + N_{\mathrm{PUCCH},q}^{(e1)} + \mathit{offset};$$

and

$$n_{\text{PUCCH}}^{(1,\tilde{p}_1)} = \left\lfloor \frac{n_{\text{ECCE,q}}}{N_{RB}^{ECCE,q}} \right\rfloor \cdot N_{RB}^{ECCE,q} + 1 + n' + \Delta_{ARO} + N_{\text{PUCCH,q}}^{(e1)} + \textit{offset}$$

formula 6:

;

where

$n_{\text{ECCE,q}}$ a lowest, highest, or specific control channel element CCE location of an EPDCCH-PRB-set q used by an enhanced physical downlink control channel EPDCCH occupied by a scheduling command that is of the downlink data and is for scheduling the downlink data, $N_{\text{PUCCH,q}}^{(e1)}$ is a parameter configured by using higher layer signaling, $\Delta ARQ$ is a parameter notified by using physical layer control signaling, $N_{RB}^{ECCE,q}$ is a quantity of CCEs of each PRB in the EPDCCH-PRB-set q, $n'$ is determined by an antenna port, and *offset* is the offset and is an integer.

With reference to the eighth possible implementation manner of the first aspect, in an eleventh possible implementation manner of the first aspect, the resource determining unit is specifically configured to: if transmission of the feedback information is a downlink feedback of uplink data, determine, by the user equipment, that a resource $(n_{PHICH}^{group}, n_{PHICH}^{seq})$ for the feedback meets formula 7 and formula 8, where $n_{PHICH}^{group}$ is a group number of a physical hybrid automatic repeat request indicator channel PHICH, and $n_{PHICH}^{seq}$ is an orthogonal sequence number in a group corresponding to the group number;

$$\text{formula 7 is} \quad n_{PHICH}^{group} = (I_{PRB\_RA} + n_{DMRS}) \bmod N_{PHICH}^{group} + I_{PHICH} N_{PHICH}^{group} + N_{group1} ;$$

and

$$\text{formula 8 is} \quad n_{PHICH}^{seq} = (\lfloor I_{PRB\_RA} / N_{PHICH}^{group} \rfloor + n_{DMRS}) \bmod 2 N_{SF}^{PHICH} ;$$

where

$n_{DMRS}$ is cyclic shift mapping of a demodulation reference signal DMRS domain indicated by using uplink DCI on a latest PDCCH;

$N_{SF}^{PHICH}$ is a spreading factor of the PHICH;

$I_{PRB-RA}$ indicates that the first code word is a lowest PRB index of a PUSCH indicated by the uplink DCI, and that the second code word is a lowest PRB index+1 of the PUSCH indicated by the uplink DCI;

$N_{PHICH}^{group}$ is a group amount of the PHICH; and

$N_{group1}$ is an offset.

A second aspect of the embodiments of the present invention provides user equipment, including:

a message receiving unit, configured to receive a control message sent by the base station, where the control message is used to determine an RTT length corresponding to data transmitted between the user equipment and the base station;

a length determining unit, configured to determine, according to the control message, the TTI length corresponding to the data transmitted between the user equipment and the base station; and

a data transmission unit, configured to perform transmission of the data with the base station according to the TTI length.

In a first possible implementation manner of the second aspect, the message receiving unit is specifically configured to:

receive a first control message sent by the base station, where the first control message is used to indicate the corresponding TTI length for transmitting the data; and

the length determining unit is specifically configured to:

determine, according to the first control message, the corresponding TTI length for transmitting the data.

In a second possible implementation manner of the second aspect,
the message receiving unit is specifically configured to:

receive a second control message sent by the base station, where the second control message is used to notify a TTI length corresponding to a transmission time interval TTI identifier; and
receive a third control message sent by the base station, where the third control message is downlink control information that includes the TTI identifier, and the TTI identifier is used to indicate the corresponding TTI length for transmitting the data; and
the length determining unit is specifically configured to:

determine, according to the TTI identifier, the corresponding TTI length for transmitting the data.

In a third possible implementation manner of the second aspect,
the message receiving unit is specifically configured to:

receive a second control message sent by the base station by using higher layer signaling, where the fourth control message is used to notify a TTI length corresponding to an RNTI scrambling manner; and
receive a fifth control message sent by the base station by using physical layer signaling, where an RNTI scrambling manner for the fifth control message is corresponding to the TTI length; and
the length determining unit is specifically configured to:

perform RNTI descrambling on the fifth control message, and determine, according to a manner of performing RNTI descrambling on the fourth control message, the corresponding TTI length for transmitting the data.

In a fourth possible implementation manner of the second aspect,
the message receiving unit is specifically configured to:

receive a sixth control message sent by the base station, where the sixth control message is used to notify a TTI length corresponding to a type of a control channel; and
receive a seventh control message sent by the base station by using a control channel, where there are at least two types of control channels, and different types of control channels are corresponding to different TTI lengths; and
the length determining unit is specifically configured to:

determine, according to a type of the control channel for receiving the seventh control message, the corresponding TTI length for transmitting the data.

With reference to any one of the second aspect, or the first to the fourth possible implementation manners of the second aspect, in a fifth possible implementation manner of the second aspect, the control message is sent by the base station by using higher layer signaling or physical layer signaling.
With reference to any one of the second aspect, or the first to the fourth possible implementation manners of the second aspect, in a sixth possible implementation manner of the second aspect, the control message is further used to instruct to use a type that is of data needing to be transmitted and is corresponding to a TTI length.
With reference to any one of the second aspect, or the first to the fourth possible implementation manners of the second aspect, in a seventh possible implementation manner of the second aspect, the message receiving unit is further configured to:

receive, by the user equipment, a TTI configuration parameter sent by the base station, where the TTI configuration parameter includes any one or a combination of at least two of a DCI scrambling manner, indication information of a TTI length type, a sounding reference signal SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, transport block size TBS table configuration information for using a TTI, resource scheduling granularity information for using a TTI, or EPDCCH resource location information for using a TTI.

**EP 3 179 654 A1**

With reference to any one of the second aspect, or the first to the fourth possible implementation manners of the second aspect, in an eighth possible implementation manner of the second aspect, the user equipment further includes:

a rule determining unit, configured to determine a sending and receiving rule of the data according to the TTI length, where different TTI lengths are corresponding to different sending and receiving rules, and the sending and receiving rule includes resources corresponding to service data and feedback information during sending or receiving, and a data transmission time sequence relationship; and
the data transmission unit is further configured to:

send and receive, by the user equipment, the data according to the determined sending and receiving rule.

With reference to the eighth possible implementation manner of the second aspect, in a ninth possible implementation manner of the second aspect, the user equipment further includes:

a buffer emptying unit, configured to: determine whether a TTI length corresponding to data transmitted by the user equipment last time changes, and if yes, empty an HARQ buffer, and then perform the step of sending and receiving the data according to the determined sending and receiving rule.

With reference to the eighth possible implementation manner of the second aspect, in a tenth possible implementation manner of the second aspect, the user equipment further includes:

a feedback resource determining unit, configured to determine a feedback resource for transmitting the feedback information, where feedback information corresponding to different TTI lengths uses different feedback resources, the feedback resource exists in each TTI length corresponding to the feedback resource, and the feedback resource includes a PHICH channel resource, a PRB number for transmitting data, and a frame number or a subframe number for transmitting data.

With reference to the eighth possible implementation manner of the second aspect, in an eleventh possible implementation manner of the second aspect, the user equipment further includes:

a first encoding unit, configured to feed back a channel quality indicator CQI to the base station by using a feedback resource corresponding to the determined TTI length, where separate encoding is performed on the CQI in each TTI, or joint encoding is performed on the CQI in a TTI included in each subframe.

With reference to the eighth possible implementation manner of the second aspect, in a twelfth possible implementation manner of the second aspect, the user equipment further includes:

a second encoding unit, configured to send uplink feedback information of downlink data to the base station by using a feedback resource corresponding to the determined TTI length, where separate encoding is performed on the uplink feedback information in each TTI, or joint encoding is performed on the uplink feedback information in a TTI included in each subframe.

A third aspect of the embodiments of the present invention provides user equipment, including:

a broadcast receiving unit, configured to receive a broadcast message sent by a base station, where the broadcast message includes a random access channel RACH resource and a preamble preamble that are corresponding to a second TTI, the second TTI is a type of TTI length, there is a first TTI and the second TTI, and the first TTI is greater than the second TTI; and
an access unit, configured to: if the user equipment supports the second TTI, perform random access by using the RACH resource and the preamble that are corresponding to the second TTI.

A fourth aspect of the embodiments of the present invention provides a base station, including:

a sending unit, configured to send a control message to user equipment, where the control message is used to determine an RTT length corresponding to data transmitted between the user equipment and the base station, so that the user equipment performs transmission of the data with the base station according to the RTT length.

With reference to the first possible implementation manner of the fourth aspect, the control message includes a first control message, and the first control message is used to indicate the corresponding RTT length for transmitting the data.

In a second possible implementation manner of the fourth aspect, the control message includes:

a second control message and a third control message, where
the second control message is used to notify an RTT length corresponding to a round-trip time RTT identifier, the third control message includes the RTT identifier, and the RTT identifier is used to indicate the corresponding RTT length for transmitting the data.

In a third possible implementation manner of the fourth aspect, the control message includes:

a fourth control message and a fifth control message, where
the fourth control message is used to notify an RTT length corresponding to an RNTI scrambling manner, and an RNTI scrambling manner for the fifth control message is corresponding to the RTT length.

In a fourth possible implementation manner of the fourth aspect, the control message includes:

a sixth control message and a seventh control message, where
the sixth control message is used to notify an RTT length corresponding to a type of a control channel, the seventh control message is a control message sent by using different control channels, there are at least two types of control channels, and different types of control channels are corresponding to different RTT lengths.

With reference to any one of the fourth aspect, or the first to the fourth possible implementation manners of the fourth aspect, in a fifth possible implementation manner of the fourth aspect, the control message is sent by the base station by using higher layer signaling or physical layer signaling.

With reference to any one of the fourth aspect, or the first to the fourth possible implementation manners of the fourth aspect, in a sixth possible implementation manner of the fourth aspect, the control message is further used to instruct to use types that are of data needing to be transmitted and are separately corresponding to RTT lengths.

A fifth aspect of the embodiments of the present invention provides a base station, including:

a message sending unit, configured to send a control message to user equipment, where the control message is used to determine a TTI length corresponding to data transmitted between the user equipment and the base station, so that the user equipment performs transmission of the data with the base station according to the TTI length.

In a first possible implementation manner of the fifth aspect, the control message includes a first control message, and the first control message is used to indicate the corresponding TTI length for transmitting the data.

In a second possible implementation manner of the fifth aspect, the control message includes:

a second control message and a third control message, where
the second control message is used to notify a TTI length corresponding to a TTI identifier, the third control message includes the TTI identifier, and the TTI identifier is used to indicate the corresponding TTI length for transmitting the data.

In a third possible implementation manner of the fifth aspect, the control message includes:

a fourth control message and a fifth control message, where
the fourth control message is used to notify a TTI length corresponding to an RNTI scrambling manner, and an RNTI scrambling manner for the fifth control message is corresponding to the TTI length.

In a fourth possible implementation manner of the fifth aspect, the control message includes:

a sixth control message and a seventh control message, where
the sixth control message is used to notify an RTT length corresponding to a type of a control channel, the seventh control message is a control message sent by using different control channels, there are at least two types of control channels, and different types of control channels are corresponding to different TTI lengths.

With reference to any one of the fifth aspect, or the first to the fourth possible implementation manners of the fifth aspect, in a fifth possible implementation manner of the fifth aspect, the control message is sent by the base station by using higher layer signaling or physical layer signaling.

With reference to any one of the fifth aspect, or the first to the fourth possible implementation manners of the fifth aspect, in a sixth possible implementation manner of the fifth aspect, the control message is further used to instruct to use types that are of data needing to be transmitted and are separately corresponding to different TTI lengths.

A sixth aspect of the embodiments of the present invention provides a base station, including:

a broadcast message sending unit, configured to send a broadcast message to user equipment, so that the user equipment performs random access according to a TTI length in the broadcast message and a TTI capability of the user equipment and by using a corresponding RACH resource and a corresponding preamble, where the broadcast message includes a random access channel RACH resource and a preamble that are corresponding to a second TTI, the second TTI is a type of TTI length, there is a first TTI and the second TTI, and the first TTI is greater than the second TTI.

A seventh aspect of the embodiments of the present invention provides a data transmission method, including:

receiving, by user equipment, a control message sent by a base station, where the control message is used to determine an RTT length corresponding to data transmitted between the user equipment and the base station;
determining, by the user equipment according to the control message, the round-trip time RTT length corresponding to the data transmitted between the user equipment and the base station; and
performing, by the user equipment, transmission of the data with the base station according to the RTT length.

In a first possible implementation manner of the seventh aspect, the receiving, by user equipment, a control message sent by a base station includes:

receiving, by the user equipment, a first control message sent by the base station, where the first control message is used to indicate the corresponding RTT length for transmitting the data; and
the determining, by the user equipment according to the control message, the RTT length corresponding to the data transmitted between the user equipment and the base station includes:

determining, by the user equipment according to the first control message, the corresponding RTT length for transmitting the data.

In a second possible implementation manner of the seventh aspect, the receiving, by user equipment, a control message sent by a base station includes:

receiving, by the user equipment, a second control message sent by the base station, where the second control message is used to notify an RTT length corresponding to an RTT identifier; and
receiving, by the user equipment, a third control message sent by the base station, where the third control message includes the RTT identifier, and the RTT identifier is used to indicate the corresponding RTT length for transmitting the data; and
the determining, by the user equipment according to the control message, the RTT length corresponding to the data transmitted between the user equipment and the base station includes:

determining, by the user equipment according to the RTT identifier, the corresponding RTT length for transmitting the data.

In a third possible implementation manner of the seventh aspect, the receiving, by user equipment, a control message sent by a base station includes:

receiving, by the user equipment, a fourth control message sent by the base station, where the fourth control message is used to notify an RTT length corresponding to an RNTI scrambling manner; and
receiving, by the user equipment, a fifth control message sent by the base station, where an RNTI scrambling manner for the fifth control message is corresponding to the RTT length; and
the determining, by the user equipment according to the control message, the RTT length corresponding to the data transmitted between the user equipment and the base station includes:

performing, by the user equipment, RNTI descrambling on the fifth control message, and determining, according to a manner of performing RNTI descrambling on the fourth control message, the corresponding RTT length for transmitting the data.

In a fourth possible implementation manner of the seventh aspect, the receiving, by user equipment, a control message sent by a base station includes:

receiving, by the user equipment, a sixth control message sent by the base station, where the sixth control message is used to notify an RTT length corresponding to a type of a control channel; and
receiving, by the user equipment, a seventh control message sent by the base station by using a control channel, where there are at least two types of control channels, and different types of control channels are corresponding to different RTT lengths; and
the determining, by the user equipment according to the control message, the RTT length corresponding to the data transmitted between the user equipment and the base station includes:

determining, by the user equipment according to a type of the control channel for receiving the seventh control message, the corresponding RTT length for transmitting the data.

With reference to any one of the seventh aspect, or the first to the fourth possible implementation manners of the seventh aspect, in a fifth possible implementation manner of the seventh aspect, the control message is sent by the base station by using higher layer signaling or physical layer signaling.
With reference to any one of the seventh aspect, or the first to the fourth possible implementation manners of the seventh aspect, in a sixth possible implementation manner of the seventh aspect, the control message is further used to instruct to use types that are of data needing to be transmitted and are separately corresponding to RTT lengths.
With reference to any one of the seventh aspect, or the first to the fourth possible implementation manners of the seventh aspect, in a seventh possible implementation manner of the seventh aspect, before the performing, by the user equipment, transmission of the data with the base station according to the RTT length, the method includes:

determining, by the user equipment according to the RTT length, a resource for performing transmission of the data with the base station, where the user equipment and the base station transmit, to each other by using different resources, data corresponding to different RTT lengths; and
the performing, by the user equipment, transmission of the data with the base station according to the RTT length includes:

performing, by the user equipment, transmission of the data with the base station by using the resource.

With reference to the seventh possible implementation manner of the seventh aspect, in an eighth possible implementation manner of the seventh aspect, if transmission of the data is transmission of feedback information, the determining, by the user equipment according to the RTT length, a resource for performing transmission of the data with the base station includes:

adding, according to the RTT length indicated by the RTT identifier, an offset corresponding to the RTT length when computing a resource used for transmitting the feedback information.

With reference to the eighth possible implementation manner of the seventh aspect, in a ninth possible implementation manner of the seventh aspect, the offset is notified by the base station by using higher layer signaling, or is set in a physical layer signaling message.
With reference to the eighth possible implementation manner of the seventh aspect, in a tenth possible implementation manner of the seventh aspect, if transmission of the feedback information is an uplink feedback of downlink data, the adding, according to the RTT length indicated by the RTT identifier, an offset corresponding to the RTT length when computing a resource used for transmitting the feedback information is specifically:

determining, by the user equipment, that a frequency domain resource for the feedback meets the following formulas, where $n_{\mathrm{PUCCH}}^{(1,\tilde{p}_0)}$ is a frequency domain resource location corresponding to a port 0, and $n_{\mathrm{PUCCH}}^{(1,\tilde{p}_1)}$ is a frequency domain resource location corresponding to a port 1; and
when a PDCCH is used for transmission, formula 1 and formula 2 are met:

$$\text{formula 1:} \quad n_{\text{PUCCH}}^{(1,\tilde{p}_0)} = n_{\text{CCE}} + N_{\text{PUCCH}}^{(1)} + \mathit{offset};$$

and

$$\text{formula 2:} \quad n_{\text{PUCCH}}^{(1,\tilde{p}_1)} = n_{\text{CCE}} + 1 + N_{\text{PUCCH}}^{(1)} + \mathit{offset};$$

where
$n_{\text{CCE}}$ is a lowest, highest, or specific control channel element CCE location of a physical downlink control channel PDCCH occupied by a scheduling command that is of the downlink data and is for scheduling the downlink data, $N_{\text{PUCCH}}^{(1)}$ is a frequency domain start location of a physical uplink control channel PUCCH, and *offset* is the offset and is an integer; or
when an EPDCCH is used and EPDCCH transmission is distributed transmission, formula 3 and formula 4 are met:

$$\text{formula 3:} \quad n_{\text{PUCCH}}^{(1,\tilde{p}_0)} = n_{\text{ECCE,q}} + \Delta_{ARO} + N_{\text{PUCCH,q}}^{(\text{e1})} + \mathit{offset};$$

and

$$\text{formula 4:} \quad n_{\text{PUCCH}}^{(1,\tilde{p}_1)} = n_{\text{ECCE,q}} + 1 + \Delta_{ARO} + N_{\text{PUCCH,q}}^{(\text{e1})} + \mathit{offset};$$

or
when an EPDCCH is used and EPDCCH transmission is centralized transmission, formula 5 and formula 6 are met:

$$\text{formula 5:} \quad n_{\text{PUCCH}}^{(1,\tilde{p}_0)} = \left\lfloor \frac{n_{\text{ECCE,q}}}{N_{RB}^{ECCE,q}} \right\rfloor \cdot N_{RB}^{ECCE,q} + n' + \Delta_{ARO} + N_{\text{PUCCH,q}}^{(\text{e1})} + \mathit{offset};$$

and

$$\text{formula 6:} \quad n_{\text{PUCCH}}^{(1,\tilde{p}_1)} = \left\lfloor \frac{n_{\text{ECCE,q}}}{N_{RB}^{ECCE,q}} \right\rfloor \cdot N_{RB}^{ECCE,q} + 1 + n' + \Delta_{ARO} + N_{\text{PUCCH,q}}^{(\text{e1})} + \mathit{offset};$$

where
$n_{\text{ECCE,q}}$ is a lowest, highest, or specific control channel element CCE location of an EPDCCH-PRB-set q used by an enhanced physical downlink control channel EPDCCH occupied by a scheduling command that is of the downlink data and is for scheduling the downlink data, $N_{\text{PUCCH,q}}^{(\text{e1})}$ is a parameter configured by using higher layer signaling, $\Delta ARQ$ is a parameter notified by using physical layer control signaling, $N_{RB}^{ECCE,q}$ is a quantity of CCEs of each PRB in the EPDCCH-PRB-set q, $n'$ is determined by an antenna port, and *offset* is the offset and is an integer.

With reference to the eighth possible implementation manner of the seventh aspect, in an eleventh possible implementation manner of the seventh aspect, if transmission of the feedback information is a downlink feedback of uplink data, the adding, according to the RTT length indicated by the RTT identifier, an offset corresponding to the RTT length when computing a resource used for transmitting the feedback information is specifically:
determining, by the user equipment, that a resource $(n_{PHICH}^{group}, n_{PHICH}^{seq})$ for the feedback meets formula 7 and formula 8, where $n_{PHICH}^{group}$ is a group number of a physical hybrid automatic repeat request indicator channel PHICH, and $n_{PHICH}^{seq}$ is an orthogonal sequence number in a group corresponding to the group number;

$$\text{formula 7 is } \quad n_{PHICH}^{group} = (I_{PRB\_RA} + n_{DMRS}) \bmod N_{PHICH}^{group} + I_{PHICH} N_{PHICH}^{group} + N_{group1} \; ;$$

and

$$\text{formula 8 is } \quad n_{PHICH}^{seq} = (\lfloor I_{PRB\_RA} / N_{PHICH}^{group} \rfloor + n_{DMRS}) \bmod 2 N_{SF}^{PHICH} \; ;$$

where

$n_{DMRS}$ is cyclic shift mapping of a demodulation reference signal DMRS domain indicated by using uplink DCI on a latest PDCCH;

$N_{SF}^{PHICH}$ is a spreading factor of the PHICH;

$I_{PRB\_RA}$ indicates that the first code word is a lowest PRB index of a PUSCH indicated by the uplink DCI, and that the second code word is a lowest PRB index+1 of the PUSCH indicated by the uplink DCI;

$N_{PHICH}^{group}$ is a group amount of the PHICH; and

$N_{group1}$ is an offset.

An eighth aspect of the embodiments of the present invention provides a data transmission method, including:

receiving, by user equipment, a control message sent by the base station, where the control message is used to determine an RTT length corresponding to data transmitted between the user equipment and the base station; determining, by the user equipment according to the control message, the TTI length corresponding to the data transmitted between the user equipment and the base station; and performing, by the user equipment, transmission of the data with the base station according to the TTI length.

In a first possible implementation manner of the eighth aspect, the receiving, by user equipment, a control message sent by the base station includes:

receiving, by the user equipment, a first control message sent by the base station, where the first control message is used to indicate the corresponding TTI length for transmitting the data; and the determining, by the user equipment according to the control message, the TTI length corresponding to the data transmitted between the user equipment and the base station includes:

determining, by the user equipment according to the first control message, the corresponding TTI length for transmitting the data.

In a second possible implementation manner of the eighth aspect, the receiving, by user equipment, a control message sent by the base station includes:

receiving, by the user equipment, a second control message sent by the base station, where the second control message is used to notify a TTI length corresponding to a transmission time interval TTI identifier; and receiving, by the user equipment, a third control message sent by the base station, where the third control message is downlink control information that includes the TTI identifier, and the TTI identifier is used to indicate the corresponding TTI length for transmitting the data; and the determining, by the user equipment according to the control message, the TTI length corresponding to the data transmitted between the user equipment and the base station includes:

determining, by the user equipment according to the TTI identifier, the corresponding TTI length for transmitting the data.

In a third possible implementation manner of the eighth aspect, the receiving, by user equipment, a control message sent by the base station includes:

receiving, by the user equipment, a second control message sent by the base station by using higher layer signaling, where the fourth control message is used to notify a TTI length corresponding to an RNTI scrambling manner; and receiving, by the user equipment, a fifth control message sent by the base station by using physical layer signaling, where an RNTI scrambling manner for the fifth control message is corresponding to the TTI length; and the determining, by the user equipment according to the control message, the TTI length corresponding to the data transmitted between the user equipment and the base station includes:

performing, by the user equipment, RNTI descrambling on the fifth control message, and determining, according to a manner of performing RNTI descrambling on the fourth control message, the corresponding TTI length for transmitting the data.

In a fourth possible implementation manner of the eighth aspect, the receiving, by user equipment, a control message sent by a base station includes:

receiving, by the user equipment, a sixth control message sent by the base station, where the sixth control message is used to notify a TTI length corresponding to a type of a control channel; and receiving, by the user equipment, a seventh control message sent by the base station by using a control channel, where there are at least two types of control channels, and different types of control channels are corresponding to different TTI lengths; and the determining, by the user equipment according to the control message, the TTI length corresponding to the data transmitted between the user equipment and the base station includes:

determining, by the user equipment according to a type of the control channel for receiving the seventh control message, the corresponding TTI length for transmitting the data.

With reference to any one of the eighth aspect, or the first to the fourth possible implementation manners of the eighth aspect, in a fifth possible implementation manner of the eighth aspect, the control message is sent by the base station by using higher layer signaling or physical layer signaling.

With reference to any one of the eighth aspect, or the first to the fourth possible implementation manners of the eighth aspect, in a sixth possible implementation manner of the eighth aspect, the control message is further used to instruct to use a type that is of data needing to be transmitted and is corresponding to a TTI length.

With reference to any one of the eighth aspect, or the first to the fourth possible implementation manners of the eighth aspect, in a seventh possible implementation manner of the eighth aspect, before the determining, by the user equipment, the TTI length corresponding to the data transmitted between the user equipment and the base station, the method includes:

receiving, by the user equipment, a TTI configuration parameter sent by the base station, where the TTI configuration parameter includes any one or a combination of at least two of a DCI scrambling manner, indication information of a TTI length type, a sounding reference signal SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, transport block size TBS table configuration information for using a TTI, resource scheduling granularity information for using a TTI, or EPDCCH resource location information for using a TTI.

With reference to any one of the eighth aspect, or the first to the fourth possible implementation manners of the eighth aspect, in an eighth possible implementation manner of the eighth aspect, before the performing, by the user equipment, transmission of the data with the base station according to the TTI length, the method includes:

determining a sending and receiving rule of the data according to the TTI length, where different TTI lengths are corresponding to different sending and receiving rules, and the sending and receiving rule includes resources corresponding to service data and feedback information during sending or receiving, and a data transmission time sequence relationship; and the performing, by the user equipment, transmission of the data with the base station according to the TTI length includes:

sending and receiving, by the user equipment, the data according to the determined sending and receiving rule.

With reference to the eighth possible implementation manner of the eighth aspect, in a ninth possible implementation manner of the eighth aspect, before the sending and receiving the data according to the determined sending and receiving rule, the method includes:

determining, by the user equipment, whether a TTI length corresponding to data transmitted by the user equipment last time changes, and if yes, emptying an HARQ buffer, and then performing the step of sending and receiving the data according to the determined sending and receiving rule.

With reference to the eighth possible implementation manner of the eighth aspect, in a tenth possible implementation manner of the eighth aspect, if transmission of the data is transmission of feedback information, before the sending and receiving the data according to the determined sending and receiving rule, the method includes:

determining a feedback resource for transmitting the feedback information, where feedback information corresponding to different TTI lengths uses different feedback resources, the feedback resource exists in each TTI length corresponding to the feedback resource, and the feedback resource includes a PHICH channel resource, a PRB number for transmitting data, and a frame number or a subframe number for transmitting data.

With reference to the eighth possible implementation manner of the eighth aspect, in an eleventh possible implementation manner of the eighth aspect, after the determining a feedback resource for transmitting the feedback information, the method further includes:

feeding back, by the user equipment, a channel quality indicator CQI to the base station by using a feedback resource corresponding to the determined TTI length, where separate encoding is performed on the CQI in each TTI, or joint encoding is performed on the CQI in a TTI included in each subframe.

With reference to the eighth possible implementation manner of the eighth aspect, in a twelfth possible implementation manner of the eighth aspect, after the determining a feedback resource for transmitting the feedback information, the method further includes:

sending, by the user equipment, uplink feedback information of downlink data to the base station by using a feedback resource corresponding to the determined TTI length, where separate encoding is performed on the uplink feedback information in each TTI, or joint encoding is performed on the uplink feedback information in a TTI included in each subframe.

A ninth aspect of the embodiments of the present invention provides a data transmission method, including:

receiving, by user equipment, a broadcast message sent by a base station, where the broadcast message includes a random access channel RACH resource and a preamble preamble that are corresponding to a second TTI, the second TTI is a type of TTI length, there is a first TTI and the second TTI, and the first TTI is greater than the second TTI; and
if the user equipment supports the second TTI, performing, by the user equipment, random access by using the RACH resource and the preamble that are corresponding to the second TTI.

A tenth aspect of the embodiments of the present invention provides a data transmission method, including:

sending, by a base station, a control message to user equipment, where the control message is used to determine an RTT length corresponding to data transmitted between the user equipment and the base station, so that the user equipment performs transmission of the data with the base station according to the RTT length.

With reference to the first possible implementation manner of the tenth aspect, the control message includes a first control message, and the first control message is used to indicate the corresponding RTT length for transmitting the data.
In a second possible implementation manner of the tenth aspect, the control message includes:

a second control message and a third control message, where
the second control message is used to notify an RTT length corresponding to a round-trip time RTT identifier, the third control message includes the RTT identifier, and the RTT identifier is used to indicate the corresponding RTT length for transmitting the data.

In a third possible implementation manner of the tenth aspect, the control message includes:

a fourth control message and a fifth control message, where
the fourth control message is used to notify an RTT length corresponding to an RNTI scrambling manner, and an RNTI scrambling manner for the fifth control message is corresponding to the RTT length.

In a fourth possible implementation manner of the tenth aspect, the control message includes:

a sixth control message and a seventh control message, where
the sixth control message is used to notify an RTT length corresponding to a type of a control channel, the seventh control message is a control message sent by using different control channels, there are at least two types of control channels, and different types of control channels are corresponding to different RTT lengths.

With reference to any one of the tenth aspect, or the first to the fourth possible implementation manners of the tenth aspect, in a fifth possible implementation manner of the tenth aspect, the control message is sent by the base station by using higher layer signaling or physical layer signaling.

With reference to any one of the tenth aspect, or the first to the fourth possible implementation manners of the tenth aspect, in a sixth possible implementation manner of the tenth aspect, the control message is further used to instruct to use types that are of data needing to be transmitted and are separately corresponding to RTT lengths.

An eleventh aspect of the embodiments of the present invention provides a data transmission method, including:

sending, by a base station, a control message to user equipment, where the control message is used to determine a TTI length corresponding to data transmitted between the user equipment and the base station, so that the user equipment performs transmission of the data with the base station according to the TTI length.

With reference to the first possible implementation manner of the eleventh aspect, the control message includes a first control message, and the first control message is used to indicate the corresponding TTI length for transmitting the data.

In a second possible implementation manner of the eleventh aspect, the control message includes:

a second control message and a third control message, where
the second control message is used to notify a TTI length corresponding to a TTI identifier, the third control message includes the TTI identifier, and the TTI identifier is used to indicate the corresponding TTI length for transmitting the data.

In a third possible implementation manner of the eleventh aspect, the control message includes:

a fourth control message and a fifth control message, where
the fourth control message is used to notify a TTI length corresponding to an RNTI scrambling manner, and an RNTI scrambling manner for the fifth control message is corresponding to the TTI length.

In a fourth possible implementation manner of the eleventh aspect, the control message includes:

a sixth control message and a seventh control message, where
the sixth control message is used to notify an RTT length corresponding to a type of a control channel, the seventh control message is a control message sent by using different control channels, there are at least two types of control channels, and different types of control channels are corresponding to different TTI lengths.

With reference to any one of the eleventh aspect, or the first to the fourth possible implementation manners of the eleventh aspect, in a fifth possible implementation manner of the eleventh aspect, the control message is sent by the base station by using higher layer signaling or physical layer signaling.

With reference to any one of the eleventh aspect, or the first to the fourth possible implementation manners of the eleventh aspect, in a sixth possible implementation manner of the eleventh aspect, the control message is further used to instruct to use types that are of data needing to be transmitted and are separately corresponding to different TTI lengths.

A twelfth aspect of the embodiments of the present invention provides a data transmission method, including:

sending, by a base station, a broadcast message to user equipment, so that the user equipment performs random access according to a TTI length in the broadcast message and a TTI capability of the user equipment and by using a corresponding RACH resource and a corresponding preamble, where the broadcast message includes a random access channel RACH resource and a preamble that are corresponding to a second TTI, the second TTI is a type of TTI length, there is a first TTI and the second TTI, and the first TTI is greater than the second TTI.

It may be learned from the foregoing technical solutions that the embodiments of the present invention have the following advantages:

In the embodiments of the present invention, user equipment may receive a control message sent by a base station, so that the user equipment can determine, according to the control message, an RTT length or a TTI length for performing transmission of the data with the base station, and further perform transmission of the data with the base station in a data sending or receiving manner adapted to the corresponding RTT length or TTI length. Therefore, a conflict problem caused by different RTT lengths or different TTI lengths in a data transmission process is resolved.

**BRIEF DESCRIPTION OF DRAWINGS**

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic flowchart of a data transmission method according to an embodiment of the present invention;
FIG. 2 is another schematic flowchart of a data transmission method according to an embodiment of the present invention;
FIG. 3 is another schematic flowchart of a data transmission method according to an embodiment of the present invention;
FIG. 4 is another schematic flowchart of a data transmission method according to an embodiment of the present invention;
FIG. 5 is another schematic flowchart of a data transmission method according to an embodiment of the present invention;
FIG. 6 is a schematic diagram of a data transmission frame according to an embodiment of the present invention;
FIG. 7 is another schematic flowchart of a data transmission method according to an embodiment of the present invention;
FIG. 8 is another schematic flowchart of a data transmission method according to an embodiment of the present invention;
FIG. 9 is another schematic flowchart of a data transmission method according to an embodiment of the present invention;
FIG. 10 is another schematic flowchart of a data transmission method according to an embodiment of the present invention;
FIG. 11 is another schematic flowchart of a data transmission method according to an embodiment of the present invention;
FIG. 12 is another schematic flowchart of a data transmission method according to an embodiment of the present invention;
FIG. 13 is another schematic flowchart of a data transmission method according to an embodiment of the present invention;
FIG. 14 is another schematic flowchart of a data transmission method according to an embodiment of the present invention;
FIG. 15 is another schematic flowchart of a data transmission method according to an embodiment of the present invention;
FIG. 16 is a schematic structural diagram of user equipment according to an embodiment of the present invention;
FIG. 17 is another schematic structural diagram of user equipment according to an embodiment of the present invention;
FIG. 18 is another schematic structural diagram of user equipment according to an embodiment of the present invention; and
FIG. 19 is a schematic structural diagram of a computer device based on a data transmission method according to an embodiment of the present invention.

**DESCRIPTION OF EMBODIMENTS**

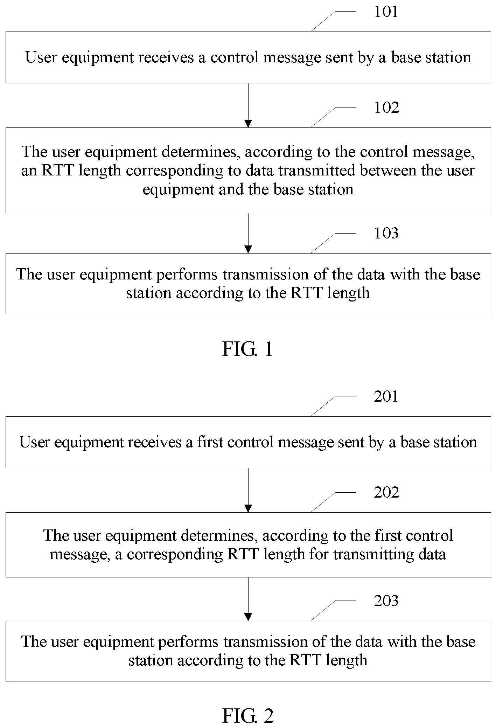

Referring to FIG. 1, an embodiment of a data transmission method in an embodiment of the present invention includes the following steps.

101. User equipment receives a control message sent by a base station.
The user equipment receives the control message sent by the base station. Specifically, the control message is used to determine an RTT length corresponding to data transmitted between the user equipment and base station, so as to perform transmission of the data with the base station.
In specific application, the control message may include a control message sent by using higher layer signaling, for example, a radio resource control (RRC, Radio Resource Control) configuration message, or may include a control message sent by using physical layer signaling, for example, a downlink control information (DCI, Downlink Control Information) message. Exemplarily, the higher layer signaling includes dedicated signaling and a broadcast message. Specifically, the RTT length may be directly indicated by the control message sent by using higher layer signaling, or a type of the RTT length is indicated by the control message sent by using higher layer signaling, and then a to-be-used RTT length of a specific type is indicated by the control message sent by using physical layer signaling.
102. The user equipment determines, according to the control message, an RTT length corresponding to data transmitted between the user equipment and the base station.
The user equipment determines, according to the control message, the RTT length corresponding to the data transmitted between the user equipment and the base station.
The RTT length may be indicated by using a specific time value, for example, 4 ms; or may be indicated by using a quantity of TTIs, for example, eight TTIs; or may be indicated by using a quantity of OFDM symbols, for example, twenty OFDM symbols. It may be understood that, specific representation and implementation of the RTT length may be determined according to an actual situation, and are not limited herein.
It may be understood that, there may be two or more types of RTT lengths. Exemplarily, the control message may indicate one type of RTT length, so that the user equipment determines which type of RTT is used to send or receive corresponding data. Optionally, the control message may indicate two or more types of RTT lengths, so that the user equipment determines sending or receiving of data to which two types of RTTs are separately corresponding. In actual application, an implementation manner of the control message may be determined according to an actual situation, and is not specifically limited herein.
103. The user equipment performs transmission of the data with the base station according to the RTT length.

The user equipment performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

In this embodiment of the present invention, user equipment may receive a control message sent by a base station, so that the user equipment can determine, according to the control message, an RTT length for performing transmission of the data with the base station, and further perform transmission of the data with the base station in a data sending or receiving manner adapted to the corresponding RTT length. Therefore, a conflict problem caused by different RTT lengths in a data transmission process is resolved.

In actual application, the user equipment may determine the RTT length in different manners. Specifically, refer to the following embodiments in FIG. 2 to FIG. 4.

A base station may directly use a first control message to indicate an RTT length. Another embodiment of a data transmission method in an embodiment of the present invention includes the following steps.

201. User equipment receives a first control message sent by the base station.
The user equipment receives the first control message sent by the base station, where the first control message is used to indicate a corresponding RTT length for transmitting the data. Specifically, the data refers to data that currently needs to be transmitted by the user equipment.
Exemplarily, the first control message may be sent by using higher layer signaling or physical layer signaling.
202. The user equipment determines, according to the first control message, a corresponding RTT length for transmitting the data.

The user equipment determines, according to the first control message, the corresponding RTT length for transmitting the data.

Further, the first control message may be further used to instruct to use types that are of data needing to be transmitted and are separately corresponding to RTT lengths. After an RTT length is configured for the first time by using the first control message, the user equipment stores a correspondence table between different data and an RTT length. When the user equipment and the base station are to transmit data to each other, the user equipment may search the correspondence table according to a type of the data for an RTT length to be used for current sending or receiving of the data. Before the base station does not update a correspondence between different data and an RTT length for another time by using higher layer signaling, the user equipment may determine the RTT length by using the correspondence table each time when performing transmission of the data with the base station.

Specifically, the type of the data may be represented by using different logical channels, and in this case, may be corresponding to a logical channel number identifier by using an RTT length; or

the type of the data may be represented by using different logical channel groups, and in this case, may be corresponding to a logical channel group identifier by using an RTT length; or

the type of the data may be represented by using different radio bearers, and in this case, may be corresponding to a radio bearer identifier by using an RTT length; or

the type of the data may be represented by using different data flows, and in this case, may be corresponding to a data flow number identifier by using an RTT length. The different data flows may be data flows with different IP addresses or with different "IP addresses and port numbers".

It may be understood that, the foregoing correspondence between a data type and an RTT length may be one-to-one, one-to-many, or many-to-one. This is not specifically limited in this embodiment of the present invention.

It may be understood that, the base station may further use another control message to independently implement a function of instructing to use types that are of data needing to be transmitted and are separately corresponding to different RTT lengths. For example, before sending the first control message, the base station uses the another control message to instruct to use the types that are of the data needing to be transmitted and are separately corresponding to the different RTT lengths. A specific implementation manner may be determined according to an actual situation, and is not limited herein.

Optionally, when multiple carriers are configured for the user equipment, different carriers may use different RTT lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

203. The user equipment performs transmission of the data with the base station according to the RTT length.

The user equipment performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

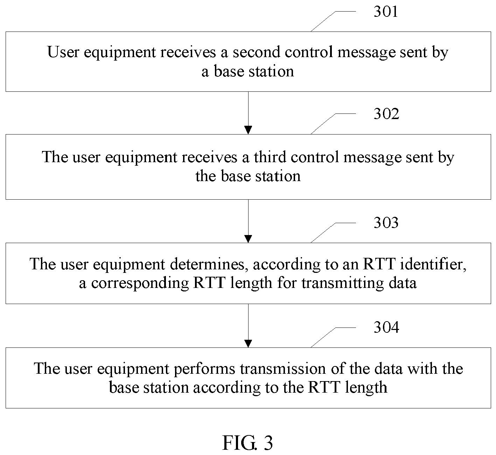

A base station uses an RTT identifier carried in a second control message, to indicate an RTT length. Referring to FIG. 3, another embodiment of a data transmission method in an embodiment of the present invention includes the following steps.

301. User equipment receives a second control message sent by the base station.

The user equipment receives the second control message sent by the base station, where the second control message is used to notify an RTT length corresponding to an RTT identifier.

Exemplarily, the second control message may be sent by the base station by using higher layer signaling.

Further, the second control message may be further used to instruct to use a type that is of data needing to be transmitted and is corresponding to an RTT length.

Specifically, the type of the data may be represented by using different logical channels, and in this case, may be corresponding to a logical channel number identifier by using an RTT length; or

the type of the data may be represented by using different logical channel groups, and in this case, may be corresponding to a logical channel group identifier by using an RTT length; or

the type of the data may be represented by using different radio bearers, and in this case, may be corresponding to a radio bearer identifier by using an RTT length; or

the type of the data may be represented by using different data flows, and in this case, may be corresponding to a data flow number identifier by using an RTT length. The different data flows may be data flows with different IP addresses or with different IP addresses and different port numbers.

It may be understood that, the foregoing correspondence between a data type and an RTT length may be one-to-one, one-to-many, or many-to-one. This is not specifically limited in this embodiment of the present invention.

Optionally, when multiple carriers are configured for the user equipment, different carriers may use different RTT lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

302. The user equipment receives a third control message sent by the base station.

The user equipment receives the third control message sent by the base station by using physical layer signaling, where the third control message includes the RTT identifier, and the RTT identifier is used to indicate a corresponding RTT length for transmitting the data.

Exemplarily, the third control message may be sent by the base station by using physical layer signaling. Further, the third control message may be a DCI message.

Exemplarily, the third control message may be a newly-defined DCI message, and an RTT identifier (shortenRTTIndicator) used for indicating an RTT length is added to the DCI message.

303. The user equipment determines, according to the RTT identifier, a corresponding RTT length for transmitting the data.

The user equipment determines, according to the RTT identifier, the corresponding RTT length for transmitting the data.

Exemplarily, it is assumed that there are two types of RTT lengths, which are a first RTT and a second RTT respectively, where a length of the first RTT is greater than a length of the second RTT. The RTT identifier is indicated by shortenRTTIndicator, and if shortenRTTIndicator=0, it is determined that the corresponding RTT length for transmitting the data is the first RTT; or if shortenRTTIndicator=1, it is determined that the corresponding RTT length for transmitting the data is the second RTT, and a data sending and receiving rule corresponding to the second RTT is used. Alternatively, the RTT identifier directly indicates an RTT length. This is not specifically limited in this embodiment of the present invention.

304. The user equipment performs transmission of the data with the base station according to the RTT length.

The user equipment performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

Exemplarily, if it is determined that the RTT length is the first RTT, a data sending and receiving rule corresponding to the first RTT is used, or if it is determined that the RTT length is the second RTT, the data sending and receiving rule corresponding to the second RTT is used.

Further, when the second control message instructs to use types that are of data needing to be transmitted and are separately corresponding to different RTT lengths, the user equipment transmits data of a type corresponding to the RTT length.

Optionally, when multiple carriers are configured for the user equipment, different carriers may use different RTT lengths. In this case, different data types may be understood as corresponding to different carriers.

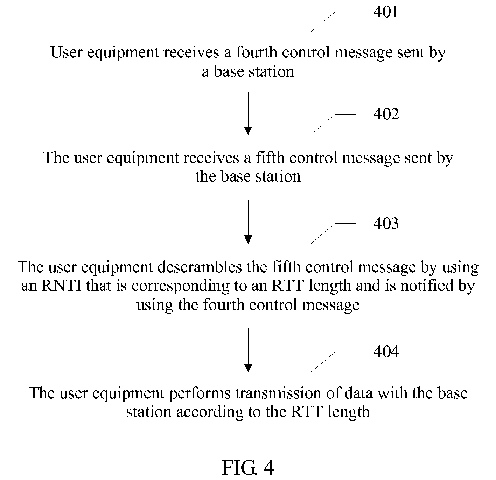

A base station may further use a matching relationship between a radio network temporary identifier (RNTI, Radio Network Temporary Identitifier) scrambling or descrambling manner for a fifth control message and an RTT length, to indicate an RTT length. Referring to FIG. 4, another embodiment of a data transmission method in an embodiment of the present invention includes the following steps.

401. User equipment receives a fourth control message sent by the base station.

The user equipment receives the fourth control message sent by the base station, where the fourth control message is used to notify an RTT length corresponding to an RNTI scrambling or descrambling manner.

Exemplarily, the fourth control message may be sent by the base station by using higher layer signaling.

Exemplarily, different RTT lengths are corresponding to different RNTI scrambling or descrambling manners.

Further, the fourth control message may be further used to instruct to use a type that is of data needing to be transmitted and is corresponding to an RTT length.

Specifically, the type of the data may be represented by using different logical channels, and in this case, may be corresponding to a logical channel number identifier by using an RTT length; or

the type of the data may be represented by using different logical channel groups, and in this case, may be corresponding to a logical channel group identifier by using an RTT length; or

the type of the data may be represented by using different radio bearers, and in this case, may be corresponding to a radio bearer identifier by using an RTT length; or

the type of the data may be represented by using different data flows, and in this case, may be corresponding to a data flow number identifier by using an RTT length. The different data flows may be data flows with different IP addresses or with different IP addresses and different port numbers.

It may be understood that, the foregoing correspondence between a data type and an RTT length may be one-to-one, one-to-many, or many-to-one. This is not specifically limited in this embodiment of the present invention.

Optionally, when multiple carriers are configured for the user equipment, different carriers may use different RTT lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

402. The user equipment receives a fifth control message sent by the base station.

The user equipment receives the fifth control message sent by the base station. Further, the fifth control message may be a DCI message.

Exemplarily, the fifth control message may be sent by the base station by using physical layer signaling. Further, the fifth control message may be a DCI message.

In actual application, to distinguish different RTT lengths, a base station side may scramble the DCI message in different RNTI scrambling manners.

Exemplarily, the fifth control message may be a newly-defined DCI message. When shortenRTT is a second RTT, a new RNTI (that is, an RNTI that is corresponding to the RTT length and is notified by using the fourth control message) is used for scrambling. The new DCI message is transmitted on a PDCCH, and when receiving the DCI message, the user equipment descrambles the fifth control message by using the RNTI that is corresponding to the RTT length and is notified by using the fourth control message.

403. The user equipment descrambles the fifth control message by using an RNTI that is corresponding to the RTT length and is notified by using the fourth control message.

The user equipment performs RNTI descrambling on the fifth control message, and determines, according to a manner of performing RNTI descrambling on the fifth control message, a corresponding RTT length for transmitting the data.

Exemplarily, it is assumed that there are two types of RTT lengths, which are a first RTT and a second RTT respectively, where a length of the first RTT is greater than a length of the second RTT. If descrambling on the DCI performed by using a first RNTI succeeds, it is determined that the corresponding RTT length for transmitting the data is the first RTT, or if descrambling on the DCI performed by using a second RNTI succeeds, it is determined that the corresponding RTT length for transmitting the data is the second RTT.

404. The user equipment performs transmission of the data with the base station according to the RTT length.

The user equipment performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

Exemplarily, if descrambling on the DCI performed by using the first RNTI (that is, a descrambling manner corresponding to a long RTT) succeeds, a data sending and receiving rule corresponding to the first RTT is used; or if descrambling on the DCI performed by using the second RNTI (that is, a descrambling manner corresponding to a short RTT) succeeds, a data sending and receiving rule corresponding to the second RTT is used.

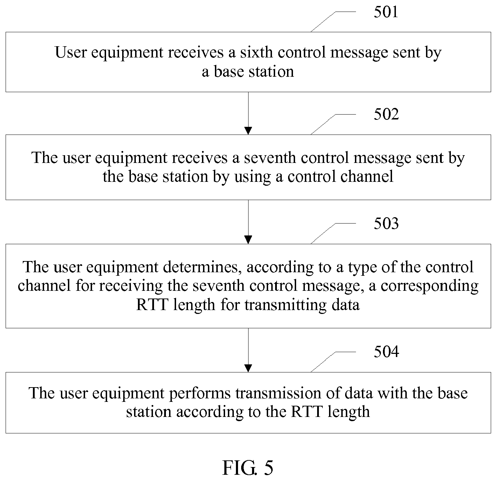

A base station may further use a correspondence between a type of a control channel and an RTT length, to indicate an RTT length. Referring to FIG. 5, another embodiment of a data transmission method in an embodiment of the present invention includes the following steps.

501. User equipment receives a sixth control message sent by the base station.

The user equipment receives the sixth control message sent by the base station, where the sixth control message is used to notify an RTT length corresponding to a type of a control channel.

Specifically, different types of control channels indicate control channels with different channel resources, where the channel resource includes a time-domain resource and a frequency-domain resource.

Exemplarily, in a time domain, the different channel resources may be different TTIs, different timeslots, different OFDM symbols, different subframes, different radio frames, or the like, and are not specifically limited in this embodiment of the present invention. In a frequency domain, the different channel resources may be different subcarriers, different physical resource blocks, different component carriers, or the like, and are not specifically limited in this embodiment of the present invention.

Exemplarily, the sixth control message may be sent by the base station by using higher layer signaling.

Further, the sixth control message may be further used to instruct to use types that are of data needing to be transmitted and are separately corresponding to RTT lengths.

Specifically, the type of the data may be represented by using different logical channels, and in this case, may be corresponding to a logical channel number identifier by using an RTT length; or

the type of the data may be represented by using different logical channel groups, and in this case, may be corresponding to a logical channel group identifier by using an RTT length; or

the type of the data may be represented by using different radio bearers, and in this case, may be corresponding to a radio bearer identifier by using an RTT length; or

the type of the data may be represented by using different data flows, and in this case, may be corresponding to a data flow number identifier by using an RTT length. The different data flows may be data flows with different IP addresses or with different IP addresses and different port numbers.

It may be understood that, the foregoing correspondence between a data type and an RTT length may be one-to-one, one-to-many, or many-to-one. This is not specifically limited in this embodiment of the present invention.

Optionally, when multiple carriers are configured for the user equipment, different carriers may use different RTT lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

502. The user equipment receives a seventh control message sent by the base station by using a control channel. The user equipment receives the seventh control message sent by the base station by using the control channel. Exemplarily, the seventh control message may be sent by the base station by using physical layer signaling. Further, the seventh control message may be a DCI message. There are at least two types of control channels, and different types of control channels are corresponding to different RTT lengths. Specifically, different types of control channels indicate control channels with different channel resources, where the channel resource includes a time-domain resource and a frequency-domain resource. 503. The user equipment determines, according to a type of the control channel for receiving the seventh control message, a corresponding RTT length for transmitting the data.

The user equipment determines, according to the type of the control channel for receiving the control message, the corresponding RTT length for transmitting the data.

Exemplarily, it is assumed that there are two types of RTT lengths, which are a first RTT and a second RTT respectively, where a length of the first RTT is greater than a length of the second RTT. Further, the control channel may be a physical downlink control channel (PDCCH, Physical Downlink Control channel), or an enhanced physical downlink control channel (EPDCCH, Enhanced Physical Downlink Control Channel). For example, the PDCCH is corresponding to the first RTT, and the EPDCCH is corresponding to the second RTT. That is, if a DCI message is detected on the EPDCCH corresponding to the second RTT, it is determined that an RTT length for current data transmission is the second RTT; or if a DCI message is detected on the PDCCH, it is determined that an RTT length for current data transmission is the first RTT. Further, for the PDCCH, a symbol 0 and a symbol 1 are corresponding to the first RTT, and the third symbol is corresponding to the second RTT; or for the EPDCCH, subcarriers n-m or PRBs n-m are corresponding to the first RTT, and subcarriers i-k or PRBs i-k are corresponding to the second RTT.

In actual application, if there are two or more types of RTTs, more control channels need to be designed for scheduling data. For example, in the first N symbols of each TTI (where N is greater than or equal to 0), the PDCCH is designed according to a requirement, and/or a new EPDCCH is designed for scheduling data. For example, in the $M^{th}$ to the $N^{th}$ subcarriers or PRBs of each TTI (where M is greater than or equal to 0, N is greater than or equal to 0, and N is greater than or equal to M), the EPDCCH is designed according to a requirement, and the user equipment transmits data by listening to the PDCCH and the EPDCCH.

504. The user equipment performs transmission of the data with the base station according to the RTT length.

The user equipment performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

It may be understood that, the foregoing embodiments may be separately or jointly implemented. This is not specifically limited in the embodiments of the present invention.

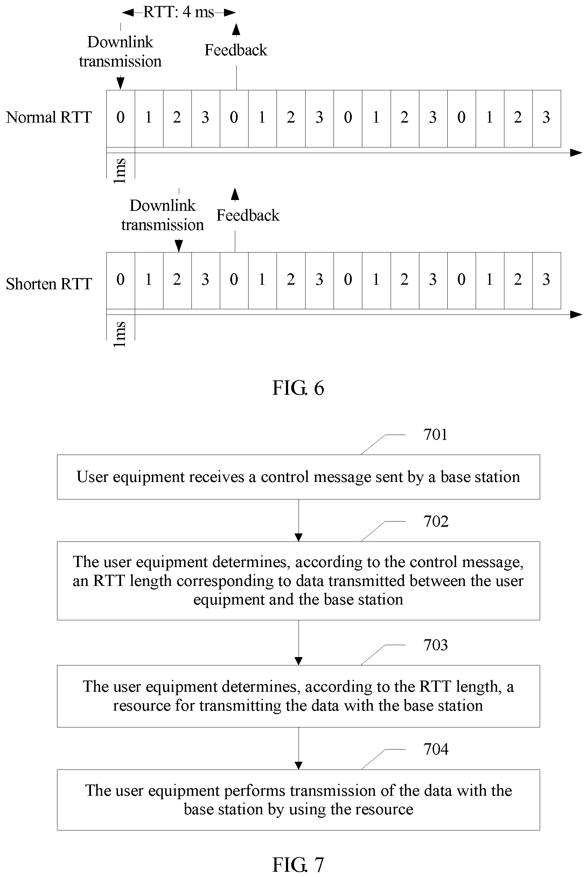

In actual application, there is a timing relationship between sending and transmission of a data packet in a radio network, and a network side needs to consider both scenarios of two types of RTTs existing before and after hardware improvement. As shown in FIG. 6, in a scenario in which an RTT is 8 ms, for a data packet sent at moment n, a feedback is received at moment n+4; in a scenario in which an RTT is 4 ms, because a processing delay is reduced, for a data packet sent at moment n, a feedback is received at moment n+2. Therefore, when there are two different types of RTT lengths in the network, collision may occur in both an uplink feedback and a downlink feedback according to a current transmission mechanism. For the downlink feedback, transmission of the downlink feedback is sent on a PUCCH. As shown in FIG. 6, when a PDCCH resource used in an HARQ process 0 of a normal RTT is the same as a PDCCH resource used during DCI sending in an HARQ process 2 of a shorten RTT, a feedback for the HARQ process 0 conflicts with a feedback for the HARQ process 2.

Therefore, improvement is made to a computation manner of a resource for data transmission in an embodiment of the present invention. Referring to FIG. 7, another embodiment of a data transmission method is an embodiment of the present invention includes the following steps.

701. User equipment receives a control message sent by a base station.

The user equipment receives the control message sent by the base station. Specifically, the control message is used to indicate an RTT length for transmitting the data by the user equipment and the base station.

702. The user equipment determines, according to the control message, an RTT length corresponding to data transmitted between the user equipment and the base station.

The user equipment determines, according to the control message, the RTT length corresponding to the data transmitted between the user equipment and the base station. Exemplarily, there may be a first RTT and a second RTT, and the first RTT is greater than the second RTT.

The RTT length may be indicated by using a specific time value, for example, 4 ms; or may be indicated by using a quantity of TTIs, for example, eight TTIs; or may be indicated by using a quantity of OFDM symbols, for example, twenty OFDM symbols. It may be understood that, specific representation and implementation of the RTT length may be determined according to an actual situation, and are not limited herein.

It may be understood that, there may be two or more types of RTT lengths. Exemplarily, if there may be two types of RTT lengths, the control message may indicate one type of RTT length, so that the user equipment determines which type of RTT is used to send or receive corresponding data. Optionally, the control message may indicate two types of RTT lengths, so that the user equipment determines sending or receiving of data to which two types of RTTs are separately corresponding. In actual application, an implementation manner of the control message may be determined according to an actual situation, and is not specifically limited herein.

703. The user equipment determines, according to the RTT length, a resource for performing transmission of the data with the base station.

The user equipment determines, according to the RTT length, the resource for performing transmission of the data with the base station, so that the user equipment and the base station transmit, to each other by using different resources, data corresponding to different RTT lengths.

In actual application, according to an RTT length indicated by the RTT identifier, an offset corresponding to the TTI length is added during computation of a resource used for sending or receiving data.

Exemplarily, if transmission of the feedback information is an uplink feedback of downlink data, the user equipment determines that a frequency domain resource for the feedback meets the following formulas, where $n_{\mathrm{PUCCH}}^{(1,\tilde{p}_0)}$ is a frequency domain resource location corresponding to a port 0, and $n_{\mathrm{PUCCH}}^{(1,\tilde{p}_1)}$ is a frequency domain resource location corresponding to a port 1.

When a PDCCH is used for transmission, formula 1 and formula 2 are met:

$$\text{formula 1: } n_{\text{PUCCH}}^{(1,\tilde{p}_0)} = n_{\text{CCE}} + N_{\text{PUCCH}}^{(1)} + \mathit{offset};$$

and

$$\text{formula 2: } n_{\text{PUCCH}}^{(1,\tilde{p}_1)} = n_{\text{CCE}} + 1 + N_{\text{PUCCH}}^{(1)} + \mathit{offset};$$

where

$n_{\text{CCE}}$ is a lowest, highest, or specific control channel element CCE location of a physical downlink control channel PDCCH occupied by a scheduling command that is of the downlink data and is for scheduling the downlink data, $N_{\text{PUCCH}}^{(1)}$ is a frequency domain start location of a physical uplink control channel PUCCH, and *offset* is the offset and is an integer.

Specifically, in this embodiment of the present invention, only computation manners of frequency domain resources of the port 0 and the port 1 are described. However, in actual application, there may be multiple ports, and for a specific computation manner, reference may be made to formula 2. That is, if a frequency domain resource of a port n is to be computed, $n_{\text{PUCCH}}^{(1,\tilde{p}n)} = n_{\text{CCE}} + n + N_{\text{PUCCH}}^{(1)} + \mathit{offset}$.

In actual application, the offset is notified by the base station by using higher layer signaling, or is set in a DCI message. Specifically, the offset may be set in an "HARQ-ACK resource offset domain" in DCI. $N_{\text{PUCCH}}^{(1)}$ and *offset* may be combined into one parameter, and the parameter represents a frequency domain start location that is of a PUCCH with the offset.

Further, if transmission of feedback information is an uplink feedback of downlink data, when an EPDCCH is used, and EPDCCH transmission is distributed transmission, computation of a feedback resource meets formula 3 and formula 4:

$$\text{formula 3: } n_{\text{PUCCH}}^{(1,\tilde{p}_0)} = n_{\text{ECCE,q}} + \Delta_{ARO} + N_{\text{PUCCH,q}}^{(e1)} + \mathit{offset};$$

and

$$\text{formula 4: } n_{\text{PUCCH}}^{(1,\tilde{p}_1)} = n_{\text{ECCE,q}} + 1 + \Delta_{ARO} + N_{\text{PUCCH,q}}^{(e1)} + \mathit{offset};$$

or

if transmission of feedback information is an uplink feedback of downlink data, when an EPDCCH is used, and EPDCCH transmission is centralized transmission, computation of a feedback resource meets formula 5 and formula 6:

$$\text{formula 5: } n_{\text{PUCCH}}^{(1,\tilde{p}_0)} = \left\lfloor \frac{n_{\text{ECCE,q}}}{N_{RB}^{ECCE,q}} \right\rfloor \cdot N_{RB}^{ECCE,q} + n' + \Delta_{ARO} + N_{\text{PUCCH,q}}^{(e1)} + \mathit{offset};$$

and

$$formula\ 6: \qquad n_{\text{PUCCH}}^{(1,\tilde{p}_1)} = \left\lfloor \frac{n_{\text{ECCE},q}}{N_{RB}^{ECCE,q}} \right\rfloor \cdot N_{RB}^{ECCE,q} + 1 + n' + \Delta_{ARO} + N_{\text{PUCCH},q}^{(e1)} + offset \qquad ;$$

where

$n_{\text{ECCE,q}}$ is a lowest, highest, or specific control channel element CCE location of an EPDCCH-PRB-set q used by an enhanced physical downlink control channel EPDCCH occupied by a scheduling command that is of the downlink data and is for scheduling the downlink data, $N_{\text{PUCCH,q}}^{(e1)}$ is a parameter configured by using higher layer signaling, $\Delta ARQ$ is a parameter notified by using physical layer control signaling, $N_{RB}^{ECCE,q}$ is a quantity of CCEs of each PRB in the EPDCCH-PRB-set q, $n'$ is determined by an antenna port, and *offset* is the offset and is an integer.

Exemplarily, if transmission of the feedback information is a downlink feedback of uplink data, during computation of a resource used for sending or receiving data, the user equipment determines that a resource $(n_{PHICH}^{group}, n_{PHICH}^{seq})$ for the feedback meets formula 7 and formula 8, where $n_{PHICH}^{group}$ is a group number of a physical hybrid automatic repeat request indicator channel PHICH, and $n_{PHICH}^{seq}$ is an orthogonal sequence number in a group corresponding to the group number;

$$formula\ 7\ is \qquad n_{PHICH}^{group} = (I_{PRB\_RA} + n_{DMRS}) \bmod N_{PHICH}^{group} + I_{PHICH} N_{PHICH}^{group} + N_{group1} ;$$

and

$$formula\ 8\ is \qquad n_{PHICH}^{seq} = (\lfloor I_{PRB\_RA} / N_{PHICH}^{group} \rfloor + n_{DMRS}) \bmod 2 N_{SF}^{PHICH} ;$$

where

$n_{DMRS}$ is cyclic shift mapping of a demodulation reference signal DMRS domain indicated by using uplink DCI on a latest PDCCH;

$N_{SF}^{PHICH}$ is a spreading factor of the PHICH;

$I_{PRB-RA}$ indicates that the first code word is a lowest PRB index of a PUSCH indicated by the uplink DCI, and that the second code word is a lowest PRB index+1 of the PUSCH indicated by the uplink DCI;

$N_{PHICH}^{group}$ is a group amount of the PHICH; and

$N_{\text{group1}}$ is an offset.

704. The user equipment performs transmission of the data with the base station by using the resource.

It may be understood that, this embodiment of the present invention and each foregoing embodiment may be separately or jointly implemented. This is not specifically limited in this embodiment of the present invention.

In this embodiment of the present invention, according to an RTT length indicated by the RTT identifier, an offset corresponding to the RTT length is added during computation of a resource used for sending or receiving data. Therefore, in a transmission scenario of data corresponding to two types of RTTs, the data corresponding to the two types of RTTs can be staggered on a frequency domain resource, and a conflict between two types of data is avoided.

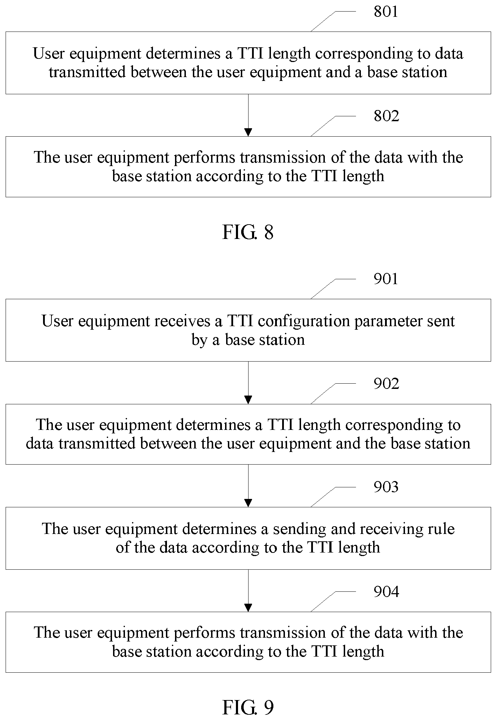

In a radio communications system, a transmission delay may further be reduced by reducing a TTI. Likewise, in actual application, there may be at least two types of TTIs. Therefore, an embodiment of the present invention further provides a communications mechanism in which at least two types of TTIs coexist. Referring to FIG. 8, another embodiment of a data transmission method in an embodiment of the present invention includes the following steps.

801. User equipment determines a TTI length corresponding to data transmitted between the user equipment and a base station.

The user equipment determines the TTI length corresponding to the data transmitted between the user equipment and the base station. Specifically, there are at least two types of TTI lengths.

In actual application, the user equipment determines the TTI length in multiple manners, and specific manners are separately described in subsequent embodiments.

802. The user equipment performs transmission of the data with the base station according to the TTI length.

The user equipment performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

In this embodiment of the present invention, user equipment determines a TTI length for transmitting the data with the base station, and may perform transmission of the data with the base station in a data sending or receiving manner adapted to the corresponding TTI length. Therefore, a conflict problem caused by different TTI lengths in a data transmission process is resolved.

Referring to FIG. 9, another embodiment of a data transmission method in an embodiment of the present invention includes the following steps.

901. User equipment receives a TTI configuration parameter sent by a base station.

Before the user equipment determines a TTI length corresponding to data transmitted between the user equipment and the base station, the user equipment receives the TTI configuration parameter sent by the base station. Specifically, the TTI configuration parameter may be configured in a control message sent by the base station by using higher layer signaling.

The user equipment receives the TTI configuration parameter sent by the base station, and the TTI configuration parameter includes any one or a combination of at least two of a DCI scrambling manner, indication information of a TTI length type, a sounding reference signal (SRS, Sounding Reference Signal) configuration parameter corresponding to a TTI, demodulation reference signal (DM-RS, DeModulation RS) configuration information for using a TTI, SR configuration information for using a TTI, feedback resource configuration information for using a TTI, feedback rule configuration information for using a TTI, PDCCH resource location information for using a TTI, transport block size (Transport Block Size, TBS) table configuration information for using a TTI, resource scheduling granularity information for using a TTI, or EPDCCH resource location information for using a TTI.

It is assumed that there are two types of TTI lengths, which are a first TTI and a second TTI respectively, where a length of the first TTI is greater than a length of the second TTI. In actual application, a configuration parameter of the first TTI may have been configured in the user equipment or specified in a protocol, and therefore the TTI configuration parameter received by the user equipment in this embodiment of the present invention may particularly refer to a configuration parameter of the second TTI. Optionally, if a configuration parameter of the first TTI has not been configured, the TTI configuration parameter received by the user equipment in this embodiment of the present invention may include configuration parameters of the first TTI and the second TTI.

It is set in the DM-RS configuration information that, for a newly-defined DM-RS (that is, a DM-RS corresponding to the second TTI), the DM-RS signal exists in each second TTI. In addition, the base station notifies the user equipment by using dedicated signaling, where the dedicated signaling includes necessary information such as location information, encoding information, and period information of the DM-RS.

It is set in the SRS configuration information that the user equipment sends an SRS in a second TTI configured with an SRS resource, and the base station performs SRS measurement in the second TTI configured with the SRS resource.

The TBS table configuration information may indicate a TBS table corresponding to the second TTI of the user equipment, and the TBS table may be specified in a protocol, or configured by using a configuration message.

The resource scheduling granularity information may indicate a smallest scheduling granularity corresponding to the second TTI, such as six PRBs or ten PRBs, or 72 subcarriers or 120 subcarriers. When a TTI is reduced, signaling overheads can be reduced by increasing a scheduling granularity.

902. The user equipment determines a TTI length corresponding to data transmitted between the user equipment and the base station.

The user equipment determines the TTI length corresponding to the data transmitted between the user equipment and the base station. Specifically, there are at least two types of TTI lengths.

In actual application, the user equipment determines the TTI length in multiple manners, and specific manners are separately described in subsequent embodiments.

903. The user equipment determines a sending and receiving rule of the data according to the TTI length.

Before performing transmission of the data with the base station according to the TTI length, the user equipment may determine the sending and receiving rule of the data according to the TTI length, where different TTI lengths are corresponding to different sending and receiving rules, and the sending and receiving rule includes resources corresponding to service data and feedback information during sending or receiving, and a data transmission time sequence relationship.

Exemplarily, if there are two types of TTI lengths, which are a first TTI and a second TTI respectively, where a length of the first TTI is greater than a length of the second TTI, the sending and receiving rule includes a first sending rule, a first receiving rule, a second sending rule, and a second receiving rule. The first sending rule and the first receiving rule are a sending and receiving rule corresponding to the first TTI, and the second sending rule and the second receiving rule are a sending and receiving rule corresponding to the second TTI.

In actual application, specific content of the sending and receiving rule may be sent by the base station to the user equipment by using higher layer signaling. Further, the sending and receiving rule may include a computation manner of a resource used for performing transmission of the data by the user equipment and the base station. If the sending and receiving rule is the first sending rule and the first receiving rule corresponding to the first TTI, the computation manner of the resource may be the same as that in the prior art. If the sending and receiving rule is the second sending rule and the second receiving rule corresponding to the second TTI, the resource may be a new resource notified by the base station by using higher layer signaling, or the base station may notify a new computation manner. A specific implementation manner is not limited herein.

904. The user equipment performs transmission of the data with the base station according to the TTI length.

The user equipment performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

Exemplarily, if there are two types of TTI lengths, which are a first TTI and a second TTI respectively, where a length of the first TTI is greater than a length of the second TTI, and when transmission of the data is transmission of feedback information,

if a current transmission scenario is downlink transmission performed by the user equipment, and it is determined that the TTI length corresponding to the data is the first TTI, the data is received by using the first receiving rule. The user equipment determines whether a TTI length corresponding to data transmitted by the user equipment last time changes, and if yes, the user equipment empties an HARQ buffer, and then performs the step of receiving the data by using the first receiving rule, or if yes, and previous data is not successfully transmitted in an HARQ process used in data transmission, the user equipment may continue to retransmit the data. After receiving the data by using the first receiving rule, the user equipment feeds back the data to the base station by using a first feedback rule corresponding to the first TTI.

If a current transmission scenario is downlink transmission performed by the user equipment, and it is determined that the TTI length corresponding to the data is the second TTI, the data is received by using the second receiving rule. The user equipment determines whether a TTI length corresponding to data transmitted by the user equipment last time changes, and if yes, the user equipment empties an HARQ buffer, and then performs the step of receiving the data by using the second receiving rule, or if yes, and previous data is not successfully transmitted in an HARQ process used in data transmission, the user equipment may continue to retransmit the data. After receiving the data by using the second receiving rule, the user equipment feeds back the data to the base station by using a second feedback rule corresponding to the second TTI. A first feedback resource corresponding to the first feedback rule is different from a second feedback resource corresponding to the second feedback rule, and the second feedback resource exists in each second TTI length. The feedback resource includes a PHICH channel resource, a PRB number for transmitting data, and a frame number or a subframe number for transmitting data.

Further, for a feedback of a CQI, the user equipment feeds back a channel quality indicator CQI to the base station by using a feedback resource corresponding to the determined TTI length, where separate encoding is performed on the CQI in each TTI, or joint encoding is performed on the CQI in a TTI included in each subframe.

For a feedback of uplink feedback information, the user equipment sends uplink feedback information of downlink data to the base station by using a feedback resource corresponding to the determined TTI length, where separate encoding is performed on the uplink feedback information in each TTI, or joint encoding is performed on the uplink feedback information in a TTI included in each subframe.

If a current transmission scenario is uplink transmission performed by the user equipment, and it is determined that the TTI length corresponding to the data is the first TTI, the data is sent by using the first sending rule. Before sending the data by using the first sending rule, the user equipment determines whether a TTI length corresponding to data transmitted by the user equipment last time changes, and if yes, the user equipment empties an HARQ buffer, and then performs the step of sending the data by using the first sending rule, or if yes, and previous data is not successfully transmitted in an HARQ process used in data transmission, the user equipment may continue to retransmit the data. After sending the data by using the first sending rule, the user equipment feeds back the data to the base station by using a first feedback rule corresponding to the first TTI.

If a current transmission scenario is uplink transmission performed by the user equipment, and it is determined that the TTI length corresponding to the data is the second TTI, the data is sent by using the second sending rule. Before sending the data by using the second sending rule, the user equipment determines whether a TTI length corresponding to data transmitted by the user equipment last time changes, and if yes, the user equipment empties an HARQ buffer, and then performs the step of sending the data by using the second sending rule, or if yes, and previous data is not successfully transmitted in an HARQ process used in data transmission, the user equipment may continue to retransmit the data. After sending the data by using the second sending rule, the user equipment feeds back the data to the base station by using a second feedback rule corresponding to the second TTI. A first feedback resource corresponding to the first feedback rule is different from a second feedback resource corresponding to the second feedback rule, and the second feedback resource exists in each second TTI. Further, when an indication indicating that the TTI changes, if there is still data in the HARQ buffer, the TTI length may be modified after transmission or retransmission is completed.

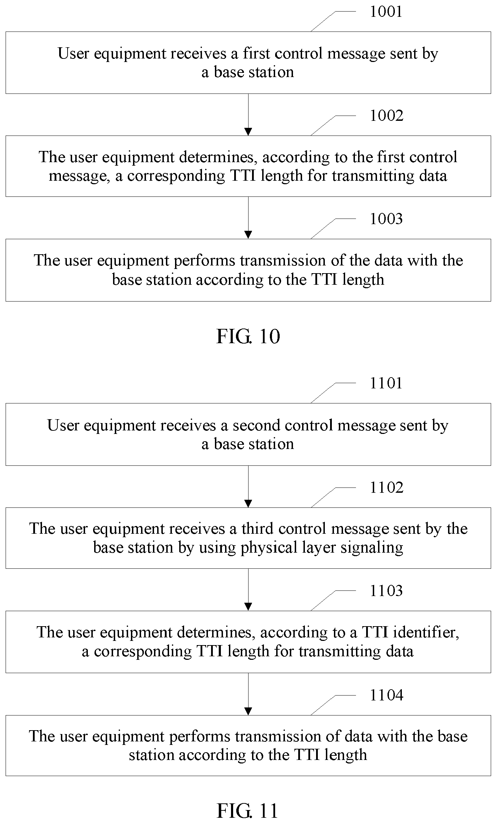

In actual application, the user equipment may determine the TTI length in different manners. Specifically, refer to the following embodiments in FIG. 10 to FIG. 13.

It should be noted that a control message mentioned in a TTI embodiment after FIG. 9 refers to a control message for a TTI, and is different from a control message in the foregoing RTT embodiment in this application. Likewise, a first control message, a second control message, or the like mentioned in the following embodiment also refers to a control message for a TTI. However, in actual application, control or indication information of a TTI and an RTT may be sent by using a same control message or different control messages. In the embodiments of the present invention, serial numbers such as "first" and "second" are used for distinguishing different control information functions, and it should not be understood as a limitation to an actual control message quantity or type.

A base station may directly send a first control message to indicate a TTI length. Another embodiment of a data transmission method in an embodiment of the present invention includes the following steps.

1001. User equipment receives a first control message sent by the base station.

The user equipment receives the first control message sent by the base station, where the first control message is used to indicate a corresponding TTI length for transmitting the data.

Exemplarily, the first control message may be sent by using higher layer signaling or physical layer signaling.

1002. The user equipment determines, according to the first control message, a corresponding TTI length for transmitting the data.

The user equipment determines, according to the first control message, the corresponding TTI length for transmitting the data.

Further, the first control message may be further used to instruct to use types that are of data needing to be transmitted and are separately corresponding to TTI lengths. After a TTI length is configured for the first time by using the first control message, the user equipment stores a correspondence table between different data and a TTI length. When the user equipment and the base station are to transmit data to each other, the user equipment may search the correspondence table according to a type of the data for a TTI length to be used for current sending or receiving of the data. Before the base station updates a correspondence between different data and a TTI length for another time by using higher layer signaling, the user equipment may determine the TTI length by using the correspondence table each time when performing transmission of the data with the base station.

Specifically, the type of the data may be represented by using different logical channels, and in this case, may be corresponding to a logical channel number identifier by using a TTI length; or

the type of the data may be represented by using different logical channel groups, and in this case, may be corresponding to a logical channel group identifier by using a TTI length; or

the type of the data may be represented by using different radio bearers, and in this case, may be corresponding to a radio bearer identifier by using a TTI length; or

the type of the data may be represented by using different data flows, and in this case, may be corresponding to a data flow number identifier by using a TTI length. The different data flows may be data flows with different IP addresses or with different IP addresses and different port numbers.

It may be understood that, the foregoing correspondence between a data type and a TTI length may be one-to-one, one-to-many, or many-to-one. This is not specifically limited in this embodiment of the present invention.

Optionally, when multiple carriers are configured for the user equipment, different carriers may use different TTI lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

It may be understood that, the base station may further use another control message to independently implement a function of instructing to use types that are of data needing to be transmitted and are separately corresponding to different TTI lengths. For example, before sending the first control message, the base station uses the another control message to instruct to use the types that are of the data needing to be transmitted and are separately corresponding to the different TTI lengths. A specific implementation manner may be determined according to an actual situation, and is not limited herein.

1003. The user equipment performs transmission of the data with the base station according to the TTI length.

The user equipment performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

In actual application, a control message sent by the base station may be further used to indicate a correspondence between a TTI length and a scheduling granularity. The control message may be an RRC configuration message, and the control message includes the correspondence between a TTI length and a scheduling granularity. For example, a longer TTI is corresponding to a coarser scheduling granularity, and a shorter TTI is corresponding to a finer scheduling granularity, or a longer TTI is corresponding to a finer scheduling granularity, and a shorter TTI is corresponding to a coarser scheduling granularity.

After receiving the foregoing control message, a user terminal performs communication according to the relationship that is between a TTI length and a scheduling granularity and is indicated by the control message, until an indication of the control message is received again. For example, the control message indicates that a scheduling granularity of a first TTI length is n TTIs, and a scheduling granularity of a second TTI length is m TTIs. In this case, when the user terminal performs transmission by using the first TTI length, the scheduling granularity of the first TTI length is n, that is, transmission may be continuously performed in n TTIs each time when a scheduling command is received; and when the user terminal performs transmission by using the second TTI length, the scheduling granularity of the second TTI length is m, that is, transmission may be continuously performed in m TTIs each time when a scheduling command is received, where m and n are integers greater than 1.

A base station uses a TTI identifier carried in a second control message, to indicate a TTI length. Referring to FIG. 11, another embodiment of a data transmission method in an embodiment of the present invention includes the following steps.

1101. User equipment receives a second control message sent by the base station.

The user equipment receives the second control message sent by the base station, where the second control message is used to notify a TTI length corresponding to a TTI identifier.

Exemplarily, the second control message may be sent by the base station by using higher layer signaling.

Further, the second control message may be further used to instruct to use a type that is of data needing to be transmitted and is corresponding to a TTI length.

Specifically, the type of the data may be represented by using different logical channels, and in this case, may be corresponding to a logical channel number identifier by using a TTI length; or
the type of the data may be represented by using different logical channel groups, and in this case, may be corresponding to a logical channel group identifier by using a TTI length; or
the type of the data may be represented by using different radio bearers, and in this case, may be corresponding to a radio bearer identifier by using a TTI length; or
the type of the data may be represented by using different data flows, and in this case, may be corresponding to a data flow number identifier by using a TTI length. The different data flows may be data flows with different IP addresses or with different IP addresses and different port numbers.

It may be understood that, the foregoing correspondence between a data type and a TTI length may be one-to-one, one-to-many, or many-to-one. This is not specifically limited in this embodiment of the present invention.

Optionally, when multiple carriers are configured for the user equipment, different carriers may use different TTI lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

Further, the second control message may be a message that includes a TTI configuration parameter, and the TTI configuration parameter includes any one or a combination of at least two of a DCI scrambling manner, indication information of a TTI length type, an SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, TBS table configuration information for using a TTI, resource scheduling granularity information for using a TTI, or EPDCCH resource location information for using a TTI.

It is assumed that there are two types of TTI lengths, which are a first TTI and a second TTI respectively, where a length of the first TTI is greater than a length of the second TTI. In actual application, a configuration parameter of the first TTI may have been configured in the user equipment or specified in a protocol, and therefore the TTI configuration parameter received by the user equipment in this embodiment of the present invention may particularly refer to a configuration parameter of the second TTI. Optionally, if a configuration parameter of the first TTI has not been configured, the TTI configuration parameter received by the user equipment in this embodiment of the present invention may include configuration parameters of the first TTI and the second TTI.

1102. The user equipment receives a third control message sent by the base station by using physical layer signaling. The user equipment receives the third control message sent by the base station by using physical layer signaling, where the third control message includes the TTI identifier, and the TTI identifier is used to indicate a corresponding TTI length for transmitting the data.

Exemplarily, the third control message may be sent by the base station by using physical layer signaling. Further, the third control message may be a DCI message.

Exemplarily, the third control message may be a newly-defined DCI message, and a TTI identifier (shortenTTI) used for indicating a TTI length is added to the DCI message.

1103. The user equipment determines, according to the TTI identifier, a corresponding TTI length for transmitting the data.

The user equipment determines, according to the TTI identifier, the corresponding TTI length for transmitting the data. Exemplarily, it is assumed that there are two types of TTI lengths, which are a first TTI and a second TTI respectively, where a length of the first TTI is greater than a length of the second TTI. The TTI identifier is indicated by shortenTTI, and if shortenTTI=0, it is determined that the corresponding TTI length for transmitting the data is the first TTI; or if shortenTTI=1, it is determined that the corresponding TTI length for transmitting the data is the second TTI, and a data sending and receiving rule corresponding to the second TTI is used. Alternatively, the TTI identifier directly indicates an RTT length. This is not specifically limited in this embodiment of the present invention.

1104. The user equipment performs transmission of the data with the base station according to the TTI length.

The user equipment performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

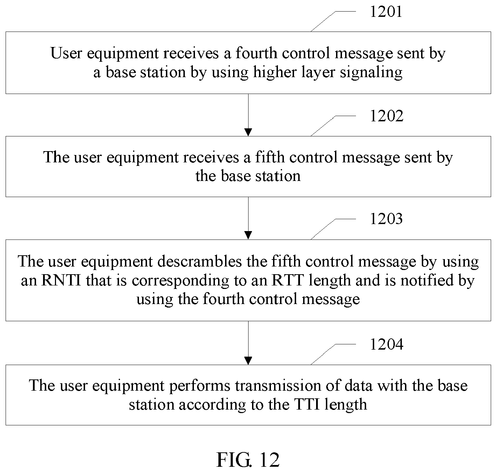

A base station may further use a matching relationship between an RNTI scrambling or descrambling manner for a fifth control message and a TTI length, to indicate a TTI length. Referring to FIG. 12, another embodiment of a data transmission method in an embodiment of the present invention includes the following steps.

1201. User equipment receives a fourth control message sent by the base station by using higher layer signaling.

The user equipment receives the fourth control message sent by the base station by using higher layer signaling, where the fourth control message is used to notify a TTI length corresponding to an RNTI scrambling or descrambling manner.

Exemplarily, the fourth control message may be sent by the base station by using higher layer signaling.

Exemplarily, different TTI lengths are corresponding to different RNTI scrambling or descrambling manners.

Further, the fourth control message may be further used to instruct to use types that are of data needing to be transmitted and are separately corresponding to TTI lengths.

Specifically, the type of the data may be represented by using different logical channels, and in this case, may be corresponding to a logical channel number identifier by using a TTI length; or

the type of the data may be represented by using different logical channel groups, and in this case, may be corresponding to a logical channel group identifier by using a TTI length; or

the type of the data may be represented by using different radio bearers, and in this case, may be corresponding to a radio bearer identifier by using a TTI length; or

the type of the data may be represented by using different data flows, and in this case, may be corresponding to a data flow number identifier by using a TTI length. The different data flows may be data flows with different IP addresses or with different IP addresses and different port numbers.

It may be understood that, the foregoing correspondence between a data type and a TTI length may be one-to-one, one-to-many, or many-to-one. This is not specifically limited in this embodiment of the present invention.

Optionally, when multiple carriers are configured for the user equipment, different carriers may use different TTI lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

Exemplarily, the fourth control message may be a message that includes a TTI configuration parameter, and the TTI configuration parameter includes any one or a combination of at least two of a DCI scrambling manner (where a correspondence between an RNTI scrambling manner and different TTI lengths, and a corresponding RNTI descrambling manner are configured), indication information of a TTI length type, an SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, TBS table configuration information for using a TTI, resource scheduling granularity information for using a TTI, or EPDCCH resource location information for using a TTI.

It is assumed that there are two types of TTI lengths, which are a first TTI and a second TTI respectively, where a length of the first TTI is greater than a length of the second TTI. In actual application, a configuration parameter of the first TTI may have been configured in the user equipment, and therefore the TTI configuration parameter received by the user equipment in this embodiment of the present invention may particularly refer to a configuration parameter of the second TTI. Optionally, if a configuration parameter of the first TTI has not been configured, the TTI configuration parameter received by the user equipment in this embodiment of the present invention may include configuration parameters of the first TTI and the second TTI.

1202. The user equipment receives a fifth control message sent by the base station.

The user equipment receives the fifth control message sent by the base station. Further, the fifth control message may be a DCI message.

Exemplarily, the fifth control message may be sent by the base station by using physical layer signaling. Further, the fifth control message may be a DCI message.

In actual application, to distinguish different TTI lengths, a base station side may scramble the DCI message in different RNTI scrambling manners.

Exemplarily, the fifth control message may be a newly-defined DCI message. When shortenTTI=1 (that is, shortenTTI is the second TTI), a new RNTI (that is, an RNTI that is corresponding to the RTT length and is notified by using the fourth control message) is used for scrambling. The new DCI message is transmitted on a PDCCH, and when receiving the DCI message, the user equipment descrambles the fifth control message by using the RNTI that is corresponding to the RTT length and is notified by using the fourth control message.

1203. The user equipment descrambles the fifth control message by using an RNTI that is corresponding to the RTT length and is notified by using the fourth control message.

The user equipment performs RNTI descrambling on the fifth control message, and determines, according to a manner of performing RNTI descrambling on the fifth control message, a corresponding TTI length for transmitting the data.

Exemplarily, it is assumed that there are two types of TTI lengths, which are a first TTI and a second TTI respectively, where a length of the first TTI is greater than a length of the second TTI. If descrambling on the DCI performed by using a first RNTI succeeds, it is determined that the corresponding RTT length for transmitting the data is the first TTI, or if descrambling on the DCI performed by using a second RNTI succeeds, it is determined that the corresponding TTI for transmitting the data is the second TTI.

1204. The user equipment performs transmission of the data with the base station according to the TTI length.

The user equipment performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

Exemplarily, if descrambling on the DCI performed by using the first RNTI (that is, a descrambling manner corresponding to a long TTI) succeeds, a data sending and receiving rule corresponding to the first TTI is used; or if descrambling on the DCI performed by using the second RNTI (that is, a descrambling manner corresponding to a short TTI) succeeds, a data sending and receiving rule corresponding to the second TTI is used.

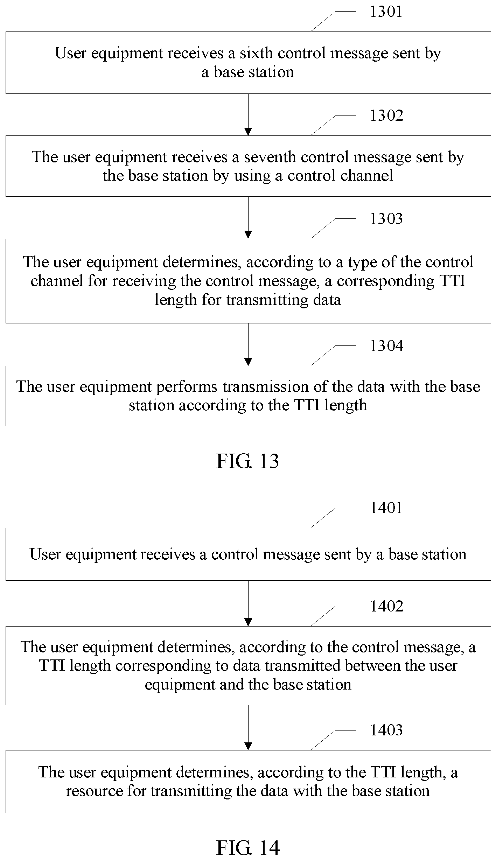

A base station may further use a correspondence between a type of a control channel and a TTI length, to indicate a TTI length. Referring to FIG. 13, another embodiment of a data transmission method in an embodiment of the present invention includes the following steps.

1301. User equipment receives a sixth control message sent by the base station.

The user equipment receives the sixth control message sent by the base station, where the sixth control message is used to notify a TTI length corresponding to a type of a control channel.

Specifically, different types of control channels indicate control channels with different channel resources, where the channel resource includes a time-domain resource and a frequency-domain resource.

Exemplarily, in a time domain, the different channel resources may be different TTIs, different timeslots, different OFDM symbols, different subframes, different radio frames, or the like, and are not specifically limited in this embodiment of the present invention. In a frequency domain, the different channel resources may be different subcarriers, different physical resource blocks, different component carriers, or the like, and are not specifically limited in this embodiment of the present invention.

Exemplarily, the sixth control message may be sent by the base station by using higher layer signaling.

Further, the sixth control message may be further used to instruct to use types that are of data needing to be transmitted and are separately corresponding to TTI lengths.

Specifically, the type of the data may be represented by using different logical channels, and in this case, may be corresponding to a logical channel number identifier by using a TTI length; or

the type of the data may be represented by using different logical channel groups, and in this case, may be corresponding to a logical channel group identifier by using a TTI length; or

the type of the data may be represented by using different radio bearers, and in this case, may be corresponding to a radio bearer identifier by using a TTI length; or

the type of the data may be represented by using different data flows, and in this case, may be corresponding to a data flow number identifier by using a TTI length. The different data flows may be data flows with different IP addresses or with different IP addresses and different port numbers.

It may be understood that, the foregoing correspondence between a data type and a TTI length may be one-to-one, one-to-many, or many-to-one. This is not specifically limited in this embodiment of the present invention.

Optionally, when multiple carriers are configured for the user equipment, different carriers may use different TTI lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

1302. The user equipment receives a seventh control message sent by the base station by using a control channel. The user equipment receives the seventh control message sent by the base station by using the control channel. Exemplarily, the seventh control message may be sent by the base station by using physical layer signaling. Further, the seventh control message may be a DCI message. There are at least two types of control channels, and different types of control channels are corresponding to different TTI lengths.

1303. The user equipment determines, according to a type of the control channel for receiving the control message, a corresponding TTI length for transmitting the data.

The user equipment determines, according to the type of the control channel for receiving the control message, the corresponding TTI length for transmitting the data.

Exemplarily, it is assumed that there are two types of TTI lengths, which are a first TTI and a second TTI respectively, where a length of the first TTI is greater than a length of the second TTI. Further, the control channel may be a physical downlink control channel (PDCCH, Physical Downlink Control channel), or an enhanced physical downlink control channel (EPDCCH, Enhanced Pyhsical Downlink Control Channle). The PDCCH is corresponding to the first TTI, and the EPDCCH is corresponding to the second TTI. That is, if a DCI message is detected on the EPDCCH corresponding to the second TTI, it is determined that a TTI length for current data transmission is the second TTI; or if a DCI message is detected on the PDCCH, it is determined that a TTI length for current data transmission is the first TTI. Further, for the PDCCH, a symbol 0 and a symbol 1 are corresponding to the first TTI, and a third symbol is corresponding to the second TTI; or for the EPDCCH, subcarriers n-m are corresponding to the first TTI, and subcarriers i-k are corresponding to the second TTI.

In actual application, if there are two or more types of TTIs, more control channels need to be designed for scheduling data. For example, in the first N symbols of each TTI (where N is greater than or equal to 0), the PDCCH is designed according to a requirement, and/or a new EPDCCH is designed for scheduling data. For example, in the $M^{th}$ to the $N^{th}$ subcarriers or PRBs of each TTI (where M is greater than or equal to 0, N is greater than or equal to 0, and N is greater than or equal to M), the EPDCCH is designed according to a requirement, and the user equipment transmits data by listening to the PDCCH and the EPDCCH.

1304. The user equipment performs transmission of the data with the base station according to the TTI length.

The user equipment performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

It may be understood that, the foregoing embodiments may be separately or jointly implemented. This is not specifically limited in the embodiments of the present invention.

In actual application, there is a timing relationship between sending and transmission of a data packet in a radio network, and a network side needs to consider both scenarios of two types of TTIs existing before and after hardware improvement. Therefore, improvement is made to a computation manner of a resource for data transmission in an embodiment of the present invention. Referring to FIG. 14, another embodiment of a data transmission method in an embodiment of the present invention includes the following steps.

1401. User equipment receives a control message sent by a base station.

The user equipment receives the control message sent by the base station. Specifically, the control message is used to indicate a TTI length for transmitting the data by the user equipment and the base station.

1402. The user equipment determines, according to the control message, a TTI length corresponding to data transmitted between the user equipment and the base station.

The user equipment determines, according to the control message, the TTI length corresponding to the data transmitted between the user equipment and the base station. Exemplarily, the TTI length may include a first TTI and a second TTI, and the first TTI is greater than the second TTI.

The TTI length may be indicated by using a specific time value, for example, 0.5 ms; or may be indicated by using a quantity of OFDM symbols, for example, seven OFDM symbols. It may be understood that, specific representation and implementation of the TTI length may be determined according to an actual situation, and are not limited herein.

1403. The user equipment determines, according to the TTI length, a resource for transmitting the data with the base station.

In actual application, according to a TTI length indicated by the TTI identifier, an offset corresponding to the TTI length is added during computation of a resource used for sending or receiving data. A specific embodiment manner is basically the same as that in Embodiment 7, and details are not described herein repeatedly.

In this embodiment of the present invention, according to a TTI length indicated by the TTI identifier, an offset corresponding to the TTI length is added during computation of a resource used for sending or receiving data. Therefore, in a transmission scenario of data corresponding to two types of RTTs, the data corresponding to the two types of TTIs can be staggered on a frequency domain resource, and a conflict between the data is avoided.

Alternatively, when a TTI for sending a feedback is different from a TTI for sending data, for example, when the TTI for sending the feedback is a first TTI, and the TTI for sending the data is the second TTI, two or more feedbacks of data transmitted by using the second TTI may be sent together in one first TTI.

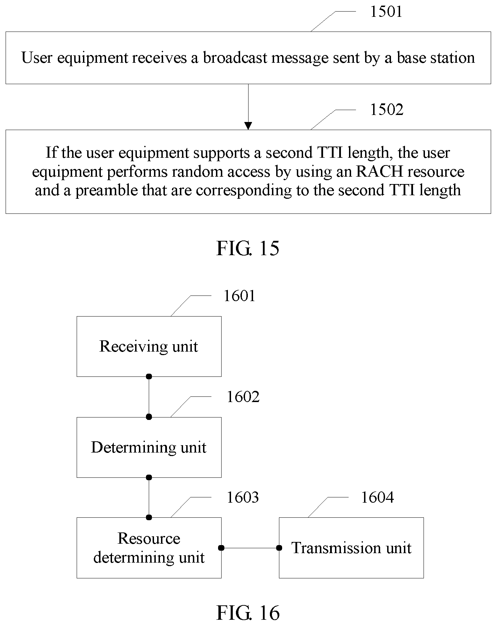

In actual application, a TTI length may be set for user equipment during initial access. Referring to FIG. 15, another embodiment of a data transmission method in an embodiment of the present invention includes the following steps.

1501. User equipment receives a broadcast message sent by a base station.

The user equipment receives the broadcast message sent by the base station, where the broadcast message includes a random access channel (RACH, Random Access Channel) resource and a preamble that are corresponding to a second TTI, the second TTI is a type of TTI length, there is a first TTI and the second TTI, and the first TTI is greater than the second TTI.

Optionally, before the user equipment receives the broadcast message sent by the base station, the base station sends configuration parameters of a PRACH resource and the preamble to the user equipment by using the broadcast message.

1502. If the user equipment supports the second TTI length, the user equipment performs random access by using an RACH resource and a preamble that are corresponding to the second TTI length.

After receiving the broadcast message, the user equipment determines whether the user equipment supports the second TTI, and if the user equipment supports the second TTI, the user equipment performs random access by using the PRACH resource and the preamble that are corresponding to the second TTI.

On a base station side, if the base station receives a preamble on a PRACH corresponding to the second TTI, it is considered that the user equipment may perform data transmission by using the second TTI, and perform data transmission with the user equipment by using a sending and receiving rule corresponding to the second TTI; or if the base station receives a preamble on an RACH corresponding to the first TTI, the base station performs data transmission with the user equipment by using a sending and receiving rule corresponding to the first TTI.

It may be understood that, each TTI embodiment and each RTT embodiment in the present invention may be separately or jointly implemented. This is not specifically limited in this embodiment of the present invention.

It may be understood that before the foregoing steps of each TTI embodiment and each RTT embodiment are performed, the user equipment may report a TTI capability and/or an RTT capability of the user equipment. Specifically, the user equipment may actively report the capability; or a network side performs querying, and then the user equipment reports the capability. A used message may be an RRC message, or a control message at a MAC layer, such as a MAC CE, or a Msg3 message, or a control message at a physical layer, such as a preamble. This is not specifically limited in this embodiment of the present invention.

Specifically, the user equipment may report information about a supported TTI length and/or a supported RTT length, or report only information about whether a short TTI is supported and/or a short RTT is supported.

Further, the base station performs TTI configuration and/or RTT configuration and data transmission in the foregoing embodiments according to capability information reported by the user equipment. Details are not described herein repeatedly.

Further, during a handover, a source base station may send the capability information of the user equipment to a target base station, so that after learning a capability of the user equipment, the target base station configures and uses a TTI and/or an RTT to perform data transmission. A specific message may be an X2 interface (an interface between base stations) message, or an S1 interface (an interface between a base station and a core network) message, and details are not described herein repeatedly.

Further, before or after reporting the capability of the user equipment, the user equipment receives a control message sent by the base station, to indicate capability information of a TTI and/or an RTT supported by the base station. In specific application, the control message may include a control message sent by using higher layer signaling, such as an RRC configuration message, or a broadcast message; may be a control message at a MAC layer, such as a MAC CE, or a Msg4 message; or may be a control message at a physical layer, such as a DCI message. The control message includes capability information of an eNodeB, and the capability information includes a TTI length and/or an RTT length that can be supported by the eNodeB.

When different TTIs and/or different RTTs coexist, avoidance of a conflict between physical resources used for the different TTIs and/or the different RTTs needs to be taken into consideration. A specific method is as follows:

The physical resources used for the different TTIs and/or the different RTTs are staggered in a time domain or a frequency domain. With reference to the foregoing embodiments, when the different TTI lengths and/or the different RTT lengths are being configured, the physical resources used for the different TTIs and/or the different RTTs may be simultaneously configured. The physical resource includes one or more of a PDCCH resource, an EPDCCH resource, a PDSCH resource, a PUSCH resource, a PUCCH resource, or a PHICH resource. This is not specifically limited in this embodiment of the present invention.

In actual application, when multiple carriers are configured for the user equipment, different TTIs and/or different RTTs may be configured for different carriers. A specific method is as follows:

The user equipment receives the control message sent by the base station.

The user equipment receives the control message sent by the base station. Specifically, the control message is used to indicate a relationship between a carrier and a TTI length and/or an RTT length.

In specific application, the control message may include a control message sent by using higher layer signaling, such as an RRC configuration message; or may include a control message sent by using MAC signaling, such as a MAC CE. Specifically, the control message may indicate a TTI length and/or an RTT length used for performing data transmission on each carrier, or may include a priority corresponding to each TTI length and/or a priority corresponding to each RTT length, such as a highest priority corresponding to a shortest TTI length and/or a highest priority corresponding to a shortest RTT length.

Further, the control message may be further used to indicate a correspondence between a radio bearer (RB, Radio bearer) and a scheduling granularity. For example, an RB with a larger data amount is corresponding to a coarser scheduling granularity, and an RB with a smaller data amount is corresponding to a finer scheduling granularity.

After receiving the foregoing control message, a user terminal performs communication according to the relationship that is between a radio bearer and a scheduling granularity and is indicated by the control message, until an indication of the control message is received again. For example, the control message indicates that a scheduling granularity of a radio bearer 1 is n TTIs, and a scheduling granularity of a radio bearer 2 is m TTIs. In this case, when the user terminal performs transmission on the radio bearer 1, transmission may be continuously performed in n TTIs each time when a scheduling command is received; and when the user terminal performs transmission on the radio bearer 2, transmission may be continuously performed in m TTIs each time when a scheduling command is received, where m and n are integers greater than 1.

Further, after receiving the foregoing control message, a user terminal performs communication according to the relationship that is between a carrier and a TTI length and/or an RTT length and is indicated by the control message, until an indication of the control message is received again. For example, a carrier 1 uses a first TTI length and/or a first RTT length, and a carrier 2 uses a second TTI length and/or a second RTT length. That is, TTI lengths and/or RTT lengths used for performing data transmission (including transmission of data, a feedback, and signaling) on all radio bearers of the carrier 1 are the first TTI length and/or the first RTT length, and TTI lengths and/or RTT lengths used for performing data transmission (including transmission of data, a feedback, and signaling) on all radio bearers of the carrier 2 are the second TTI length and/or the second RTT length.

Further, after receiving the foregoing control message, a user terminal performs communication according to the relationship that is between a carrier and a TTI length and/or an RTT length and is indicated by the control message, and a priority relationship of a TTI length and/or a priority relationship of an RTT length on each carrier. For example, a carrier 1 uses a first TTI length and/or a first RTT length, a carrier 2 uses a second TTI length and/or a second RTT length, and a priority of the first TTI length and/or a priority of the first RTT length are/is higher than a priority of the second TTI length and/or a priority of the second RTT length. When the carrier 1 and the carrier 2 are multiplexed, data transmission (including transmission of data, a feedback, and signaling) is performed by using a TTI length and/or an RTT length with a higher priority, that is, the first TTI length and/or the first RTT length.

Further, in an inter-base station multi-stream aggregation scenario, base stations may also substitute for the foregoing carriers. An implementation method is similar, and details are not described herein repeatedly.

It may be understood that, running of timers in discontinuous reception (DRX, Discontinue os Receiving) is affected by a TTI change, and the timers in DRX include an inactivity timer, a retransmission timer, and the like. After a TTI changes, an operation procedure in DRX is as follows:

The user equipment receives the control message sent by the base station.

The user equipment receives the control message sent by the base station. Specifically, the control message is used to indicate a DRX parameter (for a multi-carrier scenario) of each carrier, the DRX parameter is related to a TTI length supported by the carrier, and different TTI lengths are corresponding to different DRX parameters.

In specific application, the control message may include a control message sent by using higher layer signaling, such as an RRC configuration message. The control message includes DRX parameter information of each carrier. DRX parameters of carriers may be the same or may be different.

Further, after receiving the foregoing control message, a user terminal records the DRX parameter information of each carrier. The user terminal determines, according to a DRX parameter of each carrier, whether each carrier can enter a DRX status, and after a carrier enters a DRX status, performs timing according to a TTI length of the carrier. The user terminal listens to a PDCCH channel of the carrier only when the carrier is in a DRX on state, or the user terminal listens to a PDCCH channel of the carrier only when all carriers are in a DRX on state.

Further, after receiving the foregoing control message, a user terminal records the DRX parameter information of each carrier. The user terminal determines, according to a DRX parameter of each carrier, whether each carrier can enter a DRX status, and after a carrier enters a DRX status, performs timing according to a normal TTI length, that is, an existing TTI length. The user terminal listens to a PDCCH channel of the carrier only when the carrier is in a DRX on state, or the user terminal listens to a PDCCH channel of the carrier only when all carriers are in a DRX on state.

Further, after receiving the foregoing control message, a user terminal records the DRX parameter information of each carrier. The user terminal determines, according to a DRX parameter of each carrier, whether each carrier can enter a DRX status, and after a carrier enters a DRX status, performs timing according to a shortest TTI length of all carriers. The user terminal listens to a PDCCH channel of the carrier only when the carrier is in a DRX on state, or the user terminal listens to a PDCCH channel of the carrier only when all the carriers are in a DRX on state.

The following describes an embodiment of user equipment in the present invention configured to execute the foregoing data transmission method. For a logical structure of the user equipment, refer to FIG. 16. An embodiment of user equipment in an embodiment of the present invention includes:

a receiving unit 1601, configured to receive a control message sent by a base station, where the control message is used to determine an RTT length corresponding to data transmitted between the user equipment and the base station;

a determining unit 1602, configured to determine, according to the control message, the round-trip time RTT length corresponding to the data transmitted between the user equipment and the base station; and

a transmission unit 1603, configured to perform transmission of the data with the base station according to the RTT length.

Specifically, in a scenario in which an RTT length is directly indicated by a control message, the receiving unit 1601 is specifically configured to:

receive a first control message sent by the base station, where the first control message is used to indicate the corresponding RTT length for transmitting the data; and

the determining unit 1602 is specifically configured to:

determine, according to the first control message, the corresponding RTT length for transmitting the data.

Specifically, in a scenario in which an RTT length is indicated by an RTT identifier, the receiving unit 1601 is specifically configured to:

receive a second control message sent by the base station, where the second control message is used to notify an RTT length corresponding to an RTT identifier; and

receive a third control message sent by the base station, where the third control message includes the RTT identifier, and the RTT identifier is used to indicate the corresponding RTT length for transmitting the data; and

the determining unit 1602 is specifically configured to:

determine, according to the RTT identifier, the corresponding RTT length for transmitting the data.

Specifically, in a scenario in which an RTT length is indicated by an RNTI scrambling manner, the receiving unit 1601 is specifically configured to:

receive a fourth control message sent by the base station, where the fourth control message is used to notify an RTT length corresponding to an RNTI scrambling manner; and

receive a fifth control message sent by the base station, where an RNTI scrambling manner for the fifth control message is corresponding to the RTT length; and

the determining unit 1602 is specifically configured to:

perform RNTI descrambling on the fifth control message, and determine, according to a manner of performing RNTI descrambling on the fourth control message, the corresponding RTT length for transmitting the data.

Specifically, in a scenario in which an RTT length is indicated by a control channel, the receiving unit 1601 is specifically configured to:

receive a sixth control message sent by the base station, where the sixth control message is used to notify an RTT length corresponding to a type of a control channel; and

receive a seventh control message sent by the base station by using a control channel, where there are at least two types of control channels, and different types of control channels are corresponding to different RTT lengths; and

the determining unit 1602 is specifically configured to:

determine, according to a type of the control channel for receiving the seventh control message, the corresponding RTT length for transmitting the data.

Specifically, the control message is sent by the base station by using higher layer signaling or physical layer signaling.

Specifically, the control message is further used to instruct to use types that are of data needing to be transmitted and are separately corresponding to RTT lengths.

Specifically, the user equipment further includes:

a resource determining unit 1604, configured to determine, according to the RTT length, a resource for performing transmission of the data with the base station, where the user equipment and the base station transmit, to each other by using different resources, data corresponding to different RTT lengths.

The transmission unit 1603 is specifically configured to:

perform, by the user equipment, transmission of the data with the base station by using the resource.

Further, the resource determining unit 1604 is specifically configured to:

if transmission of the data is transmission of feedback information, add, according to the RTT length indicated by the RTT identifier, an offset corresponding to the RTT length when computing a resource used for transmitting the feedback information.

Specifically, the offset is notified by the base station by using higher layer signaling, or is set in a physical layer signaling message.

Further, the resource determining unit 1604 is specifically configured to: if transmission of the feedback information is an uplink feedback of downlink data, determine, by the user equipment, that a frequency domain resource for the feedback meets the following formulas, where $n_{\mathrm{PUCCH}}^{(1,\widetilde{p}_0)}$ is a frequency domain resource location corresponding to a port 0, and $n_{\mathrm{PUCCH}}^{(1,\widetilde{p}_1)}$ is a frequency domain resource location corresponding to a port 1.

When a PDCCH is used for transmission, formula 1 and formula 2 are met:

$$\text{formula 1:} \quad n_{\mathrm{PUCCH}}^{(1,\widetilde{p}_0)} = n_{\mathrm{CCE}} + N_{\mathrm{PUCCH}}^{(1)} + \mathit{offset} \; ;$$

and

$$\text{formula 2:} \quad n_{\mathrm{PUCCH}}^{(1,\widetilde{p}_1)} = n_{\mathrm{CCE}} + 1 + N_{\mathrm{PUCCH}}^{(1)} + \mathit{offset} \; ;$$

where

$n_{\mathrm{CCE}}$ is a lowest, highest, or specific control channel element CCE location of a physical downlink control channel PDCCH occupied by a scheduling command that is of the downlink data and is for scheduling the downlink data, $N_{\mathrm{PUCCH}}^{(1)}$ is a frequency domain start location of a physical uplink control channel PUCCH, and *offset* is the offset and is an integer.

When an EPDCCH is used and EPDCCH transmission is distributed transmission, formula 3 and formula 4 are met:

$$\text{formula 3:} \quad n_{\mathrm{PUCCH}}^{(1,\widetilde{p}_0)} = n_{\mathrm{ECCE,q}} + \Delta_{ARO} + N_{\mathrm{PUCCH,q}}^{(e1)} + \mathit{offset} \; ;$$

and

$$\text{formula 4:} \quad n_{\text{PUCCH}}^{(1,\tilde{p}_1)} = n_{\text{ECCE,q}} + 1 + \Delta_{ARO} + N_{\text{PUCCH,q}}^{(e1)} + \textit{offset};$$

or when an EPDCCH is used and EPDCCH transmission is centralized transmission, formula 5 and formula 6 are met:

$$\text{formula 5:} \quad n_{\text{PUCCH}}^{(1,\tilde{p}_0)} = \left\lfloor \frac{n_{\text{ECCE,q}}}{N_{RB}^{ECCE,q}} \right\rfloor \cdot N_{RB}^{ECCE,q} + n' + \Delta_{ARO} + N_{\text{PUCCH,q}}^{(e1)} + \textit{offset};$$

and

$$\text{formula 6:} \quad n_{\text{PUCCH}}^{(1,\tilde{p}_1)} = \left\lfloor \frac{n_{\text{ECCE,q}}}{N_{RB}^{ECCE,q}} \right\rfloor \cdot N_{RB}^{ECCE,q} + 1 + n' + \Delta_{ARO} + N_{\text{PUCCH,q}}^{(e1)} + \textit{offset};$$

where

$n_{\text{ECCE,q}}$ is a lowest, highest, or specific control channel element CCE location of an EPDCCH-PRB-set q used by an enhanced physical downlink control channel EPDCCH occupied by a scheduling command that is of the downlink data and is for scheduling the downlink data, $N_{\text{PUCCH,q}}^{(e1)}$ is a parameter configured by using higher layer signaling, $\Delta ARQ$ is a parameter notified by using physical layer control signaling, $N_{RB}^{ECCE,q}$ is a quantity of CCEs of each PRB in the EPDCCH-PRB-set q, $n'$ is determined by an antenna port, and *offset* is the offset and is an integer.

Further, the resource determining unit 1604 is specifically configured to: if transmission of the feedback information is a downlink feedback of uplink data, determine, by the user equipment, that a resource $(n_{PHICH}^{group}, n_{PHICH}^{seq})$ for the feedback meets formula 7 and formula 8, where $n_{PHICH}^{group}$ is a group number of a physical hybrid automatic repeat request indicator channel PHICH, and $n_{PHICH}^{seq}$ is an orthogonal sequence number in a group corresponding to the group number;

$$\text{formula 7 is} \quad n_{PHICH}^{group} = (I_{PRB\_RA} + n_{DMRS}) \bmod N_{PHICH}^{group} + I_{PHICH} N_{PHICH}^{group} + N_{group1};$$

and

$$\text{formula 8 is} \quad n_{PHICH}^{seq} = (\lfloor I_{PRB\_RA} / N_{PHICH}^{group} \rfloor + n_{DMRS}) \bmod 2 N_{SF}^{PHICH};$$

where

$n_{DMRS}$ is cyclic shift mapping of a demodulation reference signal DMRS domain indicated by using uplink DCI on a latest PDCCH;

$N_{SF}^{PHICH}$ is a spreading factor of the PHICH;

$I_{PRB\_RA}$ indicates that the first code word is a lowest PRB index of a PUSCH indicated by the uplink DCI, and that the second code word is a lowest PRB index+1 of the PUSCH indicated by the uplink DCI;

$N_{PHICH}^{group}$ is a group amount of the PHICH; and

$N_{group1}$ is an offset.

Specific operations of the units of the user equipment configured to execute an RTT length based data transmission method are described in the following and include:

the receiving unit 1601 receives the control message sent by the base station. Specifically, the control message is used to determine the RTT length corresponding to the data transmitted between the user equipment and base station, so as to perform transmission of the data with the base station.

In specific application, the control message may include a control message sent by using higher layer signaling, for example, a radio resource control (RRC, Radio Resource Control) configuration message, or may include a control message sent by using physical layer signaling, for example, a downlink control information (DCI, Downlink Control Information) message. Exemplarily, the higher layer signaling includes dedicated signaling and a broadcast message.

Specifically, the RTT length may be directly indicated by the control message sent by using higher layer signaling, or a type of the RTT length is indicated by the control message sent by using higher layer signaling, and then a to-be-used RTT length of a specific type is indicated by the control message sent by using physical layer signaling.

The determining unit 1602 determines, according to the control message, the RTT length corresponding to the data transmitted between the user equipment and the base station.

The RTT length may be indicated by using a specific time value, for example, 4 ms; or may be indicated by using a quantity of TTIs, for example, eight TTIs; or may be indicated by using a quantity of OFDM symbols, for example, twenty OFDM symbols. It may be understood that, specific representation and implementation of the RTT length may be determined according to an actual situation, and are not limited herein.

It may be understood that, there may be two or more types of RTT lengths. Exemplarily, the control message may indicate one type of RTT length, so that the user equipment determines which type of RTT is used to send or receive corresponding data. Optionally, the control message may indicate two or more types of RTT lengths, so that the user equipment determines sending or receiving of data to which two types of RTTs are separately corresponding. In actual application, an implementation manner of the control message may be determined according to an actual situation, and is not specifically limited herein.

The transmission unit 1603 performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

In this embodiment of the present invention, user equipment may receive a control message sent by a base station, so that the user equipment can determine, according to the control message, an RTT length for performing transmission of the data with the base station, and further perform transmission of the data with the base station in a data sending or receiving manner adapted to the corresponding RTT length. Therefore, a conflict problem caused by different RTT lengths in a data transmission process is resolved.

Exemplarily, in a scenario in which an RTT length is directly indicated by a control message, the receiving unit 1601 receives the first control message sent by the base station, where the first control message is used to indicate the corresponding RTT length for transmitting the data. Specifically, the data refers to data that currently needs to be transmitted by the user equipment.

The determining unit 1602 determines, according to the first control message, the corresponding RTT length for transmitting the data.

Further, the first control message may be further used to instruct to use types that are of data needing to be transmitted and are separately corresponding to RTT lengths. After an RTT length is configured for the first time by using the first control message, the user equipment stores a correspondence table between different data and an RTT length. When the user equipment and the base station are to transmit data to each other, the user equipment may search the correspondence table according to a type of the data for an RTT length to be used for current sending or receiving of the data. Before the base station updates a correspondence between different data and an RTT length for another time by using higher layer signaling, the user equipment may determine the RTT length by using the correspondence table each time when performing transmission of the data with the base station.

Specifically, the type of the data may be represented by using different logical channels, and in this case, may be corresponding to a logical channel number identifier by using an RTT length; or

the type of the data may be represented by using different logical channel groups, and in this case, may be corresponding to a logical channel group identifier by using an RTT length; or
the type of the data may be represented by using different radio bearers, and in this case, may be corresponding to a radio bearer identifier by using an RTT length; or

the type of the data may be represented by using different data flows, and in this case, may be corresponding to a data flow number identifier by using an RTT length. The different data flows may be data flows with different IP addresses or with different "IP addresses and port numbers".

It may be understood that, the foregoing correspondence between a data type and an RTT length may be one-to-one, one-to-many, or many-to-one. This is not specifically limited in this embodiment of the present invention.

It may be understood that, the base station may further use another control message to independently implement a function of instructing to use types that are of data needing to be transmitted and are separately corresponding to different RTT lengths. For example, before sending the first control message, the base station uses the another control message to instruct to use the types that are of the data needing to be transmitted and are separately corresponding to the different RTT lengths. A specific implementation manner may be determined according to an actual situation, and is not limited herein.

Optionally, when multiple carriers are configured for the user equipment, different carriers may use different RTT lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

The transmission unit 1603 performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

Exemplarily, in a scenario in which an RTT length is indicated by an RTT identifier,

the receiving unit 1601 receives the second control message sent by the base station, where the second control message is used to notify an RTT length corresponding to an RTT identifier.

Exemplarily, the second control message may be sent by the base station by using higher layer signaling.

Further, the second control message may be further used to instruct to use a type that is of data needing to be transmitted and is corresponding to an RTT length.

Specifically, the type of the data may be represented by using different logical channels, and in this case, may be corresponding to a logical channel number identifier by using an RTT length; or

the type of the data may be represented by using different logical channel groups, and in this case, may be corresponding to a logical channel group identifier by using an RTT length; or

the type of the data may be represented by using different radio bearers, and in this case, may be corresponding to a radio bearer identifier by using an RTT length; or

the type of the data may be represented by using different data flows, and in this case, may be corresponding to a data flow number identifier by using an RTT length. The different data flows may be data flows with different IP addresses or with different IP addresses and different port numbers.

It may be understood that, the foregoing correspondence between a data type and an RTT length may be one-to-one, one-to-many, or many-to-one. This is not specifically limited in this embodiment of the present invention.

Optionally, when multiple carriers are configured for the user equipment, different carriers may use different RTT lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

The receiving unit 1601 receives the third control message sent by the base station by using physical layer signaling, where the third control message includes the RTT identifier, and the RTT identifier is used to indicate the corresponding RTT length for transmitting the data.

The third control message may be sent by the base station by using physical layer signaling. Further, the third control message may be a DCI message.

The third control message may be a newly-defined DCI message, and an RTT identifier (shortenRTTIndicator) used for indicating an RTT length is added to the DCI message.

The determining unit 1602 determines, according to the RTT identifier, the corresponding RTT length for transmitting the data.

It is assumed that there are two types of RTT lengths, which are a first RTT and a second RTT respectively, where a length of the first RTT is greater than a length of the second RTT. The RTT identifier is indicated by shortenRTTIndicator, and if shortenRTTIndicator=0, it is determined that the corresponding RTT length for transmitting the data is the first RTT; or if shortenRTTIndicator=1, it is determined that the corresponding RTT length for transmitting the data is the second RTT, and a data sending and receiving rule corresponding to the second RTT is used. Alternatively, the RTT identifier directly indicates an RTT length. This is not specifically limited in this embodiment of the present invention.

The data transmission unit 1603 performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

If it is determined that the RTT length is the first RTT, a data sending and receiving rule corresponding to the first RTT is used, or if it is determined that the RTT length is the second RTT, the data sending and receiving rule corresponding to the second RTT is used.

Further, when the second control message instructs to use types that are of data needing to be transmitted and are separately corresponding to different RTT lengths, the user equipment transmits data of a type corresponding to the RTT length.

Optionally, when multiple carriers are configured for the user equipment, different carriers may use different RTT lengths. In this case, different data types may be understood as corresponding to different carriers.

Exemplarily, in a scenario in which an RTT length is indicated by an RNTI scrambling manner,
the receiving unit 1601 receives the fourth control message sent by the base station, where the fourth control message is used to notify an RTT length corresponding to an RNTI scrambling or descrambling manner.

The fourth control message may be sent by the base station by using higher layer signaling.

Different RTT lengths are corresponding to different RNTI scrambling or descrambling manners.

Further, the fourth control message may be further used to instruct to use a type that is of data needing to be transmitted and is corresponding to an RTT length.

Specifically, the type of the data may be represented by using different logical channels, and in this case, may be corresponding to a logical channel number identifier by using an RTT length; or
the type of the data may be represented by using different logical channel groups, and in this case, may be corresponding to a logical channel group identifier by using an RTT length; or
the type of the data may be represented by using different radio bearers, and in this case, may be corresponding to a radio bearer identifier by using an RTT length; or
the type of the data may be represented by using different data flows, and in this case, may be corresponding to a data flow number identifier by using an RTT length. The different data flows may be data flows with different IP addresses or with different IP addresses and different port numbers.

It may be understood that, the foregoing correspondence between a data type and an RTT length may be one-to-one, one-to-many, or many-to-one. This is not specifically limited in this embodiment of the present invention.

Optionally, when multiple carriers are configured for the user equipment, different carriers may use different RTT lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

The receiving unit 1601 receives the fifth control message sent by the base station. Further, the fifth control message may be a DCI message.

The fifth control message may be sent by the base station by using physical layer signaling. Further, the fifth control message may be a DCI message.

In actual application, to distinguish different RTT lengths, a base station side may scramble the DCI message in different RNTI scrambling manners.

The fifth control message may be a newly-defined DCI message. When shortenRTT is a second RTT, a new RNTI (that is, an RNTI that is corresponding to the RTT length and is notified by using the fourth control message) is used for scrambling. The new DCI message is transmitted on a PDCCH, and when receiving the DCI message, the user equipment descrambles the fifth control message by using the RNTI that is corresponding to the RTT length and is notified by using the fourth control message.

The determining unit 1602 performs RNTI descrambling on the fifth control message, and determines, according to a manner of performing RNTI descrambling on the fifth control message, the corresponding RTT length for transmitting the data.

It is assumed that there are two types of RTT lengths, which are a first RTT and a second RTT respectively, where a length of the first RTT is greater than a length of the second RTT. If descrambling on the DCI performed by using a first RNTI succeeds, it is determined that the corresponding RTT length for transmitting the data is the first RTT, or if descrambling on the DCI performed by using a second RNTI succeeds, it is determined that the corresponding RTT for transmitting the data is the second RTT.

The data transmission unit 1603 of the user equipment performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

If descrambling on the DCI performed by using the first RNTI (that is, a descrambling manner corresponding to a long RTT) succeeds, a data sending and receiving rule corresponding to the first RTT is used; or if descrambling on the DCI performed by using the second RNTI (that is, a descrambling manner corresponding to a short RTT) succeeds, a data sending and receiving rule corresponding to the second RTT is used.

Exemplarily, in a scenario in which an RTT length is indicated by a control channel,
the receiving unit 1601 receives the sixth control message sent by the base station, where the sixth control message is used to notify an RTT length corresponding to a type of a control channel.

Specifically, different types of control channels indicate control channels with different channel resources, where the channel resource includes a time-domain resource and a frequency-domain resource.

In a time domain, the different channel resources may be different TTIs, different timeslots, different OFDM symbols, different subframes, different radio frames, or the like, and are not specifically limited in this embodiment of the present invention. In a frequency domain, the different channel resources may be different subcarriers, different physical resource blocks, different component carriers, or the like, and are not specifically limited in this embodiment of the present invention.

The sixth control message may be sent by the base station by using higher layer signaling.

Further, the sixth control message may be further used to instruct to use types that are of data needing to be transmitted and are separately corresponding to RTT lengths.

Specifically, the type of the data may be represented by using different logical channels, and in this case, may be corresponding to a logical channel number identifier by using an RTT length; or
the type of the data may be represented by using different logical channel groups, and in this case, may be corresponding to a logical channel group identifier by using an RTT length; or
the type of the data may be represented by using different radio bearers, and in this case, may be corresponding to a radio bearer identifier by using an RTT length; or
the type of the data may be represented by using different data flows, and in this case, may be corresponding to a data flow number identifier by using an RTT length. The different data flows may be data flows with different IP addresses or with different IP addresses and different port numbers.

It may be understood that, the foregoing correspondence between a data type and an RTT length may be one-to-one, one-to-many, or many-to-one. This is not specifically limited in this embodiment of the present invention.

Optionally, when multiple carriers are configured for the user equipment, different carriers may use different RTT lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

The receiving unit 1601 receives the seventh control message sent by the base station by using a control channel. Exemplarily, the seventh control message may be sent by the base station by using physical layer signaling. Further, the seventh control message may be a DCI message. There are at least two types of control channels, and different types of control channels are corresponding to different RTT lengths.

Specifically, different types of control channels indicate control channels with different channel resources, where the channel resource includes a time-domain resource and a frequency-domain resource.

The determining unit 1602 determines, according to the type of the control channel for receiving the control message, the corresponding RTT length for transmitting the data.

Exemplarily, it is assumed that there are two types of RTT lengths, which are a first RTT and a second RTT respectively, where a length of the first RTT is greater than a length of the second RTT. Further, the control channel may be a physical downlink control channel (PDCCH, Physical Downlink Control channel), or an enhanced physical downlink control channel (EPDCCH, Enhanced Physical Downlink Control Channel). For example, the PDCCH is corresponding to the first RTT, and the EPDCCH is corresponding to the second RTT. That is, if a DCI message is detected on the EPDCCH corresponding to the second RTT, it is determined that an RTT length for current data transmission is the second RTT; or if a DCI message is detected on the PDCCH, it is determined that an RTT length for current data transmission is the first RTT. Further, for the PDCCH, a symbol 0 and a symbol 1 are corresponding to the first RTT, and the third symbol is corresponding to the second RTT; or for the EPDCCH, subcarriers n-m or PRBs n-m are corresponding to the first RTT, and subcarriers i-k or PRBs i-k are corresponding to the second RTT.

In actual application, if there are two or more types of RTTs, more control channels need to be designed for scheduling data. For example, in the first N symbols of each TTI (where N is greater than or equal to 0), the PDCCH is designed according to a requirement, and/or a new EPDCCH is designed for scheduling data. For example, in the $M^{th}$ to the $N^{th}$ subcarriers or PRBs of each TTI (where M is greater than or equal to 0, N is greater than or equal to 0, and N is greater than or equal to M), the EPDCCH is designed according to a requirement, and the user equipment transmits data by listening to the PDCCH and the EPDCCH.

The transmission unit 1603 performs transmission of the data with the base station according to the RTT length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

It may be understood that, the foregoing embodiments may be separately or jointly implemented. This is not specifically limited in the embodiments of the present invention.

In actual application, there is a timing relationship between sending and transmission of a data packet in a radio network, and a network side needs to consider both scenarios of two types of RTTs existing before and after hardware improvement. As shown in FIG. 6, in a scenario in which an RTT is 8 ms, for a data packet sent at moment n, a feedback is received at moment n+4; in a scenario in which an RTT is 4 ms, because a processing delay is reduced, for a data packet sent at moment n, a feedback is received at moment n+2. Therefore, when there are two different types of RTT lengths in the network, collision may occur in both an uplink feedback and a downlink feedback according to a current transmission mechanism. For the downlink feedback, transmission of the downlink feedback is sent on a PUCCH. As shown in FIG. 6, when a PDCCH resource used in an HARQ process 0 of a normal RTT is the same as a PDCCH resource used during DCI sending in an HARQ process 2 of a shorten RTT, a feedback for the HARQ process 0 conflicts with a feedback for the HARQ process 2.

Therefore, improvement is made to a computation manner of a resource for data transmission in an embodiment of the present invention. Exemplarily, in computation of a feedback resource, operations processes of the units of the user equipment include:

the receiving unit 1601 receives the control message sent by the base station. Specifically, the control message is used to indicate the RTT length for transmitting the data by the user equipment and the base station.

The determining unit 1602 determines, according to the control message, the RTT length corresponding to the data transmitted between the user equipment and the base station. Exemplarily, there may be a first RTT and a second RTT, and the first RTT is greater than the second RTT.

The RTT length may be indicated by using a specific time value, for example, 4 ms; or may be indicated by using a quantity of TTIs, for example, eight TTIs; or may be indicated by using a quantity of OFDM symbols, for example, twenty OFDM symbols. It may be understood that, specific representation and implementation of the RTT length may be determined according to an actual situation, and are not limited herein.

It may be understood that, there may be two or more types of RTT lengths. Exemplarily, if there may be two types of RTT lengths, the control message may indicate one type of RTT length, so that the user equipment determines which type of RTT is used to send or receive corresponding data. Optionally, the control message may indicate two types of RTT lengths, so that the user equipment determines sending or receiving of data to which two types of RTTs are separately corresponding. In actual application, an implementation manner of the control message may be determined according to an actual situation, and is not specifically limited herein.

The resource determining unit 1604 determines, according to the RTT length, the resource for performing transmission of the data with the base station, so that the user equipment and the base station transmit, to each other by using different resources, data corresponding to different RTT lengths.

In actual application, according to an RTT length indicated by the RTT identifier, an offset corresponding to the TTI length is added during computation of a resource used for sending or receiving data.

Exemplarily, if transmission of the feedback information is an uplink feedback of downlink data, the user equipment determines that a frequency domain resource for the feedback meets the following formulas, where $n_{\mathrm{PUCCH}}^{(1,\tilde{p}_0)}$ is a frequency domain resource location corresponding to a port 0, and $n_{\mathrm{PUCCH}}^{(1,\tilde{p}_1)}$ is a frequency domain resource location corresponding to a port 1.

When a PDCCH is used for transmission, formula 1 and formula 2 are met:

$$\text{formula 1:} \quad n_{\text{PUCCH}}^{(1,\tilde{p}_0)} = n_{\text{CCE}} + N_{\text{PUCCH}}^{(1)} + \textit{offset} \,;$$

and

$$\text{formula 2:} \quad n_{\text{PUCCH}}^{(1,\tilde{p}_1)} = n_{\text{CCE}} + 1 + N_{\text{PUCCH}}^{(1)} + \textit{offset} \,;$$

where

$n_{\text{CCE}}$ is a lowest, highest, or specific control channel element CCE location of a physical downlink control channel PDCCH occupied by a scheduling command that is of the downlink data and is for scheduling the downlink data, $N_{\text{PUCCH}}^{(1)}$ is a frequency domain start location of a physical uplink control channel PUCCH, and *offset* is the offset and is an integer.

Specifically, in this embodiment of the present invention, only computation manners of frequency domain resources of the port 0 and the port 1 are described. However, in actual application, there may be multiple ports, and for a specific computation manner, reference may be made to formula 2. That is, if a frequency domain resource of a port n is to be computed, $n_{\text{PUCCH}}^{(1,\tilde{p}n)} = n_{\text{CCE}} + n + N_{\text{PUCCH}}^{(1)} + \textit{offset}$.

In actual application, the offset is notified by the base station by using higher layer signaling, or is set in a DCI message. Specifically, the offset may be set in an "HARQ-ACK resource offset domain" in DCI. $N_{\text{PUCCH}}^{(1)}$ and *offset* may be combined into one parameter, and the parameter represents a frequency domain start location that is of a PUCCH with the offset.

Further, if transmission of feedback information is an uplink feedback of downlink data, when an EPDCCH is used, and EPDCCH transmission is distributed transmission, computation of a feedback resource meets formula 3 and formula 4:

$$\text{formula 3:} \quad n_{\text{PUCCH}}^{(1,\tilde{p}_0)} = n_{\text{ECCE,q}} + \Delta_{ARO} + N_{\text{PUCCH,q}}^{(e1)} + \textit{offset} \,;$$

and

$$\text{formula 4:} \quad n_{\text{PUCCH}}^{(1,\tilde{p}_1)} = n_{\text{ECCE,q}} + 1 + \Delta_{ARO} + N_{\text{PUCCH,q}}^{(e1)} + \textit{offset} \,;$$

or

if transmission of feedback information is an uplink feedback of downlink data, when an EPDCCH is used, and EPDCCH transmission is centralized transmission, computation of a feedback resource meets formula 5 and formula 6:

$$\text{formula 5:} \quad n_{\text{PUCCH}}^{(1,\tilde{p}_0)} = \left\lfloor \frac{n_{\text{ECCE,q}}}{N_{RB}^{ECCE,q}} \right\rfloor \cdot N_{RB}^{ECCE,q} + n' + \Delta_{ARO} + N_{\text{PUCCH,q}}^{(e1)} + \textit{offset} \,;$$

and

$$\text{formula 6:} \quad n_{\text{PUCCH}}^{(1,\tilde{p}_1)} = \left\lfloor \frac{n_{\text{ECCE,q}}}{N_{RB}^{ECCE,q}} \right\rfloor \cdot N_{RB}^{ECCE,q} + 1 + n' + \Delta_{ARO} + N_{\text{PUCCH,q}}^{(e1)} + \textit{offset} \,;$$

where

$n_{\text{ECCE,q}}$ is a lowest, highest, or specific control channel element CCE location of an EPDCCH-PRB-set q used by an enhanced physical downlink control channel EPDCCH occupied by a scheduling command that is of the downlink data and is for scheduling the downlink data, $N_{\text{PUCCH,q}}^{(e1)}$ is a parameter configured by using higher layer signaling, $\Delta ARQ$ is a parameter notified by using physical layer control signaling, $N_{RB}^{ECCE,q}$ is a quantity of CCEs of each PRB in the EPDCCH-PRB-set q, n' is determined by an antenna port, and *offset* is the offset and is an integer.

Exemplarily, if transmission of the feedback information is a downlink feedback of uplink data, during computation of a resource used for sending or receiving data, the user equipment determines that a resource $(n_{PHICH}^{group}, n_{PHICH}^{seq})$ for the feedback meets formula 7 and formula 8, where $n_{PHICH}^{group}$ is a group number of a physical hybrid automatic repeat request indicator channel PHICH, and $n_{PHICH}^{seq}$ is an orthogonal sequence number in a group corresponding to the group number;

$$\text{formula 7 is } \quad n_{PHICH}^{group} = (I_{PRB\_RA} + n_{DMRS}) \bmod N_{PHICH}^{group} + I_{PHICH} N_{PHICH}^{group} + N_{group1} ;$$

and

$$\text{formula 8 is } \quad n_{PHICH}^{seq} = (\lfloor I_{PRB\_RA} / N_{PHICH}^{group} \rfloor + n_{DMRS}) \bmod 2 N_{SF}^{PHICH} ;$$

where

$n_{DMRS}$ is cyclic shift mapping of a demodulation reference signal DMRS domain indicated by using uplink DCI on a latest PDCCH;

$N_{SF}^{PHICH}$ is a spreading factor of the PHICH;

$I_{PRB\_RA}$ indicates that the first code word is a lowest PRB index of a PUSCH indicated by the uplink DCI, and that the second code word is a lowest PRB index+1 of the PUSCH indicated by the uplink DCI;

$N_{PHICH}^{group}$ is a group amount of the PHICH; and

$N_{group1}$ is an offset.

The transmission unit 1603 performs transmission of the data with the base station by using the resource.

It may be understood that, this embodiment of the present invention and each foregoing embodiment may be separately or jointly implemented. This is not specifically limited in this embodiment of the present invention.

In this embodiment of the present invention, according to an RTT length indicated by the RTT identifier, an offset corresponding to the RTT length is added during computation of a resource used for sending or receiving data. Therefore, in a transmission scenario of data corresponding to two types of RTTs, the data corresponding to the two types of RTTs can be staggered on a frequency domain resource, and a conflict between two types of data is avoided.

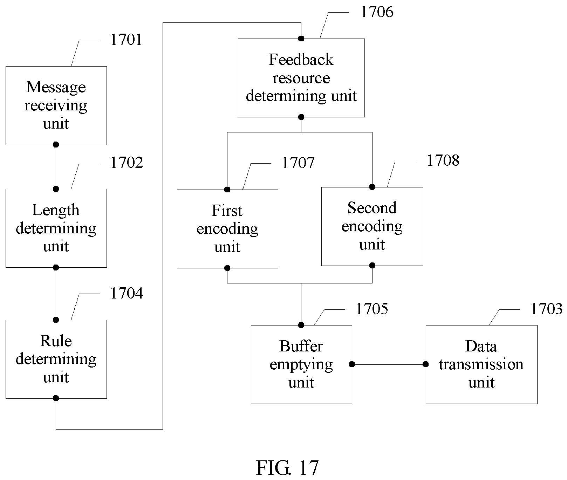

In a radio communications system, a transmission delay may further be reduced by reducing a TTI. Likewise, in actual application, there may be at least two types of TTIs. Therefore, an embodiment of the present invention further provides a communications mechanism in which at least two types of TTIs coexist. For a logical structure of the communications mechanism, refer to FIG. 17. Another embodiment of user equipment in an embodiment of the present invention includes:

a message receiving unit 1701, configured to receive a control message sent by the base station, where the control message is used to determine an RTT length corresponding to data transmitted between the user equipment and the base station;

a length determining unit 1702, configured to determine, according to the control message, the TTI length corresponding to the data transmitted between the user equipment and the base station; and

a data transmission unit 1703, configured to perform transmission of the data with the base station according to the TTI length.

Specifically, in a scenario in which a TTI length is directly indicated by a control message, the message receiving unit is specifically configured to:

receive a first control message sent by the base station, where the first control message is used to indicate the corresponding TTI length for transmitting the data; and
the length determining unit is specifically configured to:

determine, according to the first control message, the corresponding TTI length for transmitting the data.

Specifically, in a scenario in which a TTI length is indicated by a TTI identifier,
the message receiving unit is specifically configured to:

receive a second control message sent by the base station, where the second control message is used to notify a TTI length corresponding to a transmission time interval TTI identifier; and
receive a third control message sent by the base station, where the third control message is downlink control information that includes the TTI identifier, and the TTI identifier is used to indicate the corresponding TTI length for transmitting the data; and
the length determining unit is specifically configured to:

determine, according to the TTI identifier, the corresponding TTI length for transmitting the data.

Specifically, in a scenario in which a TTI length is indicated by an RNTI scrambling manner,
the message receiving unit is specifically configured to:

receive a second control message sent by the base station by using higher layer signaling, where the fourth control message is used to notify a TTI length corresponding to an RNTI scrambling manner; and
receive a fifth control message sent by the base station by using physical layer signaling, where an RNTI scrambling manner for the fifth control message is corresponding to the TTI length; and
the length determining unit is specifically configured to:

perform RNTI descrambling on the fifth control message, and determine, according to a manner of performing RNTI descrambling on the fourth control message, the corresponding TTI length for transmitting the data.

Specifically, in a scenario in which a TTI length is indicated by a control channel,
the message receiving unit is specifically configured to:

receive a sixth control message sent by the base station, where the sixth control message is used to notify a TTI length corresponding to a type of a control channel; and
receive a seventh control message sent by the base station by using a control channel, where there are at least two types of control channels, and different types of control channels are corresponding to different TTI lengths; and
the length determining unit is specifically configured to:

determine, according to a type of the control channel for receiving the seventh control message, the corresponding TTI length for transmitting the data.

Specifically, the control message is sent by the base station by using higher layer signaling or physical layer signaling.
Specifically, the control message is further used to instruct to use a type that is of data needing to be transmitted and is corresponding to a TTI length.
Specifically, the message receiving unit is further configured to:

receive, by the user equipment, a TTI configuration parameter sent by the base station, where the TTI configuration parameter includes any one or a combination of at least two of a DCI scrambling manner, indication information of a TTI length type, a sounding reference signal SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, transport block size TBS table configuration information for using a TTI, resource scheduling granularity information for using a TTI, or EPDCCH resource location information for using a TTI.

Specifically, the user equipment further includes:

a rule determining unit 1704, configured to determine a sending and receiving rule of the data according to the TTI length, where different TTI lengths are corresponding to different sending and receiving rules, and the sending and receiving rule includes resources corresponding to service data and feedback information during sending or receiving, and a data transmission time sequence relationship.

The data transmission unit is further configured to:

send and receive, by the user equipment, the data according to the determined sending and receiving rule.

Specifically, the user equipment further includes:

a buffer emptying unit 1705, configured to: determine whether a TTI length corresponding to data transmitted by the user equipment last time changes, and if yes, empty an HARQ buffer, and then perform the step of sending and receiving the data according to the determined sending and receiving rule.

Specifically, the user equipment further includes:

a feedback resource determining unit 1706, configured to determine a feedback resource for transmitting the feedback information, where feedback information corresponding to different TTI lengths uses different feedback resources, the feedback resource exists in each TTI length corresponding to the feedback resource, and the feedback resource includes a PHICH channel resource, a PRB number for transmitting data, and a frame number or a subframe number for transmitting data.

Specifically, the user equipment further includes:

a first encoding unit 1707, configured to feed back a channel quality indicator CQI to the base station by using a feedback resource corresponding to the determined TTI length, where separate encoding is performed on the CQI in each TTI, or joint encoding is performed on the CQI in a TTI included in each subframe; and
a second encoding unit 1708, configured to send uplink feedback information of downlink data to the base station by using a feedback resource corresponding to the determined TTI length, where separate encoding is performed on the uplink feedback information in each TTI, or joint encoding is performed on the uplink feedback information in a TTI included in each subframe.

Specific operations of the units of the user equipment configured to execute a TTI length based data transmission method are described in the following and include:

the message receiving unit 1701 receives the TTI configuration parameter sent by the base station, and the TTI configuration parameter includes any one or a combination of at least two of a DCI scrambling manner, indication information of a TTI length type, a sounding reference signal (SRS, Sounding Reference Signal) configuration parameter corresponding to a TTI, demodulation reference signal (DM-RS, DeModulation RS) configuration information for using a TTI, SR configuration information for using a TTI, feedback resource configuration information for using a TTI, feedback rule configuration information for using a TTI, PDCCH resource location information for using a TTI, transport block size (Transport Block Size, TBS) table configuration information for using a TTI, resource scheduling granularity information for using a TTI, or EPDCCH resource location information for using a TTI.

It is assumed that there are two types of TTI lengths, which are a first TTI and a second TTI respectively, where a length of the first TTI is greater than a length of the second TTI. In actual application, a configuration parameter of the first TTI may have been configured in the user equipment or specified in a protocol, and therefore the TTI configuration parameter received by the user equipment in this embodiment of the present invention may particularly refer to a configuration parameter of the second TTI. Optionally, if a configuration parameter of the first TTI has not been configured, the TTI configuration parameter received by the user equipment in this embodiment of the present invention may include configuration parameters of the first TTI and the second TTI.

It is set in the DM-RS configuration information that, for a newly-defined DM-RS (that is, a DM-RS corresponding to the second TTI), the DM-RS signal exists in each second TTI. In addition, the base station notifies the user equipment by using dedicated signaling, where the dedicated signaling includes necessary information such as location information, encoding information, and period information of the DM-RS.

It is set in the SRS configuration information that the user equipment sends an SRS in a second TTI configured with an SRS resource, and the base station performs SRS measurement in the second TTI configured with the SRS resource.

The TBS table configuration information may indicate a TBS table corresponding to the second TTI of the user equipment, and the TBS table may be specified in a protocol, or configured by using a configuration message.

The resource scheduling granularity information may indicate a smallest scheduling granularity corresponding to the second TTI, such as six PRBs or ten PRBs, or 72 subcarriers or 120 subcarriers. When a TTI is reduced, signaling overheads can be reduced by increasing a scheduling granularity.

The length determining unit 1702 determines the TTI length corresponding to the data transmitted between the user equipment and the base station. Specifically, there are at least two types of TTI lengths.

In actual application, the user equipment determines the TTI length in multiple manners, and specific manners are separately described in subsequent embodiments.

Before the user equipment performs transmission of the data with the base station according to the TTI length, the rule determining unit 1704 may determine the sending and receiving rule of the data according to the TTI length, where different TTI lengths are corresponding to different sending and receiving rules, and the sending and receiving rule includes resources corresponding to service data and feedback information during sending or receiving, and a data transmission time sequence relationship.

Exemplarily, if there are two types of TTI lengths, which are a first TTI and a second TTI respectively, where a length of the first TTI is greater than a length of the second TTI, the sending and receiving rule includes a first sending rule, a first receiving rule, a second sending rule, and a second receiving rule. The first sending rule and the first receiving rule are a sending and receiving rule corresponding to the first TTI, and the second sending rule and the second receiving rule are a sending and receiving rule corresponding to the second TTI.

In actual application, specific content of the sending and receiving rule may be sent by the base station to the user equipment by using higher layer signaling. Further, the sending and receiving rule may include a computation manner of a resource used for performing transmission of the data by the user equipment and the base station. If the sending and receiving rule is the first sending rule and the first receiving rule corresponding to the first TTI, the computation manner of the resource may be the same as that in the prior art. If the sending and receiving rule is the second sending rule and the second receiving rule corresponding to the second TTI, the resource may be a new resource notified by the base station by using higher layer signaling, or the base station may notify a new computation manner. A specific implementation manner is not limited herein.

The data transmission unit 1703 performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

Exemplarily, if there are two types of TTI lengths, which are a first TTI and a second TTI respectively, where a length of the first TTI is greater than a length of the second TTI, and when transmission of the data is transmission of feedback information,

if a current transmission scenario is downlink transmission performed by the user equipment, and it is determined that the TTI length corresponding to the data is the first TTI, the data is received by using the first receiving rule. The user equipment determines whether a TTI length corresponding to data transmitted by the user equipment last time changes, and if yes, the user equipment empties an HARQ buffer, and then performs the step of receiving the data by using the first receiving rule, or if yes, and previous data is not successfully transmitted in an HARQ process used in data transmission, the user equipment may continue to retransmit the data. After receiving the data by using the first receiving rule, the user equipment feeds back the data to the base station by using a first feedback rule corresponding to the first TTI.

If a current transmission scenario is downlink transmission performed by the user equipment, and it is determined that the TTI length corresponding to the data is the second TTI, the data is received by using the second receiving rule. The user equipment determines whether a TTI length corresponding to data transmitted by the user equipment last time changes, and if yes, the user equipment empties an HARQ buffer, and then performs the step of receiving the data by using the second receiving rule, or if yes, and previous data is not successfully transmitted in an HARQ process used in data transmission, the user equipment may continue to retransmit the data. After receiving the data by using the second receiving rule, the user equipment feeds back the data to the base station by using a second feedback rule corresponding to the second TTI. A first feedback resource corresponding to the first feedback rule is different from a second feedback resource corresponding to the second feedback rule, and the second feedback resource exists in each second TTI length. The feedback resource includes a PHICH channel resource, a PRB number for transmitting data, and a frame number or a subframe number for transmitting data.

Further, for a feedback of a CQI, the user equipment feeds back a channel quality indicator CQI to the base station by using a feedback resource corresponding to the determined TTI length, where separate encoding is performed on the CQI in each TTI, or joint encoding is performed on the CQI in a TTI included in each subframe.

For a feedback of uplink feedback information, the user equipment sends uplink feedback information of downlink data to the base station by using a feedback resource corresponding to the determined TTI length, where separate encoding is performed on the uplink feedback information in each TTI, or joint encoding is performed on the uplink feedback information in a TTI included in each subframe.

If a current transmission scenario is uplink transmission performed by the user equipment, and it is determined that the TTI length corresponding to the data is the first TTI, the data is sent by using the first sending rule. Before sending the data by using the first sending rule, the user equipment determines whether a TTI length corresponding to data transmitted by the user equipment last time changes, and if yes, the user equipment empties an HARQ buffer, and then performs the step of sending the data by using the first sending rule, or if yes, and previous data is not successfully transmitted in an HARQ process used in data transmission, the user equipment may continue to retransmit the data. After sending the data by using the first sending rule, the user equipment feeds back the data to the base station by using a first feedback rule corresponding to the first TTI.

If a current transmission scenario is uplink transmission performed by the user equipment, and it is determined that the TTI length corresponding to the data is the second TTI, the data is sent by using the second sending rule. Before sending the data by using the second sending rule, the user equipment determines whether a TTI length corresponding to data transmitted by the user equipment last time changes, and if yes, the user equipment empties an HARQ buffer, and then performs the step of sending the data by using the second sending rule, or if yes, and previous data is not successfully transmitted in an HARQ process used in data transmission, the user equipment may continue to retransmit the data. After sending the data by using the second sending rule, the user equipment feeds back the data to the base station by using a second feedback rule corresponding to the second TTI. A first feedback resource corresponding to the first feedback rule is different from a second feedback resource corresponding to the second feedback rule, and the second feedback resource exists in each second TTI. Further, when an indication indicating that the TTI changes, if there is still data in the HARQ buffer, the TTI length may be modified after transmission or retransmission is completed.

In this embodiment of the present invention, user equipment determines a TTI length for transmitting the data with the base station, and may perform transmission of the data with the base station in a data sending or receiving manner adapted to the corresponding TTI length. Therefore, a conflict problem caused by different TTI lengths in a data transmission process is resolved.

Exemplarily, in a scenario in which a TTI length is directly indicated by a control message, the message receiving unit 1701 receives the first control message sent by the base station, where the first control message is used to indicate the corresponding TTI length for transmitting the data.

The first control message may be sent by using higher layer signaling or physical layer signaling.

The length determining unit 1702 determines, according to the first control message, the corresponding TTI length for transmitting the data.

Further, the first control message may be further used to instruct to use types that are of data needing to be transmitted and are separately corresponding to TTI lengths. After a TTI length is configured for the first time by using the first control message, the user equipment stores a correspondence table between different data and a TTI length. When the user equipment and the base station are to transmit data to each other, the user equipment may search the correspondence table according to a type of the data for a TTI length to be used for current sending or receiving of the data. Before the base station updates a correspondence between different data and a TTI length for another time by using higher layer signaling, the user equipment may determine the TTI length by using the correspondence table each time when performing transmission of the data with the base station.

Specifically, the type of the data may be represented by using different logical channels, and in this case, may be corresponding to a logical channel number identifier by using a TTI length; or

the type of the data may be represented by using different logical channel groups, and in this case, may be corresponding to a logical channel group identifier by using a TTI length; or

the type of the data may be represented by using different radio bearers, and in this case, may be corresponding to a radio bearer identifier by using a TTI length; or

the type of the data may be represented by using different data flows, and in this case, may be corresponding to a data flow number identifier by using a TTI length. The different data flows may be data flows with different IP addresses or with different IP addresses and different port numbers.

It may be understood that, the foregoing correspondence between a data type and a TTI length may be one-to-one, one-to-many, or many-to-one. This is not specifically limited in this embodiment of the present invention.

Optionally, when multiple carriers are configured for the user equipment, different carriers may use different TTI lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

It may be understood that, the base station may further use another control message to independently implement a function of instructing to use types that are of data needing to be transmitted and are separately corresponding to different TTI lengths. For example, before sending the first control message, the base station uses the another control message to instruct to use the types that are of the data needing to be transmitted and are separately corresponding to the different TTI lengths. A specific implementation manner may be determined according to an actual situation, and is not limited herein.

The data transmission unit 1703 performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

In actual application, a control message sent by the base station may be further used to indicate a correspondence between a TTI length and a scheduling granularity. The control message may be an RRC configuration message, and the control message includes the correspondence between a TTI length and a scheduling granularity. For example, a longer TTI is corresponding to a coarser scheduling granularity, and a shorter TTI is corresponding to a finer scheduling granularity, or a longer TTI is corresponding to a finer scheduling granularity, and a shorter TTI is corresponding to a coarser scheduling granularity.

After receiving the foregoing control message, a user terminal performs communication according to the relationship that is between a TTI length and a scheduling granularity and is indicated by the control message, until an indication of the control message is received again. For example, the control message indicates that a scheduling granularity of a first TTI length is n TTIs, and a scheduling granularity of a second TTI length is m TTIs. In this case, when the user terminal performs transmission by using the first TTI length, the scheduling granularity of the first TTI length is n, that is, transmission may be continuously performed in n TTIs each time when a scheduling command is received; and when the user terminal performs transmission by using the second TTI length, the scheduling granularity of the second TTI length is m, that is, transmission may be continuously performed in m TTIs each time when a scheduling command is received, where m and n are integers greater than 1.

Exemplarily, in a scenario in which a TTI length is indicated by a TTI identifier,
the message receiving unit 1701 receives the second control message sent by the base station, where the second control message is used to notify a TTI length corresponding to a TTI identifier.

The second control message may be sent by the base station by using higher layer signaling.

Further, the second control message may be further used to instruct to use a type that is of data needing to be transmitted and is corresponding to a TTI length.

Specifically, the type of the data may be represented by using different logical channels, and in this case, may be corresponding to a logical channel number identifier by using a TTI length; or
the type of the data may be represented by using different logical channel groups, and in this case, may be corresponding to a logical channel group identifier by using a TTI length; or
the type of the data may be represented by using different radio bearers, and in this case, may be corresponding to a radio bearer identifier by using a TTI length; or
the type of the data may be represented by using different data flows, and in this case, may be corresponding to a data flow number identifier by using a TTI length. The different data flows may be data flows with different IP addresses or with different IP addresses and different port numbers.

It may be understood that, the foregoing correspondence between a data type and a TTI length may be one-to-one, one-to-many, or many-to-one. This is not specifically limited in this embodiment of the present invention.

Optionally, when multiple carriers are configured for the user equipment, different carriers may use different TTI lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

Further, the second control message may be a message that includes a TTI configuration parameter, and the TTI configuration parameter includes any one or a combination of at least two of a DCI scrambling manner, indication information of a TTI length type, an SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, TBS table configuration information for using a TTI, resource scheduling granularity information for using a TTI, or EPDCCH resource location information for using a TTI.

It is assumed that there are two types of TTI lengths, which are a first TTI and a second TTI respectively, where a length of the first TTI is greater than a length of the second TTI. In actual application, a configuration parameter of the first TTI may have been configured in the user equipment or specified in a protocol, and therefore the TTI configuration parameter received by the user equipment in this embodiment of the present invention may particularly refer to a configuration parameter of the second TTI. Optionally, if a configuration parameter of the first TTI has not been configured, the TTI configuration parameter received by the user equipment in this embodiment of the present invention may include configuration parameters of the first TTI and the second TTI.

The message receiving unit 1701 receives the third control message sent by the base station by using physical layer signaling, where the third control message includes the TTI identifier, and the TTI identifier is used to indicate the corresponding TTI length for transmitting the data.

The third control message may be sent by the base station by using physical layer signaling. Further, the third control message may be a DCI message.

The third control message may be a newly-defined DCI message, and a TTI identifier (shortenTTI) used for indicating a TTI length is added to the DCI message.

The length determining unit 1702 determines, according to the TTI identifier, the corresponding TTI length for transmitting the data.

It is assumed that there are two types of TTI lengths, which are a first TTI and a second TTI respectively, where a length of the first TTI is greater than a length of the second TTI. The TTI identifier is indicated by shortenTTI, and if shortenTTI=0, it is determined that the corresponding TTI length for transmitting the data is the first TTI; or if shortenTTI=1, it is determined that the corresponding TTI length for transmitting the data is the second TTI, and a data sending and receiving rule corresponding to the second TTI is used. Alternatively, the TTI identifier directly indicates an RTT length. This is not specifically limited in this embodiment of the present invention.

The data transmission unit 1703 performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

Exemplarily, in a scenario in which a TTI length is indicated by an RNTI scrambling manner, the message receiving unit 1701 receives the fourth control message sent by the base station by using higher layer signaling, where the fourth control message is used to notify a TTI length corresponding to an RNTI scrambling or descrambling manner.

The fourth control message may be sent by the base station by using higher layer signaling.

Different TTI lengths are corresponding to different RNTI scrambling or descrambling manners.

Further, the fourth control message may be further used to instruct to use types that are of data needing to be transmitted and are separately corresponding to TTI lengths.

Specifically, the type of the data may be represented by using different logical channels, and in this case, may be corresponding to a logical channel number identifier by using a TTI length; or

the type of the data may be represented by using different logical channel groups, and in this case, may be corresponding to a logical channel group identifier by using a TTI length; or

the type of the data may be represented by using different radio bearers, and in this case, may be corresponding to a radio bearer identifier by using a TTI length; or

the type of the data may be represented by using different data flows, and in this case, may be corresponding to a data flow number identifier by using a TTI length. The different data flows may be data flows with different IP addresses or with different IP addresses and different port numbers.

It may be understood that, the foregoing correspondence between a data type and a TTI length may be one-to-one, one-to-many, or many-to-one. This is not specifically limited in this embodiment of the present invention.

Optionally, when multiple carriers are configured for the user equipment, different carriers may use different TTI lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

The fourth control message may be a message that includes a TTI configuration parameter, and the TTI configuration parameter includes any one or a combination of at least two of a DCI scrambling manner (where a correspondence between an RNTI scrambling manner and different TTI lengths, and a corresponding RNTI descrambling manner are configured), indication information of a TTI length type, an SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, TBS table configuration information for using a TTI, resource scheduling granularity information for using a TTI, or EPDCCH resource location information for using a TTI.

It is assumed that there are two types of TTI lengths, which are a first TTI and a second TTI respectively, where a length of the first TTI is greater than a length of the second TTI. In actual application, a configuration parameter of the first TTI may have been configured in the user equipment, and therefore the TTI configuration parameter received by the user equipment in this embodiment of the present invention may particularly refer to a configuration parameter of the second TTI. Optionally, if a configuration parameter of the first TTI has not been configured, the TTI configuration parameter received by the user equipment in this embodiment of the present invention may include configuration parameters of the first TTI and the second TTI.

The message receiving unit 1701 receives the fifth control message sent by the base station. Further, the fifth control message may be a DCI message.

The fifth control message may be sent by the base station by using physical layer signaling. Further, the fifth control message may be a DCI message.

In actual application, to distinguish different TTI lengths, a base station side may scramble the DCI message in different RNTI scrambling manners.

The fifth control message may be a newly-defined DCI message. When shortenTTI=1 (that is, shortenTTI is the second TTI), a new RNTI (that is, an RNTI that is corresponding to the RTT length and is notified by using the fourth control message) is used for scrambling. The new DCI message is transmitted on a PDCCH, and when receiving the DCI message, the user equipment descrambles the fifth control message by using the RNTI that is corresponding to the RTT length and is notified by using the fourth control message.

The length determining unit 1702 performs RNTI descrambling on the fifth control message, and determines, according to a manner of performing RNTI descrambling on the fifth control message, the corresponding TTI length for transmitting the data.

It is assumed that there are two types of TTI lengths, which are a first TTI and a second TTI respectively, where a length of the first TTI is greater than a length of the second TTI. If descrambling on the DCI performed by using a first RNTI succeeds, it is determined that the corresponding RTT length for transmitting the data is the first TTI, or if descrambling on the DCI performed by using a second RNTI succeeds, it is determined that the corresponding TTI for transmitting the data is the second TTI.

The data transmission unit 1703 performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

If descrambling on the DCI performed by using the first RNTI (that is, a descrambling manner corresponding to a long TTI) succeeds, a data sending and receiving rule corresponding to the first TTI is used; or if descrambling on the DCI performed by using the second RNTI (that is, a descrambling manner corresponding to a short TTI) succeeds, a data sending and receiving rule corresponding to the second TTI is used.

Exemplarily, in a scenario in which a TTI length is indicated by a control channel,
the message receiving unit 1701 receives the sixth control message sent by the base station, where the sixth control message is used to notify a TTI length corresponding to a type of a control channel.

Specifically, different types of control channels indicate control channels with different channel resources, where the channel resource includes a time-domain resource and a frequency-domain resource.

In a time domain, the different channel resources may be different TTIs, different timeslots, different OFDM symbols, different subframes, different radio frames, or the like, and are not specifically limited in this embodiment of the present invention. In a frequency domain, the different channel resources may be different subcarriers, different physical resource blocks, different component carriers, or the like, and are not specifically limited in this embodiment of the present invention.

The sixth control message may be sent by the base station by using higher layer signaling.

Further, the sixth control message may be further used to instruct to use types that are of data needing to be transmitted and are separately corresponding to TTI lengths.

Specifically, the type of the data may be represented by using different logical channels, and in this case, may be corresponding to a logical channel number identifier by using a TTI length; or
the type of the data may be represented by using different logical channel groups, and in this case, may be corresponding to a logical channel group identifier by using a TTI length; or
the type of the data may be represented by using different radio bearers, and in this case, may be corresponding to a radio bearer identifier by using a TTI length; or

the type of the data may be represented by using different data flows, and in this case, may be corresponding to a data flow number identifier by using a TTI length. The different data flows may be data flows with different IP addresses or with different IP addresses and different port numbers.

It may be understood that, the foregoing correspondence between a data type and a TTI length may be one-to-one, one-to-many, or many-to-one. This is not specifically limited in this embodiment of the present invention.

Optionally, when multiple carriers are configured for the user equipment, different carriers may use different TTI lengths. In this case, different data types may be understood as corresponding to different carriers.

Further, in an inter-base station multi-stream aggregation scenario, base stations may also substitute for the foregoing carriers. An implementation method is similar, and details are not described herein repeatedly.

The message receiving unit 1701 receives the seventh control message sent by the base station by using the control channel, and the seventh control message may be sent by the base station by using physical layer signaling. Further, the seventh control message may be a DCI message. There are at least two types of control channels, and different types of control channels are corresponding to different TTI lengths.

The length determining unit 1702 determines, according to the type of the control channel for receiving the control message, the corresponding TTI length for transmitting the data.

It is assumed that there are two types of TTI lengths, which are a first TTI and a second TTI respectively, where a length of the first TTI is greater than a length of the second TTI. Further, the control channel may be a physical downlink control channel (PDCCH, Physical Downlink Control channel), or an enhanced physical downlink control channel (EPDCCH, Enhanced Physical Downlink Control Channel). The PDCCH is corresponding to the first TTI, and the EPDCCH is corresponding to the second TTI. That is, if a DCI message is detected on the EPDCCH corresponding to the second TTI, it is determined that a TTI length for current data transmission is the second TTI; or if a DCI message is detected on the PDCCH, it is determined that a TTI length for current data transmission is the first TTI. Further, for the PDCCH, a symbol 0 and a symbol 1 are corresponding to the first TTI, and a third symbol is corresponding to the second TTI; or for the EPDCCH, subcarriers n-m are corresponding to the first TTI, and subcarriers i-k are corresponding to the second TTI.

In actual application, if there are two or more types of TTIs, more control channels need to be designed for scheduling data. For example, in the first N symbols of each TTI (where N is greater than or equal to 0), the PDCCH is designed according to a requirement, and/or a new EPDCCH is designed for scheduling data. For example, in the $M^{th}$ to the $N^{th}$ subcarriers or PRBs of each TTI (where M is greater than or equal to 0, N is greater than or equal to 0, and N is greater than or equal to M), the EPDCCH is designed according to a requirement, and the user equipment transmits data by listening to the PDCCH and the EPDCCH.

The data transmission unit 1703 performs transmission of the data with the base station according to the TTI length. Specifically, that the user equipment performs transmission of the data with the base station includes: the user equipment receives service data sent by the base station, the user equipment sends service data to the base station, the user equipment sends feedback information to the base station, and the user equipment receives feedback information sent by the base station. Specifically, the feedback information may include an HARQ feedback. For example, after receiving the service data sent by the base station, the user equipment sends an HARQ feedback of the service data to the base station; or after sending the service data to the base station, the user equipment receives an HARQ feedback that is of the service data and is sent by the base station.

It may be understood that, the foregoing embodiments may be separately or jointly implemented. This is not specifically limited in the embodiments of the present invention.

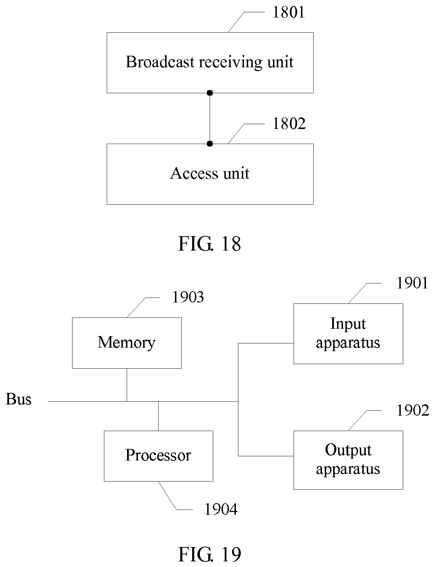

In actual application, a TTI length may be set for user equipment during initial access. Referring to FIG. 18, another embodiment of user equipment in an embodiment of the present invention includes the following.

The broadcast receiving unit 1801 is configured to receive a broadcast message sent by a base station, where the broadcast message includes a random access channel RACH resource and a preamble preamble that are corresponding to a second TTI, the second TTI is a type of TTI length, there is a first TTI and the second TTI, and the first TTI is greater than the second TTI.

Optionally, before the user equipment receives the broadcast message sent by the base station, the base station sends configuration parameters of a PRACH resource and the preamble to the user equipment by using the broadcast message.

The access unit 1802 is configured to: if the user equipment supports the second TTI, perform random access by using the RACH resource and the preamble that are corresponding to the second TTI.

After receiving the broadcast message, the user equipment determines whether the user equipment supports the second TTI, and if the user equipment supports the second TTI, the user equipment performs random access by using the PRACH resource and the preamble that are corresponding to the second TTI.

On a base station side, if the base station receives a preamble on a PRACH corresponding to the second TTI, it is considered that the user equipment may perform data transmission by using the second TTI, and perform data transmission with the user equipment by using a sending and receiving rule corresponding to the second TTI; or if the base station receives a preamble on an RACH corresponding to the first TTI, the base station performs data transmission with the user equipment by using a sending and receiving rule corresponding to the first TTI.

It may be understood that, each TTI embodiment and each RTT embodiment in the present invention may be separately or jointly implemented. This is not specifically limited in this embodiment of the present invention.

It may be understood that before the foregoing steps of each TTI embodiment and each RTT embodiment are performed, the user equipment may report a TTI capability and/or an RTT capability of the user equipment. Specifically, the user equipment may actively report the capability; or a network side performs querying, and then the user equipment reports the capability. A used message may be an RRC message, or a control message at a MAC layer, such as a MAC CE, or a Msg3 message, or a control message at a physical layer, such as a preamble. This is not specifically limited in this embodiment of the present invention.

Specifically, the user equipment may report information about a supported TTI length and/or a supported RTT length, or report only information about whether a short TTI is supported and/or a short RTT is supported.

Further, the base station performs TTI configuration and/or RTT configuration and data transmission in the foregoing embodiments according to capability information reported by the user equipment. Details are not described herein repeatedly.

Further, during a handover, a source base station may send the capability information of the user equipment to a target base station, so that after learning a capability of the user equipment, the target base station configures and uses a TTI and/or an RTT to perform data transmission. A specific message may be an X2 interface (an interface between base stations) message, or an S1 interface (an interface between a base station and a core network) message, and details are not described herein repeatedly.

Further, before or after reporting the capability of the user equipment, the user equipment receives a control message sent by the base station, to indicate capability information of a TTI and/or an RTT supported by the base station. In specific application, the control message may include a control message sent by using higher layer signaling, such as an RRC configuration message, or a broadcast message; may be a control message at a MAC layer, such as a MAC CE, or a Msg4 message; or may be a control message at a physical layer, such as a DCI message. The control message includes capability information of an eNodeB, and the capability information includes a TTI length and/or an RTT length that can be supported by the eNodeB.

When different TTIs and/or different RTTs coexist, avoidance of a conflict between physical resources used for the different TTIs and/or the different RTTs needs to be taken into consideration. A specific method is as follows:

The physical resources used for the different TTIs and/or the different RTTs are staggered in a time domain or a frequency domain. With reference to the foregoing embodiments, when the different TTI lengths and/or the different RTT lengths are being configured, the physical resources used for the different TTIs and/or the different RTTs may be simultaneously configured. The physical resource includes one or more of a PDCCH resource, an EPDCCH resource, a PDSCH resource, a PUSCH resource, a PUCCH resource, or a PHICH resource. This is not specifically limited in this embodiment of the present invention.

The following describes an embodiment of a base station in the present invention configured to execute the foregoing data transmission method. An embodiment of a base station in an embodiment of the present invention includes:

a sending unit, configured to send a control message to user equipment, where the control message is used to determine an RTT length corresponding to data transmitted between the user equipment and the base station, so that the user equipment performs transmission of the data with the base station according to the RTT length.

Specifically, in a scenario in which an RTT length is directly indicated by a control message, the control message includes a first control message, and the first control message is used to indicate the corresponding RTT length for transmitting the data.

Specifically, in a scenario in which an RTT length is indicated by an RTT identifier, the control message includes:

a second control message and a third control message, where
the second control message is used to notify an RTT length corresponding to a round-trip time RTT identifier, the third control message includes the RTT identifier, and the RTT identifier is used to indicate the corresponding RTT length for transmitting the data.

Specifically, in a scenario in which an RTT length is indicated by an RNTI scrambling manner, the control message includes:

a fourth control message and a fifth control message, where
the fourth control message is used to notify an RTT length corresponding to an RNTI scrambling manner, and an RNTI scrambling manner for the fifth control message is corresponding to the RTT length.

Specifically, in a scenario in which an RTT length is indicated by a control channel, the control message includes:

a sixth control message and a seventh control message, where
the sixth control message is used to notify an RTT length corresponding to a type of a control channel, the seventh control message is a control message sent by using different control channels, there are at least two types of control channels, and different types of control channels are corresponding to different RTT lengths.

The control message is sent by the base station by using higher layer signaling or physical layer signaling.
The control message is further used to instruct to use types that are of data needing to be transmitted and are separately corresponding to RTT lengths.
The following describes an embodiment of a base station in the present invention configured to execute the foregoing data transmission method. Another embodiment of a base station in an embodiment of the present invention includes:

a message sending unit, configured to send a control message to user equipment, where the control message is used to determine a TTI length corresponding to data transmitted between the user equipment and the base station, so that the user equipment performs transmission of the data with the base station according to the TTI length.

Specifically, in a scenario in which a TTI length is directly indicated by a control message,
the control message includes a first control message, and the first control message is used to indicate the corresponding TTI length for transmitting the data.
Specifically, in a scenario in which a TTI length is indicated by a TTI identifier,
the control message includes:

a second control message and a third control message, where
the second control message is used to notify a TTI length corresponding to a TTI identifier, the third control message includes the TTI identifier, and the TTI identifier is used to indicate the corresponding TTI length for transmitting the data.

Specifically, in a scenario in which a TTI length is indicated by an RNTI scrambling manner,
the control message includes:

a fourth control message and a fifth control message, where
the fourth control message is used to notify a TTI length corresponding to an RNTI scrambling manner, and an RNTI scrambling manner for the fifth control message is corresponding to the TTI length.

Specifically, in a scenario in which a TTI length is indicated by a control channel,
the control message includes:

a sixth control message and a seventh control message, where
the sixth control message is used to notify an RTT length corresponding to a type of a control channel, the seventh control message is a control message sent by using different control channels, there are at least two types of control channels, and different types of control channels are corresponding to different TTI lengths.

The control message is sent by the base station by using higher layer signaling or physical layer signaling.
The control message is further used to instruct to use types that are of data needing to be transmitted and are separately corresponding to different TTI lengths.
The following describes an embodiment of a base station in the present invention configured to execute the foregoing data transmission method. Another embodiment of a base station in an embodiment of the present invention includes:

a broadcast message sending unit, configured to send a broadcast message to user equipment, so that the user equipment performs random access according to a TTI length in the broadcast message and a TTI capability of the user equipment and by using a corresponding RACH resource and a corresponding preamble, where the broadcast message includes a random access channel RACH resource and a preamble that are corresponding to a second TTI, the second TTI is a type of TTI length, there is a first TTI and the second TTI, and the first TTI is greater than the second TTI.

In the base station embodiment, for a specific operation process, refer to an embodiment of the foregoing user equipment. Details are not described herein repeatedly.

Referring to FIG. 19, an embodiment of the present invention further provides user equipment, and the user equipment may include:

an input apparatus 1901, an output apparatus 1902, a memory 1903, and a processor 1904 (there may be one or more processors in the user equipment, and in FIG. 19, one processor is used as an example). In some embodiments of the present invention, the input apparatus 1901, the output apparatus 1902, the memory 1903, and the processor 1904 may be connected by using a bus or in another manner. In FIG. 19, a connection implemented by using a bus is used as an example.

The input apparatus 1901 is configured to:

receive a control message sent by a base station, where the control message is used to determine an RTT length corresponding to data transmitted between the user equipment and the base station.

The processor 1904 is configured to determine, according to the control message, the round-trip time RTT length corresponding to the data transmitted between the user equipment and the base station.

The output apparatus 1902 is configured to perform transmission of the data with the base station according to the RTT length.

Specifically, in a scenario in which an RTT length is directly indicated by a control message, the input apparatus 1901 is specifically configured to:

receive a first control message sent by the base station, where the first control message is used to indicate the corresponding RTT length for transmitting the data; and
the processor 1904 is specifically configured to:

determine, according to the first control message, the corresponding RTT length for transmitting the data.

Specifically, in a scenario in which an RTT length is indicated by an RTT identifier, the input apparatus 1901 is specifically configured to:

receive a second control message sent by the base station, where the second control message is used to notify an RTT length corresponding to an RTT identifier; and
receive a third control message sent by the base station, where the third control message includes the RTT identifier, and the RTT identifier is used to indicate the corresponding RTT length for transmitting the data; and
the processor 904 is specifically configured to:

determine, according to the RTT identifier, the corresponding RTT length for transmitting the data.

Specifically, in a scenario in which an RTT length is indicated by an RNTI scrambling manner, the input apparatus 1901 is specifically configured to:

receive a fourth control message sent by the base station, where the fourth control message is used to notify an RTT length corresponding to an RNTI scrambling manner; and
receive a fifth control message sent by the base station, where an RNTI scrambling manner for the fifth control message is corresponding to the RTT length; and
the processor 1904 is specifically configured to:

perform RNTI descrambling on the fifth control message, and determine, according to a manner of performing RNTI descrambling on the fourth control message, the corresponding RTT length for transmitting the data.

Specifically, in a scenario in which an RTT length is indicated by a control channel, the input apparatus 1901 is specifically configured to:

receive a sixth control message sent by the base station, where the sixth control message is used to notify an RTT length corresponding to a type of a control channel; and

receive a seventh control message sent by the base station by using a control channel, where there are at least two types of control channels, and different types of control channels are corresponding to different RTT lengths; and the processor 1904 is specifically configured to:

determine, according to a type of the control channel for receiving the seventh control message, the corresponding RTT length for transmitting the data.

Specifically, the control message is sent by the base station by using higher layer signaling or physical layer signaling.

Specifically, the control message is further used to instruct to use types that are of data needing to be transmitted and are separately corresponding to RTT lengths.

Specifically, the processor 1904 is further configured to determine, according to the RTT length, a resource for performing transmission of the data with the base station, where the user equipment and the base station transmit, to each other by using different resources, data corresponding to different RTT lengths.

The output apparatus 1902 is specifically configured to:

perform, by the user equipment, transmission of the data with the base station by using the resource.

Further, the processor 1904 is specifically configured to:

if transmission of the data is transmission of feedback information, add, according to the RTT length indicated by the RTT identifier, an offset corresponding to the RTT length when computing a resource used for transmitting the feedback information.

Specifically, the offset is notified by the base station by using higher layer signaling, or is set in a physical layer signaling message.

Further, the processor 1904 is specifically configured to: if transmission of the feedback information is an uplink feedback of downlink data, determine, by the user equipment, that a frequency domain resource for the feedback meets the following formulas, where $n_{\mathrm{PUCCH}}^{(1,\widetilde{p}_0)}$ is a frequency domain resource location corresponding to a port 0, and $n_{\mathrm{PUCCH}}^{(1,\widetilde{p}_1)}$ is a frequency domain resource location corresponding to a port 1.

When a PDCCH is used for transmission, formula 1 and formula 2 are met:

$$\text{formula 1:} \quad n_{\mathrm{PUCCH}}^{(1,\widetilde{p}_0)} = n_{\mathrm{CCE}} + N_{\mathrm{PUCCH}}^{(1)} + \mathit{offset}\,;$$

and

$$\text{formula 2:} \quad n_{\mathrm{PUCCH}}^{(1,\widetilde{p}_1)} = n_{\mathrm{CCE}} + 1 + N_{\mathrm{PUCCH}}^{(1)} + \mathit{offset}\,;$$

where

$n_{\mathrm{CCE}}$ is a lowest, highest, or specific control channel element CCE location of a physical downlink control channel PDCCH occupied by a scheduling command that is of the downlink data and is for scheduling the downlink data, $N_{\mathrm{PUCCH}}^{(1)}$ is a frequency domain start location of a physical uplink control channel PUCCH, and *offset* is the offset and is an integer.

When an EPDCCH is used and EPDCCH transmission is distributed transmission, formula 3 and formula 4 are met:

$$\text{formula 3:} \quad n_{\mathrm{PUCCH}}^{(1,\widetilde{p}_0)} = n_{\mathrm{ECCE,q}} + \Delta_{ARO} + N_{\mathrm{PUCCH,q}}^{(e1)} + \mathit{offset}\,;$$

and

$$\text{formula 4:} \quad n_{\text{PUCCH}}^{(1,\tilde{p}_1)} = n_{\text{ECCE},q} + 1 + \Delta_{ARO} + N_{\text{PUCCH},q}^{(el)} + \mathit{offset};$$

or

when an EPDCCH is used and EPDCCH transmission is centralized transmission, formula 5 and formula 6 are met:

$$\text{formula 5:} \quad n_{\text{PUCCH}}^{(1,\tilde{p}_0)} = \left\lfloor \frac{n_{\text{ECCE},q}}{N_{RB}^{ECCE,q}} \right\rfloor \cdot N_{RB}^{ECCE,q} + n' + \Delta_{ARO} + N_{\text{PUCCH},q}^{(el)} + \mathit{offset};$$

and

$$\text{formula 6:} \quad n_{\text{PUCCH}}^{(1,\tilde{p}_1)} = \left\lfloor \frac{n_{\text{ECCE},q}}{N_{RB}^{ECCE,q}} \right\rfloor \cdot N_{RB}^{ECCE,q} + 1 + n' + \Delta_{ARO} + N_{\text{PUCCH},q}^{(el)} + \mathit{offset};$$

where

$n_{\text{ECCE},q}$ is a lowest, highest, or specific control channel element CCE location of an EPDCCH-PRB-set q used by an enhanced physical downlink control channel EPDCCH occupied by a scheduling command that is of the downlink data and is for scheduling the downlink data, $N_{\text{PUCCH},q}^{(el)}$ is a parameter configured by using higher layer signaling, $\Delta ARQ$ is a parameter notified by using physical layer control signaling, $N_{RB}^{ECCE,q}$ is a quantity of CCEs of each PRB in the EPDCCH-PRB-set q, n' is determined by an antenna port, and *offset* is the offset and is an integer.

Further, the resource determining unit 1604 is specifically configured to: if transmission of the feedback information is a downlink feedback of uplink data, determine, by the user equipment, that a resource $(n_{PHICH}^{group}, n_{PHICH}^{seq})$ for the feedback meets formula 7 and formula 8, where $n_{PHICH}^{group}$ is a group number of a physical hybrid automatic repeat request indicator channel PHICH, and $n_{PHICH}^{seq}$ is an orthogonal sequence number in a group corresponding to the group number;

$$\text{formula 7 is} \quad n_{PHICH}^{group} = (I_{PRB\_RA} + n_{DMRS}) \bmod N_{PHICH}^{group} + I_{PHICH} N_{PHICH}^{group} + N_{group1};$$

and

$$\text{formula 8 is} \quad n_{PHICH}^{seq} = (\left\lfloor I_{PRB\_RA} / N_{PHICH}^{group} \right\rfloor + n_{DMRS}) \bmod 2N_{SF}^{PHICH};$$

where

$n_{DMRS}$ is cyclic shift mapping of a demodulation reference signal DMRS domain indicated by using uplink DCI on a latest PDCCH;

$N_{SF}^{PHICH}$ is a spreading factor of the PHICH;

$I_{PRB\_RA}$ indicates that the first code word is a lowest PRB index of a PUSCH indicated by the uplink DCI, and that the second code word is a lowest PRB index+1 of the PUSCH indicated by the uplink DCI;

$N_{PHICH}^{group}$ is a group amount of the PHICH; and

$N_{group1}$ is an offset.

Still referring to FIG. 19, an embodiment of the present invention further provides another user equipment, and the user equipment may include:

an input apparatus 1901, an output apparatus 1902, a memory 1903, and a processor 1904 (there may be one or more processors in the user equipment, and in FIG. 9, one processor is used as an example). In some embodiments of the present invention, the input apparatus 1901, the output apparatus 1902, the memory 1903, and the processor 1904 may be connected by using a bus or in another manner. In FIG. 19, a connection implemented by using a bus is used as an example.

The input apparatus 1901 is configured to:

receive a control message sent by the base station, where the control message is used to determine an RTT length corresponding to data transmitted between the user equipment and the base station.

The processor 1904 is configured to determine, according to the control message, the TTI length corresponding to the data transmitted between the user equipment and the base station.
The output apparatus 1902 is configured to perform transmission of the data with the base station according to the TTI length.
Specifically, in a scenario in which an RTT length is directly indicated by a control message, the input apparatus 1901 is specifically configured to:

receive a first control message sent by the base station, where the first control message is used to indicate the corresponding TTI length for transmitting the data; and
the processor 1904 is specifically configured to:

determine, according to the first control message, the corresponding TTI length for transmitting the data.

Specifically, in a scenario in which an RTT length is indicated by an RTT identifier, the input apparatus 1901 is specifically configured to:

receive a second control message sent by the base station, where the second control message is used to notify a TTI length corresponding to a transmission time interval TTI identifier; and
receive a third control message sent by the base station, where the third control message is downlink control information that includes the TTI identifier, and the TTI identifier is used to indicate the corresponding TTI length for transmitting the data; and
the processor 1904 is specifically configured to:

determine, according to the TTI identifier, the corresponding TTI length for transmitting the data.

Specifically, in a scenario in which an RTT length is indicated by an RNTI scrambling manner, the input apparatus 1901 is specifically configured to:

receive a second control message sent by the base station by using higher layer signaling, where the fourth control message is used to notify a TTI length corresponding to an RNTI scrambling manner; and
receive a fifth control message sent by the base station by using physical layer signaling, where an RNTI scrambling manner for the fifth control message is corresponding to the TTI length; and
the processor 1904 is specifically configured to:

perform RNTI descrambling on the fifth control message, and determine, according to a manner of performing RNTI descrambling on the fourth control message, the corresponding TTI length for transmitting the data.

Specifically, in a scenario in which an RTT length is indicated by a control channel, the input apparatus 1901 is specifically configured to:

receive a sixth control message sent by the base station, where the sixth control message is used to notify a TTI length corresponding to a type of a control channel; and
receive a seventh control message sent by the base station by using a control channel, where there are at least two types of control channels, and different types of control channels are corresponding to different TTI lengths; and
the processor 1904 is specifically configured to:

determine, according to a type of the control channel for receiving the seventh control message, the corresponding TTI length for transmitting the data.

Specifically, the control message is sent by the base station by using higher layer signaling or physical layer signaling.

Specifically, the control message is further used to instruct to use types that are of data needing to be transmitted and are separately corresponding to RTT lengths.

Specifically, the input apparatus 1901 is specifically configured to:

receive, by the user equipment, a TTI configuration parameter sent by the base station, where the TTI configuration parameter includes any one or a combination of at least two of a DCI scrambling manner, indication information of a TTI length type, a sounding reference signal SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, transport block size TBS table configuration information for using a TTI, resource scheduling granularity information for using a TTI, or EPDCCH resource location information for using a TTI.

Specifically, the processor 1904 is further configured to:

determine a sending and receiving rule of the data according to the TTI length, where different TTI lengths are corresponding to different sending and receiving rules, and the sending and receiving rule includes resources corresponding to service data and feedback information during sending or receiving, and a data transmission time sequence relationship;

determine a feedback resource for transmitting the feedback information, where feedback information corresponding to different TTI lengths uses different feedback resources, the feedback resource exists in each TTI length corresponding to the feedback resource, and the feedback resource includes a PHICH channel resource, a PRB number for transmitting data, and a frame number or a subframe number for transmitting data; and

feed back a channel quality indicator CQI to the base station by using a feedback resource corresponding to the determined TTI length, where separate encoding is performed on the CQI in each TTI, or joint encoding is performed on the CQI in a TTI included in each subframe; or send uplink feedback information of downlink data to the base station by using a feedback resource corresponding to the determined TTI length, where separate encoding is performed on the uplink feedback information in each TTI, or joint encoding is performed on the uplink feedback information in a TTI included in each subframe.

For a specific operation process of the foregoing user equipment, refer to the method embodiment. Details are not described herein repeatedly.

In the several embodiments provided in the present application, it should be understood that the disclosed apparatus and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. User equipment, comprising:

   a receiving unit, configured to receive a control message sent by a base station, wherein the control message is used to determine an RTT length corresponding to data transmitted between the user equipment and the base station;
   a determining unit, configured to determine, according to the control message, the round-trip time RTT length corresponding to the data transmitted between the user equipment and the base station; and
   a transmission unit, configured to perform transmission of the data with the base station according to the RTT length.

2. The user equipment according to claim 1, wherein
   the receiving unit is specifically configured to:

   receive a first control message sent by the base station, wherein the first control message is used to indicate the corresponding RTT length for transmitting the data; and
   the determining unit is specifically configured to:

   determine, according to the first control message, the corresponding RTT length for transmitting the data.

3. The user equipment according to claim 1, wherein
   the receiving unit is specifically configured to:

   receive a second control message sent by the base station, wherein the second control message is used to notify an RTT length corresponding to an RTT identifier; and
   receive a third control message sent by the base station, wherein the third control message comprises the RTT identifier, and the RTT identifier is used to indicate the corresponding RTT length for transmitting the data; and
   the determining unit is specifically configured to:

   determine, according to the RTT identifier, the corresponding RTT length for transmitting the data.

4. The user equipment according to claim 1, wherein the receiving unit is specifically configured to:

   receive a fourth control message sent by the base station, wherein the fourth control message is used to notify an RTT length corresponding to an RNTI scrambling manner; and
   receive a fifth control message sent by the base station, wherein an RNTI scrambling manner for the fifth control message is corresponding to the RTT length; and
   the determining unit is specifically configured to:

   perform RNTI descrambling on the fifth control message, and determine, according to a manner of performing RNTI descrambling on the fourth control message, the corresponding RTT length for transmitting the data.

5. The user equipment according to claim 1, wherein
   the receiving unit is specifically configured to:

   receive a sixth control message sent by the base station, wherein the sixth control message is used to notify an RTT length corresponding to a type of a control channel; and
   receive a seventh control message sent by the base station by using the control channel, wherein there are at least two types of control channels, and different types of control channels are corresponding to different RTT lengths; and
   the determining unit is specifically configured to:

determine, according to a type of the control channel for receiving the seventh control message, the corresponding RTT length for transmitting the data.

6. The user equipment according to any one of claims 1 to 4, wherein the control message is sent by the base station by using higher layer signaling or physical layer signaling.

7. The user equipment according to any one of claims 1 to 4, wherein the control message is further used to instruct to use types that are of data needing to be transmitted and are separately corresponding to RTT lengths.

8. The user equipment according to any one of claims 1 to 4, wherein the user equipment further comprises:

a resource determining unit, configured to determine, according to the RTT length, a resource for performing transmission of the data with the base station, wherein the user equipment and the base station transmit, to each other by using different resources, data corresponding to different RTT lengths; and
the transmission unit is specifically configured to:

perform, by the user equipment, transmission of the data with the base station by using the resource.

9. The user equipment according to claim 8, wherein the resource determining unit is specifically configured to:

if transmission of the data is transmission of feedback information, add, according to the RTT length indicated by the RTT identifier, an offset corresponding to the RTT length when computing a resource used for transmitting the feedback information.

10. The user equipment according to claim 9, wherein the offset is notified by the base station by using higher layer signaling, or is set in a physical layer signaling message.

11. The user equipment according to claim 9, wherein the resource determining unit is specifically configured to: if transmission of the feedback information is an uplink feedback of downlink data, determine, by the user equipment, that a frequency domain resource for the feedback meets the following formulas, wherein $n_{\mathrm{PUCCH}}^{(1,\widetilde{p}_0)}$ is a frequency domain resource location corresponding to a port 0, and $n_{\mathrm{PUCCH}}^{(1,\widetilde{p}_1)}$ is a frequency domain resource location corresponding to a port 1; and
when a PDCCH is used for transmission, formula 1 and formula 2 are met:

$$\text{formula 1:}\quad n_{\mathrm{PUCCH}}^{(1,\widetilde{p}_0)} = n_{\mathrm{CCE}} + N_{\mathrm{PUCCH}}^{(1)} + \mathit{offset};$$

and

$$\text{formula 2:}\quad n_{\mathrm{PUCCH}}^{(1,\widetilde{p}_1)} = n_{\mathrm{CCE}} + 1 + N_{\mathrm{PUCCH}}^{(1)} + \mathit{offset};$$

wherein
$n_{\mathrm{CCE}}$ is a lowest, highest, or specific control channel element CCE location of a physical downlink control channel PDCCH occupied by a scheduling command that is of the downlink data and is for scheduling the downlink data, $N_{\mathrm{PUCCH}}^{(1)}$ is a frequency domain start location of a physical uplink control channel PUCCH, and *offset* is the offset and is an integer; or
when an EPDCCH is used and EPDCCH transmission is distributed transmission, formula 3 and formula 4 are met:

$$\text{formula 3:}\quad n_{\mathrm{PUCCH}}^{(1,\widetilde{p}_0)} = n_{\mathrm{ECCE,q}} + \Delta_{ARO} + N_{\mathrm{PUCCH,q}}^{(e1)} + \mathit{offset};$$

and

$$\text{formula 4:} \quad n_{\text{PUCCH}}^{(1,\tilde{p}_1)} = n_{\text{ECCE,q}} + 1 + \Delta_{ARO} + N_{\text{PUCCH,q}}^{(e1)} + \textit{offset} \; ;$$

or
when an EPDCCH is used and EPDCCH transmission is centralized transmission, formula 5 and formula 6 are met:

$$\text{formula 5:} \quad n_{\text{PUCCH}}^{(1,\tilde{p}_0)} = \left\lfloor \frac{n_{\text{ECCE,q}}}{N_{RB}^{ECCE,q}} \right\rfloor \cdot N_{RB}^{ECCE,q} + n' + \Delta_{ARO} + N_{\text{PUCCH,q}}^{(e1)} + \textit{offset} \; ;$$

and

$$\text{formula 6:} \quad n_{\text{PUCCH}}^{(1,\tilde{p}_1)} = \left\lfloor \frac{n_{\text{ECCE,q}}}{N_{RB}^{ECCE,q}} \right\rfloor \cdot N_{RB}^{ECCE,q} + 1 + n' + \Delta_{ARO} + N_{\text{PUCCH,q}}^{(e1)} + \textit{offset} \; ;$$

wherein
$n_{\text{ECCE,q}}$ is a lowest, highest, or specific control channel element CCE location of an EPDCCH-PRB-set q used by an enhanced physical downlink control channel EPDCCH occupied by a scheduling command that is of the downlink data and is for scheduling the downlink data, $N_{\text{PUCCH,q}}^{(e1)}$ parameter configured by using higher layer signaling, $\Delta ARQ$ is a parameter notified by using physical layer control signaling, $N_{RB}^{ECCE,q}$ is a quantity of CCEs of each PRB in the EPDCCH-PRB-set q, $n'$ is determined by an antenna port, and *offset* is the offset and is an integer.

12. The user equipment according to claim 9, wherein the resource determining unit is specifically configured to: if transmission of the feedback information is a downlink feedback of uplink data, determine, by the user equipment, that a resource ($n_{PHICH}^{group}$, $n_{PHICH}^{seq}$) for the feedback meets formula 7 and formula 8, wherein $n_{PHICH}^{group}$ is a group number of a physical hybrid automatic repeat request indicator channel PHICH, and $n_{PHICH}^{seq}$ is an orthogonal sequence number in a group corresponding to the group number;

$$\text{formula 7 is} \quad n_{PHICH}^{group} = (I_{PRB\_RA} + n_{DMRS}) \bmod N_{PHICH}^{group} + I_{PHICH} N_{PHICH}^{group} + N_{group1} \; ;$$

and

$$\text{formula 8 is} \quad n_{PHICH}^{seq} = \left( \lfloor I_{PRB\_RA} / N_{PHICH}^{group} \rfloor + n_{DMRS} \right) \bmod 2 N_{SF}^{PHICH} \; ;$$

wherein

$n_{DMRS}$ is cyclic shift mapping of a demodulation reference signal DMRS domain indicated by using uplink DCI on a latest PDCCH;

$N_{SF}^{PHICH}$ is a spreading factor of the PHICH;

$I_{PRB\_RA}$ indicates that the first code word is a lowest PRB index of a PUSCH indicated by the uplink DCI, and that the second code word is a lowest PRB index+1 of the PUSCH indicated by the uplink DCI;

$N_{PHICH}^{group}$ is a group amount of the PHICH; and

$N_{group1}$ is an offset.

13. User equipment, comprising:

a message receiving unit, configured to receive a control message sent by the base station, wherein the control message is used to determine an RTT length corresponding to data transmitted between the user equipment and the base station;

a length determining unit, configured to determine, according to the control message, the TTI length corresponding to the data transmitted between the user equipment and the base station; and

a data transmission unit, configured to perform transmission of the data with the base station according to the TTI length.

14. The user equipment according to claim 13, wherein
the message receiving unit is specifically configured to:

receive a first control message sent by the base station, wherein the first control message is used to indicate the corresponding TTI length for transmitting the data; and
the length determining unit is specifically configured to:

determine, according to the first control message, the corresponding TTI length for transmitting the data.

15. The user equipment according to claim 13, wherein
the message receiving unit is specifically configured to:

receive a second control message sent by the base station, wherein the second control message is used to notify a TTI length corresponding to a transmission time interval TTI identifier; and
receive a third control message sent by the base station, wherein the third control message is downlink control information that comprises the TTI identifier, and the TTI identifier is used to indicate the corresponding TTI length for transmitting the data; and
the length determining unit is specifically configured to:

determine, according to the TTI identifier, the corresponding TTI length for transmitting the data.

16. The user equipment according to claim 13, wherein
the message receiving unit is specifically configured to:

receive a second control message sent by the base station by using higher layer signaling, wherein the fourth control message is used to notify a TTI length corresponding to an RNTI scrambling manner; and
receive a fifth control message sent by the base station by using physical layer signaling, wherein an RNTI scrambling manner for the fifth control message is corresponding to the TTI length; and
the length determining unit is specifically configured to:

perform RNTI descrambling on the fifth control message, and determine, according to a manner of performing RNTI descrambling on the fourth control message, the corresponding TTI length for transmitting the data.

17. The user equipment according to claim 13, wherein
the message receiving unit is specifically configured to:

receive a sixth control message sent by the base station, wherein the sixth control message is used to notify a TTI length corresponding to a type of a control channel; and
receive a seventh control message sent by the base station by using a control channel, wherein there are at least two types of control channels, and different types of control channels are corresponding to different TTI lengths; and
the length determining unit is specifically configured to:

determine, according to a type of the control channel for receiving the seventh control message, the corresponding TTI length for transmitting the data.

18. The user equipment according to any one of claims 13 to 17, wherein the control message is sent by the base station by using higher layer signaling or physical layer signaling.

19. The user equipment according to any one of claims 13 to 17, wherein the control message is further used to instruct to use a type that is of data needing to be transmitted and is corresponding to a TTI length.

20. The user equipment according to any one of claims 13 to 17, wherein the message receiving unit is further configured to:

receive, by the user equipment, a TTI configuration parameter sent by the base station, wherein the TTI configuration parameter comprises any one or a combination of at least two of a DCI scrambling manner, indication information of a TTI length type, a sounding reference signal SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, transport block size TBS table configuration information for using a TTI, resource scheduling granularity information for using a TTI, or EPDCCH resource location information for using a TTI.

21. The user equipment according to any one of claims 13 to 17, wherein the user equipment further comprises:

a rule determining unit, configured to determine a sending and receiving rule of the data according to the TTI length, wherein different TTI lengths are corresponding to different sending and receiving rules, and the sending and receiving rule comprises resources corresponding to service data and feedback information during sending or receiving, and a data transmission time sequence relationship; and
the data transmission unit is further configured to:

send and receive, by the user equipment, the data according to the determined sending and receiving rule.

22. The user equipment according to claim 21, wherein the user equipment further comprises:

a buffer emptying unit, configured to: determine whether a TTI length corresponding to data transmitted by the user equipment last time changes, and if yes, empty an HARQ buffer, and then perform the step of sending and receiving the data according to the determined sending and receiving rule.

23. The user equipment according to claim 21, wherein the user equipment further comprises:

a feedback resource determining unit, configured to determine a feedback resource for transmitting the feedback information, wherein feedback information corresponding to different TTI lengths uses different feedback resources, the feedback resource exists in each TTI length corresponding to the feedback resource, and the feedback resource comprises a PHICH channel resource, a PRB number for transmitting data, and a frame number or a subframe number for transmitting data.

24. The user equipment according to claim 23, wherein the user equipment further comprises:

a first encoding unit, configured to feed back a channel quality indicator CQI to the base station by using a feedback resource corresponding to the determined TTI length, wherein separate encoding is performed on the CQI in each TTI, or joint encoding is performed on the CQI in a TTI comprised in each subframe.

25. The user equipment according to claim 23, wherein the user equipment further comprises:

a second encoding unit, configured to send uplink feedback information of downlink data to the base station by using a feedback resource corresponding to the determined TTI length, wherein separate encoding is performed on the uplink feedback information in each TTI, or joint encoding is performed on the uplink feedback information in a TTI comprised in each subframe.

26. User equipment, comprising:

a broadcast receiving unit, configured to receive a broadcast message sent by a base station, wherein the broadcast message comprises a random access channel RACH resource and a preamble preamble that are corresponding to a second TTI, the second TTI is a type of TTI length, there is a first TTI and the second TTI, and the first TTI is greater than the second TTI; and
an access unit, configured to: if the user equipment supports the second TTI, perform random access by using the RACH resource and the preamble that are corresponding to the second TTI.

**27.** Abase station, comprising:

a sending unit, configured to send a control message to user equipment, wherein the control message is used to determine an RTT length corresponding to data transmitted between the user equipment and the base station, so that the user equipment performs transmission of the data with the base station according to the RTT length.

**28.** The base station according to claim 27, wherein the control message comprises a first control message, and the first control message is used to indicate the corresponding RTT length for transmitting the data.

**29.** The base station according to claim 27, wherein the control message comprises:

a second control message and a third control message, wherein
the second control message is used to notify an RTT length corresponding to a round-trip time RTT identifier, the third control message comprises the RTT identifier, and the RTT identifier is used to indicate the corresponding RTT length for transmitting the data.

**30.** The base station according to claim 27, wherein the control message comprises:

a fourth control message and a fifth control message, wherein
the fourth control message is used to notify an RTT length corresponding to an RNTI scrambling manner, and an RNTI scrambling manner for the fifth control message is corresponding to the RTT length.

**31.** The base station according to claim 27, wherein the control message comprises:

a sixth control message and a seventh control message, wherein
the sixth control message is used to notify an RTT length corresponding to a type of a control channel, the seventh control message is a control message sent by using different control channels, there are at least two types of control channels, and different types of control channels are corresponding to different RTT lengths.

**32.** The base station according to any one of claims 27 to 31, wherein the control message is sent by the base station by using higher layer signaling or physical layer signaling.

**33.** The base station according to any one of claims 27 to 31, wherein the control message is further used to instruct to use types that are of data needing to be transmitted and are separately corresponding to RTT lengths.

**34.** Abase station, comprising:

a message sending unit, configured to send a control message to user equipment, wherein the control message is used to determine a TTI length corresponding to data transmitted between the user equipment and the base station, so that the user equipment performs transmission of the data with the base station according to the TTI length.

**35.** The base station according to claim 34, wherein the control message comprises a first control message, and the first control message is used to indicate the corresponding TTI length for transmitting the data.

**36.** The base station according to claim 34, wherein the control message comprises:

a second control message and a third control message, wherein
the second control message is used to notify a TTI length corresponding to a TTI identifier, the third control message comprises the TTI identifier, and the TTI identifier is used to indicate the corresponding TTI length for transmitting the data.

**37.** The base station according to claim 34, wherein the control message comprises:

a fourth control message and a fifth control message, wherein
the fourth control message is used to notify a TTI length corresponding to an RNTI scrambling manner, and an RNTI scrambling manner for the fifth control message is corresponding to the TTI length.

38. The base station according to claim 34, wherein the control message comprises:

a sixth control message and a seventh control message, wherein
the sixth control message is used to notify an RTT length corresponding to a type of a control channel, the seventh control message is a control message sent by using different control channels, there are at least two types of control channels, and different types of control channels are corresponding to different TTI lengths.

39. The base station according to any one of claims 34 to 38, wherein the control message is sent by the base station by using higher layer signaling or physical layer signaling.

40. The base station according to any one of claims 34 to 38, wherein the control message is further used to instruct to use types that are of data needing to be transmitted and are separately corresponding to different TTI lengths.

41. A base station, comprising:

a broadcast message sending unit, configured to send a broadcast message to user equipment, so that the user equipment performs random access according to a TTI length in the broadcast message and a TTI capability of the user equipment and by using a corresponding RACH resource and a corresponding preamble, wherein the broadcast message comprises a random access channel RACH resource and a preamble that are corresponding to a second TTI, the second TTI is a type of TTI length, there is a first TTI and the second TTI, and the first TTI is greater than the second TTI.

42. A data transmission method, comprising:

receiving, by user equipment, a control message sent by a base station, wherein the control message is used to determine an RTT length corresponding to data transmitted between the user equipment and the base station; determining, by the user equipment according to the control message, the round-trip time RTT length corresponding to the data transmitted between the user equipment and the base station; and performing, by the user equipment, transmission of the data with the base station according to the RTT length.

43. The method according to claim 42, wherein
the receiving, by user equipment, a control message sent by a base station comprises:

receiving, by the user equipment, a first control message sent by the base station, wherein the first control message is used to indicate the corresponding RTT length for transmitting the data; and
the determining, by the user equipment according to the control message, the RTT length corresponding to the data transmitted between the user equipment and the base station comprises:

determining, by the user equipment according to the first control message, the corresponding RTT length for transmitting the data.

44. The method according to claim 42, wherein
the receiving, by user equipment, a control message sent by a base station comprises:

receiving, by the user equipment, a second control message sent by the base station, wherein the second control message is used to notify an RTT length corresponding to an RTT identifier; and
receiving, by the user equipment, a third control message sent by the base station, wherein the third control message comprises the RTT identifier, and the RTT identifier is used to indicate the corresponding RTT length for transmitting the data; and
the determining, by the user equipment according to the control message, the RTT length corresponding to the data transmitted between the user equipment and the base station comprises:

determining, by the user equipment according to the RTT identifier, the corresponding RTT length for transmitting the data.

45. The method according to claim 42, wherein the receiving, by user equipment, a control message sent by a base station comprises:

receiving, by the user equipment, a fourth control message sent by the base station, wherein the fourth control message is used to notify an RTT length corresponding to an RNTI scrambling manner; and

receiving, by the user equipment, a fifth control message sent by the base station, wherein an RNTI scrambling manner for the fifth control message is corresponding to the RTT length; and

the determining, by the user equipment according to the control message, the RTT length corresponding to the data transmitted between the user equipment and the base station comprises:

performing, by the user equipment, RNTI descrambling on the fifth control message, and determining, according to a manner of performing RNTI descrambling on the fourth control message, the corresponding RTT length for transmitting the data.

**46.** The method according to claim 42, wherein

the receiving, by user equipment, a control message sent by a base station comprises:

receiving, by the user equipment, a sixth control message sent by the base station, wherein the sixth control message is used to notify an RTT length corresponding to a type of a control channel; and

receiving, by the user equipment, a seventh control message sent by the base station by using a control channel, wherein there are at least two types of control channels, and different types of control channels are corresponding to different RTT lengths; and

the determining, by the user equipment according to the control message, the RTT length corresponding to the data transmitted between the user equipment and the base station comprises:

determining, by the user equipment according to a type of the control channel for receiving the seventh control message, the corresponding RTT length for transmitting the data.

**47.** The method according to any one of claims 42 to 46, wherein the control message is sent by the base station by using higher layer signaling or physical layer signaling.

**48.** The method according to any one of claims 42 to 46, wherein the control message is further used to instruct to use types that are of data needing to be transmitted and are separately corresponding to RTT lengths.

**49.** The method according to any one of claims 42 to 46, wherein before the performing, by the user equipment, transmission of the data with the base station according to the RTT length, the method comprises:

determining, by the user equipment according to the RTT length, a resource for performing transmission of the data with the base station, wherein the user equipment and the base station transmit, to each other by using different resources, data corresponding to different RTT lengths; and

the performing, by the user equipment, transmission of the data with the base station according to the RTT length comprises:

performing, by the user equipment, transmission of the data with the base station by using the resource.

**50.** The method according to claim 49, wherein if transmission of the data is transmission of feedback information, the determining, by the user equipment according to the RTT length, a resource for performing transmission of the data with the base station comprises:

adding, according to the RTT length indicated by the RTT identifier, an offset corresponding to the RTT length when computing a resource used for transmitting the feedback information.

**51.** The method according to claim 49, wherein the offset is notified by the base station by using higher layer signaling, or is set in a physical layer signaling message.

**52.** The method according to claim 49, wherein if transmission of the feedback information is an uplink feedback of downlink data, the adding, according to the RTT length indicated by the RTT identifier, an offset corresponding to the RTT length when computing a resource used for transmitting the feedback information is specifically:

determining, by the user equipment, that a frequency domain resource for the feedback meets the following formulas, wherein $n_{\mathrm{PUCCH}}^{(1,\widetilde{p}_0)}$ is a frequency domain resource location corresponding to a port 0, and $n_{\mathrm{PUCCH}}^{(1,\widetilde{p}_1)}$ is a frequency domain resource location corresponding to a port 1; and
when a PDCCH is used for transmission, formula 1 and formula 2 are met:

$$\text{formula 1:}\quad n_{\mathrm{PUCCH}}^{(1,\widetilde{p}_0)} = n_{\mathrm{CCE}} + N_{\mathrm{PUCCH}}^{(1)} + \mathit{offset}\,;$$

and

$$\text{formula 2:}\quad n_{\mathrm{PUCCH}}^{(1,\widetilde{p}_1)} = n_{\mathrm{CCE}} + 1 + N_{\mathrm{PUCCH}}^{(1)} + \mathit{offset}\,;$$

wherein
$n_{\mathrm{CCE}}$ is a lowest, highest, or specific control channel element CCE location of a physical downlink control channel PDCCH occupied by a scheduling command that is of the downlink data and is for scheduling the downlink data, $N_{\mathrm{PUCCH}}^{(1)}$ is a frequency domain start location of a physical uplink control channel PUCCH, and *offset* is the offset and is an integer; or
when an EPDCCH is used and EPDCCH transmission is distributed transmission, formula 3 and formula 4 are met:

$$\text{formula 3:}\quad n_{\mathrm{PUCCH}}^{(1,\widetilde{p}_0)} = n_{\mathrm{ECCE,q}} + \Delta_{ARO} + N_{\mathrm{PUCCH,q}}^{(\mathrm{e1})} + \mathit{offset}\,;$$

and

$$\text{formula 4:}\quad n_{\mathrm{PUCCH}}^{(1,\widetilde{p}_1)} = n_{\mathrm{ECCE,q}} + 1 + \Delta_{ARO} + N_{\mathrm{PUCCH,q}}^{(\mathrm{e1})} + \mathit{offset}\,;$$

or
when an EPDCCH is used and EPDCCH transmission is centralized transmission, formula 5 and formula 6 are met:

$$\text{formula 5:}\quad n_{\mathrm{PUCCH}}^{(1,\widetilde{p}_0)} = \left\lfloor \frac{n_{\mathrm{ECCE,q}}}{N_{RB}^{ECCE,q}} \right\rfloor \cdot N_{RB}^{ECCE,q} + n' + \Delta_{ARO} + N_{\mathrm{PUCCH,q}}^{(\mathrm{e1})} + \mathit{offset}\,;$$

and

$$\text{formula 6:}\quad n_{\mathrm{PUCCH}}^{(1,\widetilde{p}_1)} = \left\lfloor \frac{n_{\mathrm{ECCE,q}}}{N_{RB}^{ECCE,q}} \right\rfloor \cdot N_{RB}^{ECCE,q} + 1 + n' + \Delta_{ARO} + N_{\mathrm{PUCCH,q}}^{(\mathrm{e1})} + \mathit{offset}\,;$$

wherein
$n_{\mathrm{ECCE,q}}$ is a lowest, highest, or specific control channel element CCE location of an EPDCCH-PRB-set q used by an enhanced physical downlink control channel EPDCCH occupied by a scheduling command that is of the downlink data and is for scheduling the downlink data, $N_{\mathrm{PUCCH,q}}^{(\mathrm{e1})}$ is a parameter configured by using higher layer signaling, $\Delta ARQ$ is a parameter notified by using physical layer control signaling, $N_{RB}^{ECCE,q}$ is a quantity of CCEs of each PRB in the EPDCCH-PRB-set q, $n'$ is determined by an antenna port, and *offset* is the offset and is an integer.

**53.** The method according to claim 49, wherein if transmission of the feedback information is a downlink feedback of uplink data, the adding, according to the RTT length indicated by the RTT identifier, an offset corresponding to the RTT length when computing a resource used for transmitting the feedback information is specifically:

determining, by the user equipment, that a resource $(n_{PHICH}^{group}, n_{PHICH}^{seq})$ for the feedback meets formula 7 and formula 8, wherein $n_{PHICH}^{group}$ is a group number of a physical hybrid automatic repeat request indicator channel PHICH, and $n_{PHICH}^{seq}$ is an orthogonal sequence number in a group corresponding to the group number;

$$\text{formula 7 is} \quad n_{PHICH}^{group} = (I_{PRB\_RA} + n_{DMRS}) \bmod N_{PHICH}^{group} + I_{PHICH} N_{PHICH}^{group} + N_{group1};$$

and

$$\text{formula 8 is} \quad n_{PHICH}^{seq} = (\lfloor I_{PRB\_RA} / N_{PHICH}^{group} \rfloor + n_{DMRS}) \bmod 2 N_{SF}^{PHICH};$$

wherein

$n_{DMRS}$ is cyclic shift mapping of a demodulation reference signal DMRS domain indicated by using uplink DCI on a latest PDCCH;

$N_{SF}^{PHICH}$ is a spreading factor of the PHICH;

$I_{PRB\_RA}$ indicates that the first code word is a lowest PRB index of a PUSCH indicated by the uplink DCI, and that the second code word is a lowest PRB index+1 of the PUSCH indicated by the uplink DCI;

$N_{PHICH}^{group}$ is a group amount of the PHICH; and

$N_{group1}$ is an offset.

**54.** A data transmission method, comprising:

receiving, by user equipment, a control message sent by the base station, wherein the control message is used to determine an RTT length corresponding to data transmitted between the user equipment and the base station; determining, by the user equipment according to the control message, the TTI length corresponding to the data transmitted between the user equipment and the base station; and performing, by the user equipment, transmission of the data with the base station according to the TTI length.

**55.** The method according to claim 54, wherein
the receiving, by user equipment, a control message sent by the base station comprises:

receiving, by the user equipment, a first control message sent by the base station, wherein the first control message is used to indicate the corresponding TTI length for transmitting the data; and the determining, by the user equipment according to the control message, the TTI length corresponding to the data transmitted between the user equipment and the base station comprises:

determining, by the user equipment according to the first control message, the corresponding TTI length for transmitting the data.

**56.** The method according to claim 54, wherein
the receiving, by user equipment, a control message sent by the base station comprises:

receiving, by the user equipment, a second control message sent by the base station, wherein the second control message is used to notify a TTI length corresponding to a transmission time interval TTI identifier; and receiving, by the user equipment, a third control message sent by the base station, wherein the third control message is downlink control information that comprises the TTI identifier, and the TTI identifier is used to indicate the corresponding TTI length for transmitting the data; and the determining, by the user equipment according to the control message, the TTI length corresponding to the data transmitted between the user equipment and the base station comprises:

determining, by the user equipment according to the TTI identifier, the corresponding TTI length for transmitting the data.

**57.** The method according to claim 54, wherein
the receiving, by user equipment, a control message sent by the base station comprises:

receiving, by the user equipment, a second control message sent by the base station by using higher layer signaling, wherein the fourth control message is used to notify a TTI length corresponding to an RNTI scrambling manner; and
receiving, by the user equipment, a fifth control message sent by the base station by using physical layer signaling, wherein an RNTI scrambling manner for the fifth control message is corresponding to the TTI length; and
the determining, by the user equipment according to the control message, the TTI length corresponding to the data transmitted between the user equipment and the base station comprises:

performing, by the user equipment, RNTI descrambling on the fifth control message, and determining, according to a manner of performing RNTI descrambling on the fourth control message, the corresponding TTI length for transmitting the data.

**58.** The method according to claim 54, wherein
the receiving, by user equipment, a control message sent by a base station comprises:

receiving, by the user equipment, a sixth control message sent by the base station, wherein the sixth control message is used to notify a TTI length corresponding to a type of a control channel; and
receiving, by the user equipment, a seventh control message sent by the base station by using a control channel, wherein there are at least two types of control channels, and different types of control channels are corresponding to different TTI lengths; and
the determining, by the user equipment according to the control message, the TTI length corresponding to the data transmitted between the user equipment and the base station comprises:

determining, by the user equipment according to a type of the control channel for receiving the seventh control message, the corresponding TTI length for transmitting the data.

**59.** The method according to any one of claims 54 to 58, wherein the control message is sent by the base station by using higher layer signaling or physical layer signaling.

**60.** The method according to any one of claims 54 to 58, wherein the control message is further used to instruct to use a type that is of data needing to be transmitted and is corresponding to a TTI length.

**61.** The method according to any one of claims 54 to 58, wherein before the determining, by the user equipment, the TTI length corresponding to the data transmitted between the user equipment and the base station, the method comprises:

receiving, by the user equipment, a TTI configuration parameter sent by the base station, wherein the TTI configuration parameter comprises any one or a combination of at least two of a DCI scrambling manner, indication information of a TTI length type, a sounding reference signal SRS configuration parameter corresponding to a TTI, DM-RS configuration information for using a TTI, SR configuration information for using a TTI, feedback resource configuration information for using a TTI, feedback rule configuration information for using a TTI, PDCCH resource location information for using a TTI, transport block size TBS table configuration information for using a TTI, resource scheduling granularity information for using a TTI, or EPDCCH resource location information for using a TTI.

**62.** The method according to any one of claims 54 to 58, wherein
before the performing, by the user equipment, transmission of the data with the base station according to the TTI length, the method comprises:

determining a sending and receiving rule of the data according to the TTI length, wherein different TTI lengths are corresponding to different sending and receiving rules, and the sending and receiving rule comprises resources corresponding to service data and feedback information during sending or receiving, and a data transmission time sequence relationship; and

the performing, by the user equipment, transmission of the data with the base station according to the TTI length comprises:

sending and receiving, by the user equipment, the data according to the determined sending and receiving rule.

63. The method according to claim 62, wherein

before the sending and receiving the data according to the determined sending and receiving rule, the method comprises:

determining, by the user equipment, whether a TTI length corresponding to data transmitted by the user equipment last time changes, and if yes, emptying an HARQ buffer, and then performing the step of sending and receiving the data according to the determined sending and receiving rule.

64. The method according to claim 62, wherein

if transmission of the data is transmission of feedback information, before the sending and receiving the data according to the determined sending and receiving rule, the method comprises:

determining a feedback resource for transmitting the feedback information, wherein feedback information corresponding to different TTI lengths uses different feedback resources, the feedback resource exists in each TTI length corresponding to the feedback resource, and the feedback resource comprises a PHICH channel resource, a PRB number for transmitting data, and a frame number or a subframe number for transmitting data.

65. The method according to claim 64, wherein after the determining a feedback resource for transmitting the feedback information, the method further comprises:

feeding back, by the user equipment, a channel quality indicator CQI to the base station by using a feedback resource corresponding to the determined TTI length, wherein separate encoding is performed on the CQI in each TTI, or joint encoding is performed on the CQI in a TTI comprised in each subframe.

66. The method according to claim 64, wherein after the determining a feedback resource for transmitting the feedback information, the method further comprises:

sending, by the user equipment, uplink feedback information of downlink data to the base station by using a feedback resource corresponding to the determined TTI length, wherein separate encoding is performed on the uplink feedback information in each TTI, or joint encoding is performed on the uplink feedback information in a TTI comprised in each subframe.

67. A data transmission method, comprising:

receiving, by user equipment, a broadcast message sent by a base station, wherein the broadcast message comprises a random access channel RACH resource and a preamble preamble that are corresponding to a second TTI, the second TTI is a type of TTI length, there is a first TTI and the second TTI, and the first TTI is greater than the second TTI; and

if the user equipment supports the second TTI, performing, by the user equipment, random access by using the RACH resource and the preamble that are corresponding to the second TTI.

68. A data transmission method, comprising:

sending, by a base station, a control message to user equipment, wherein the control message is used to determine an RTT length corresponding to data transmitted between the user equipment and the base station, so that the user equipment performs transmission of the data with the base station according to the RTT length.

69. The method according to claim 68, wherein the control message comprises a first control message, and the first control message is used to indicate the corresponding RTT length for transmitting the data.

**70.** The method according to claim 68, wherein the control message comprises:

a second control message and a third control message, wherein
the second control message is used to notify an RTT length corresponding to a round-trip time RTT identifier, the third control message comprises the RTT identifier, and the RTT identifier is used to indicate the corresponding RTT length for transmitting the data.

**71.** The method according to claim 68, wherein the control message comprises:

a fourth control message and a fifth control message, wherein
the fourth control message is used to notify an RTT length corresponding to an RNTI scrambling manner, and an RNTI scrambling manner for the fifth control message is corresponding to the RTT length.

**72.** The method according to claim 68, wherein the control message comprises:

a sixth control message and a seventh control message, wherein
the sixth control message is used to notify an RTT length corresponding to a type of a control channel, the seventh control message is a control message sent by using different control channels, there are at least two types of control channels, and different types of control channels are corresponding to different RTT lengths.

**73.** The method according to any one of claims 68 to 72, wherein the control message is sent by the base station by using higher layer signaling or physical layer signaling.

**74.** The method according to any one of claims 68 to 72, wherein the control message is further used to instruct to use types that are of data needing to be transmitted and are separately corresponding to RTT lengths.

**75.** A data transmission method, comprising:

sending, by a base station, a control message to user equipment, wherein the control message is used to determine a TTI length corresponding to data transmitted between the user equipment and the base station, so that the user equipment performs transmission of the data with the base station according to the TTI length.

**76.** The method according to claim 75, wherein the control message comprises a first control message, and the first control message is used to indicate the corresponding TTI length for transmitting the data.

**77.** The method according to claim 75, wherein the control message comprises:

a second control message and a third control message, wherein
the second control message is used to notify a TTI length corresponding to a TTI identifier, the third control message comprises the TTI identifier, and the TTI identifier is used to indicate the corresponding TTI length for transmitting the data.

**78.** The method according to claim 75, wherein the control message comprises:

a fourth control message and a fifth control message, wherein
the fourth control message is used to notify a TTI length corresponding to an RNTI scrambling manner, and an RNTI scrambling manner for the fifth control message is corresponding to the TTI length.

**79.** The method according to claim 75, wherein the control message comprises:

a sixth control message and a seventh control message, wherein
the sixth control message is used to notify an RTT length corresponding to a type of a control channel, the seventh control message is a control message sent by using different control channels, there are at least two types of control channels, and different types of control channels are corresponding to different TTI lengths.

**80.** The method according to any one of claims 75 to 79, wherein the control message is sent by the base station by using higher layer signaling or physical layer signaling.

**81.** The method according to any one of claims 75 to 79, wherein the control message is further used to instruct to use types that are of data needing to be transmitted and are separately corresponding to different TTI lengths.

**82.** A data transmission method, comprising:

sending, by a base station, a broadcast message to user equipment, so that the user equipment performs random access according to a TTI length in the broadcast message and a TTI capability of the user equipment and by using a corresponding RACH resource and a corresponding preamble, wherein the broadcast message comprises a random access channel RACH resource and a preamble that are corresponding to a second TTI, the second TTI is a type of TTI length, there is a first TTI and the second TTI, and the first TTI is greater than the second TTI.

101

User equipment receives a control message sent by a base station

102

The user equipment determines, according to the control message, an RTT length corresponding to data transmitted between the user equipment and the base station

103

The user equipment performs transmission of the data with the base station according to the RTT length

FIG. 1

201

User equipment receives a first control message sent by a base station

202

The user equipment determines, according to the first control message, a corresponding RTT length for transmitting data

203

The user equipment performs transmission of the data with the base station according to the RTT length

FIG. 2

301

User equipment receives a second control message sent by a base station

302

The user equipment receives a third control message sent by the base station

303

The user equipment determines, according to an RTT identifier, a corresponding RTT length for transmitting data

304

The user equipment performs transmission of the data with the base station according to the RTT length

FIG. 3

401

User equipment receives a fourth control message sent by
a base station

402

The user equipment receives a fifth control message sent by
the base station

403

The user equipment descrambles the fifth control message by using
an RNTI that is corresponding to an RTT length and is notified by
using the fourth control message

404

The user equipment performs transmission of data with the base
station according to the RTT length

FIG. 4

501

User equipment receives a sixth control message sent by a base station

502

The user equipment receives a seventh control message sent by the base station by using a control channel

503

The user equipment determines, according to a type of the control channel for receiving the seventh control message, a corresponding RTT length for transmitting data

504

The user equipment performs transmission of data with the base station according to the RTT length

FIG. 5

◄—RTT: 4 ms—►

Downlink
transmission          Feedback

| Normal RTT | 0 | 1 | 2 | 3 | 0 | 1 | 2 | 3 | 0 | 1 | 2 | 3 | 0 | 1 | 2 | 3 |

1ms

Downlink      Feedback
transmission

| Shorten RTT | 0 | 1 | 2 | 3 | 0 | 1 | 2 | 3 | 0 | 1 | 2 | 3 | 0 | 1 | 2 | 3 |

1ms

FIG. 6

701

User equipment receives a control message sent by a base station

702

The user equipment determines, according to the control message, an RTT length corresponding to data transmitted between the user equipment and the base station

703

The user equipment determines, according to the RTT length, a resource for transmitting the data with the base station

704

The user equipment performs transmission of the data with the base station by using the resource

FIG. 7

801

User equipment determines a TTI length corresponding to data transmitted between the user equipment and a base station

802

The user equipment performs transmission of the data with the base station according to the TTI length

FIG. 8

901

User equipment receives a TTI configuration parameter sent by a base station

902

The user equipment determines a TTI length corresponding to data transmitted between the user equipment and the base station

903

The user equipment determines a sending and receiving rule of the data according to the TTI length

904

The user equipment performs transmission of the data with the base station according to the TTI length

FIG. 9

1001

User equipment receives a first control message sent by a base station

1002

The user equipment determines, according to the first control message, a corresponding TTI length for transmitting data

1003

The user equipment performs transmission of the data with the base station according to the TTI length

FIG. 10

1101

User equipment receives a second control message sent by a base station

1102

The user equipment receives a third control message sent by the base station by using physical layer signaling

1103

The user equipment determines, according to a TTI identifier, a corresponding TTI length for transmitting data

1104

The user equipment performs transmission of data with the base station according to the TTI length

FIG. 11

1201

User equipment receives a fourth control message sent by
a base station by using higher layer signaling

1202

The user equipment receives a fifth control message sent by
the base station

1203

The user equipment descrambles the fifth control message by using
an RNTI that is corresponding to an RTT length and is notified by
using the fourth control message

1204

The user equipment performs transmission of data with the base
station according to the TTI length

FIG. 12

```
                                              ┌─ 1301
┌─────────────────────────────────────────────┐
│  User equipment receives a sixth control     │
│  message sent by a base station              │
└─────────────────────────────────────────────┘
                     │
                     ▼        ┌─ 1302
┌─────────────────────────────────────────────┐
│  The user equipment receives a seventh       │
│  control message sent by the base station    │
│  by using a control channel                  │
└─────────────────────────────────────────────┘
                     │
                     ▼        ┌─ 1303
┌─────────────────────────────────────────────┐
│  The user equipment determines, according    │
│  to a type of the control channel for        │
│  receiving the control message, a            │
│  corresponding TTI length for transmitting   │
│  data                                        │
└─────────────────────────────────────────────┘
                     │
                     ▼        ┌─ 1304
┌─────────────────────────────────────────────┐
│  The user equipment performs transmission    │
│  of the data with the base station           │
│  according to the TTI length                 │
└─────────────────────────────────────────────┘
```

FIG. 13

```
                                              ┌─ 1401
┌─────────────────────────────────────────────┐
│  User equipment receives a control message   │
│  sent by a base station                      │
└─────────────────────────────────────────────┘
                     │
                     ▼        ┌─ 1402
┌─────────────────────────────────────────────┐
│  The user equipment determines, according    │
│  to the control message, a TTI length        │
│  corresponding to data transmitted between   │
│  the user equipment and the base station     │
└─────────────────────────────────────────────┘
                     │
                     ▼        ┌─ 1403
┌─────────────────────────────────────────────┐
│  The user equipment determines, according    │
│  to the TTI length, a resource for           │
│  transmitting the data with the base station │
└─────────────────────────────────────────────┘
```

FIG. 14

1501

User equipment receives a broadcast message sent by a base station

1502

If the user equipment supports a second TTI length, the user equipment performs random access by using an RACH resource and a preamble that are corresponding to the second TTI length

FIG. 15

1601

Receiving unit

1602

Determining unit

1603

Resource determining unit

1604

Transmission unit

FIG. 16

FIG. 17

FIG. 18

FIG. 19

<table>
<tr><td colspan="2" align="center">**INTERNATIONAL SEARCH REPORT**</td><td>International application No.<br>PCT/CN2015/082471</td></tr>
</table>

**A. CLASSIFICATION OF SUBJECT MATTER**

H04L 1/00 (2006.01) i

According to International Patent Classification (IPC) or to both national classification and IPC

**B. FIELDS SEARCHED**

Minimum documentation searched (classification system followed by classification symbols)

H04L; H04B; H04W; H04Q

Documentation searched other than minimum documentation to the extent that such documents are included in the fields searched

Electronic data base consulted during the international search (name of data base and, where practicable, search terms used)

EPODOC, WPI, CNPAT, CNKI, IEEE: BS, UE, RTT, TTI, preamble, RACH, DCH, message, access, interval, transmit, time, round trip

**C. DOCUMENTS CONSIDERED TO BE RELEVANT**

| Category* | Citation of document, with indication, where appropriate, of the relevant passages | Relevant to claim No. |
|---|---|---|
| PX | CN 104468030 A (SHANGHAI HUAWEI TECHNOLOGIES CO., LTD.) 25 March 2015 (25.03.2015) claims 1-82 | 1-82 |
| X | CN 102076058 A (INSTITUTE OF TELECOMMUNICATION SCIENCE & TECHNOLOGY) 25 May 2011 (25.05.2011) description, paragraphs [0084] and [0085] | 1-10, 27-33, 42-51, 68-74 |
| X | CN 101400072 A (DATANG MOBILE COMMUNICATIONS EQUIPMENT CO., LTD.) 01 April 2009 (01.04.2009) description, page 4, line 10 to page 6, line 4 | 13-19, 34-40, 54-60, 75-81 |
| X | CN 101505499 A (HUAWEI TECHNOLOGIES CO., LTD.) 12 August 2009 (12.08.2009) description, page 1, the third paragraph, page 4, the sixth paragraph | 26, 41, 67, 82 |
| A | US 2012250644 A1 (QUALCOMM INCORPORATION) 04 October 2012 (04.10.2012) the whole document | 1-82 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 July 2015 | 28 August 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Ren<br><br>Telephone No. (86-10) 62413242 |

Form PCT/ISA/210 (second sheet) (July 2009)

INTERNATIONAL SEARCH REPORT

Information on patent family members

International application No.

PCT/CN2015/082471

| Patent Documents referred in the Report | Publication Date | Patent Family | Publication Date |
|---|---|---|---|
| CN 104468030 A | 25 March 2015 | None | |
| CN 102076058 A | 25 May 2011 | None | |
| CN 101400072 A | 01 April 2009 | None | |
| CN 101505499 A | 12 August 2009 | WO 2009100660 A1 | 20 August 2009 |
| US 2012250644 A1 | 04 October 2012 | WO 2012138756 A1 | 11 October 2012 |
| | | JP 2014512764 A | 22 May 2014 |
| | | CN 103548406 A | 29 January 2014 |
| | | KR 20130139360 A | 20 December 2013 |
| | | EP 2695463 A1 | 12 February 2014 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201410425845